(19) Europäisches Patentamt
European Patent Office
Office européen des brevets

(11) **EP 4 546 660 A1**

(12) **EUROPEAN PATENT APPLICATION**

(43) Date of publication:
**30.04.2025 Bulletin 2025/18**

(21) Application number: **24209021.5**

(22) Date of filing: **25.10.2024**

(51) International Patent Classification (IPC):
*H04B 7/06* (2006.01)   *H04L 5/00* (2006.01)
*H04W 72/23* (2023.01)

(52) Cooperative Patent Classification (CPC):
**H04B 7/06968;** H04L 5/0026; H04W 72/23

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 US 202363546087 P**

(71) Applicant: **Comcast Cable Communications LLC
Philadelphia, Pennsylvania 19103 (US)**

(72) Inventors:
• **CIRIK, Ali Cagatay
Philadelphia, 19103 (US)**

• JEON, Hyoungsuk
Philadelphia, 19103 (US)
• DINAN, Esmael Hejazi
Philadelphia, 19103 (US)
• PRASAD, Gautham
Philadelphia, 19103 (US)
• TSAI, Hsin-Hsi
Philadelphia, 19103 (US)
• KEATING, Ryan
Philadelphia, 19103 (US)

(74) Representative: **V.O.
P.O. Box 87930
2508 DH Den Haag (NL)**

(54) **BEAM MANAGEMENT IN MULTI-CELL SCHEDULING**

(57)   A wireless device and a base station may use configuration parameters, comprising transmission configuration indicator states, to communicate. A transmission configuration indicator codepoint, for application of one or more transmission configuration indicator states of each cell among a plurality of cells, may be indicated dynamically, for example, by downlink control information. A default rule may be applied to determine a transmission configuration state, among the one or more indicated transmission configuration states of a cell, to use for communication A first (or last) listed transmission configuration state, a transmission configuration state having a lowest (or highest) index, and/or a transmission configuration indicator state indicated by a default parameter and/or a default procedure, among at least two transmission configuration states, for example, may be selected for use.

FIG. 18B

**Description**

CROSS-REFERENCE TO RELATED APPLICATIONS

This application claims the benefit of U.S. Provisional Application No. 63/546,087 filed on October 27, 2023. The above-referenced application is hereby incorporated by reference in its entirety.

BACKGROUND

A wireless device communicates with a base station. The wireless device receives configuration parameters for communicating via a cell. Transmission configuration indicator states indicated in the configuration parameters are used to indicate spatial filters for reception.

The following summary presents a simplified summary of certain features. The summary is not an extensive overview and is not intended to identify key or critical elements.

SUMMARY

Transmission configuration states a wireless device receives may correspond to one or more beams and/or spatial filters to be used for reception/transmission. A transmission configuration indicator codepoint may be indicated dynamically, such as by downlink control information, for application of one or more transmission configuration indicator states for each cell among a plurality of cells. The transmission configuration indicator codepoint may indicate more than one transmission configuration indicator state for a cell in at least some examples. To avoid uncertainty between the wireless device and the base station as to which transmission configuration indicator state, among a plurality of transmission configuration indicator states indicated by a codepoint, is to be used, a default rule may be applied to determine a transmission configuration indicator state. For example, a transmission configuration indicator state, among at least two transmission configuration indicator states that may be selected, may correspond to a first (or last) listed transmission configuration indicator state, a transmission configuration indicator state having a lowest (or highest) index, and/or a transmission configuration indicator state indicated by a default parameter and/or a default procedure.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example groups of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of cell scheduling.

FIG. 18A and 18B show examples of cell scheduling.

FIGS. 19A and 19B show examples of an activation command.

FIGS. 20A and 20B show examples of cell scheduling.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

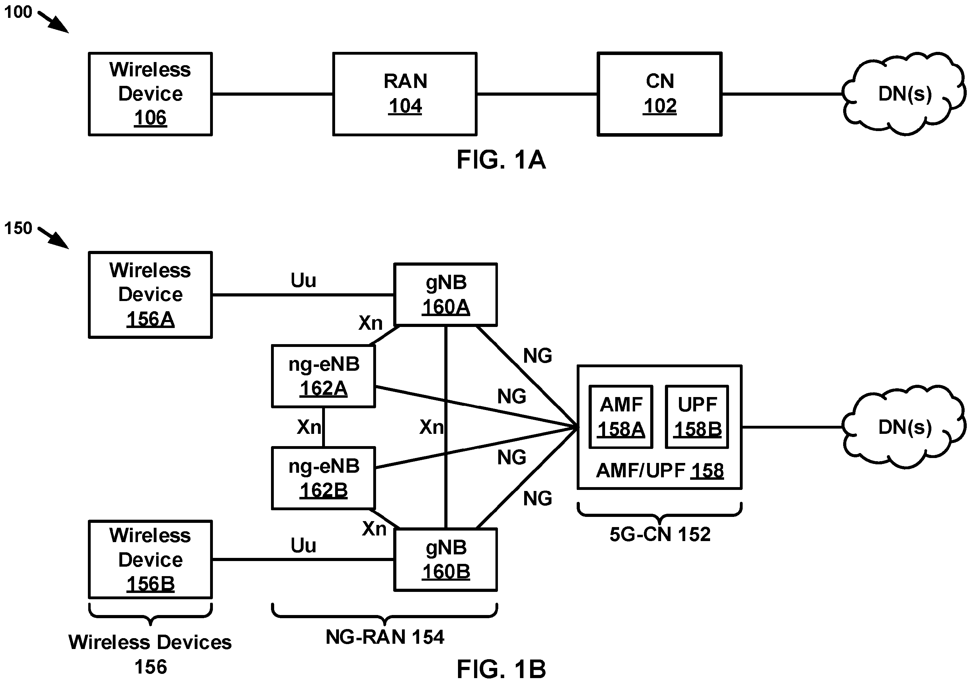

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMFIUPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station.

The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMFIUPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

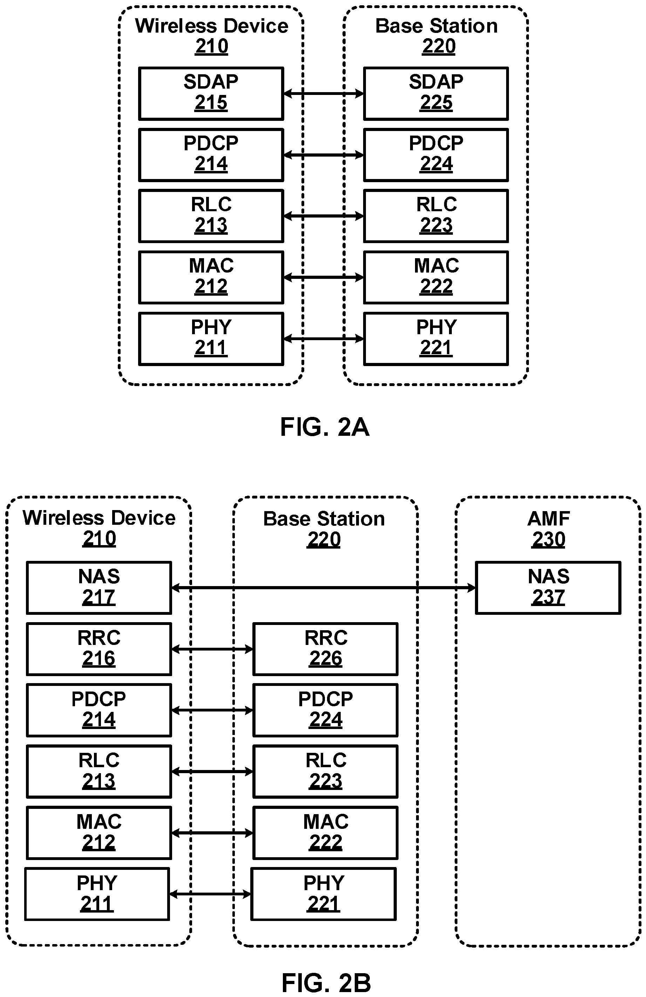

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

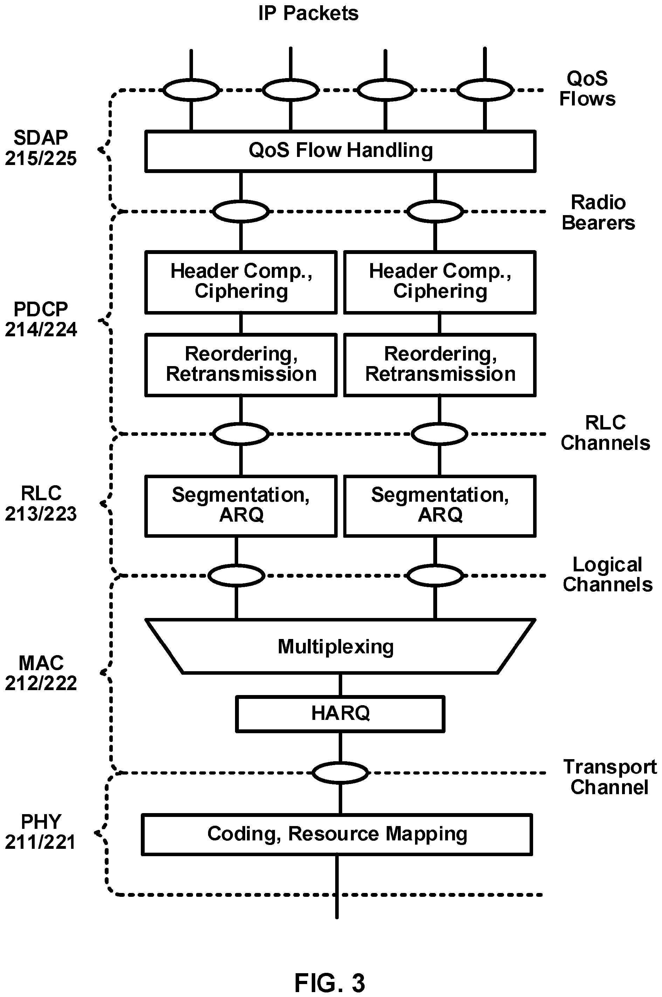

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

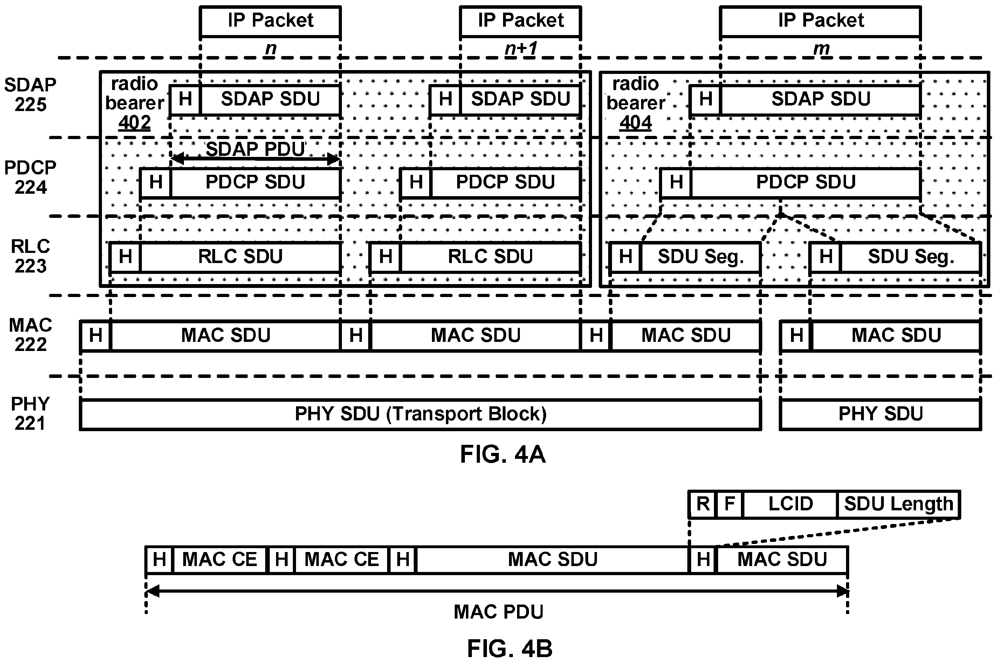

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

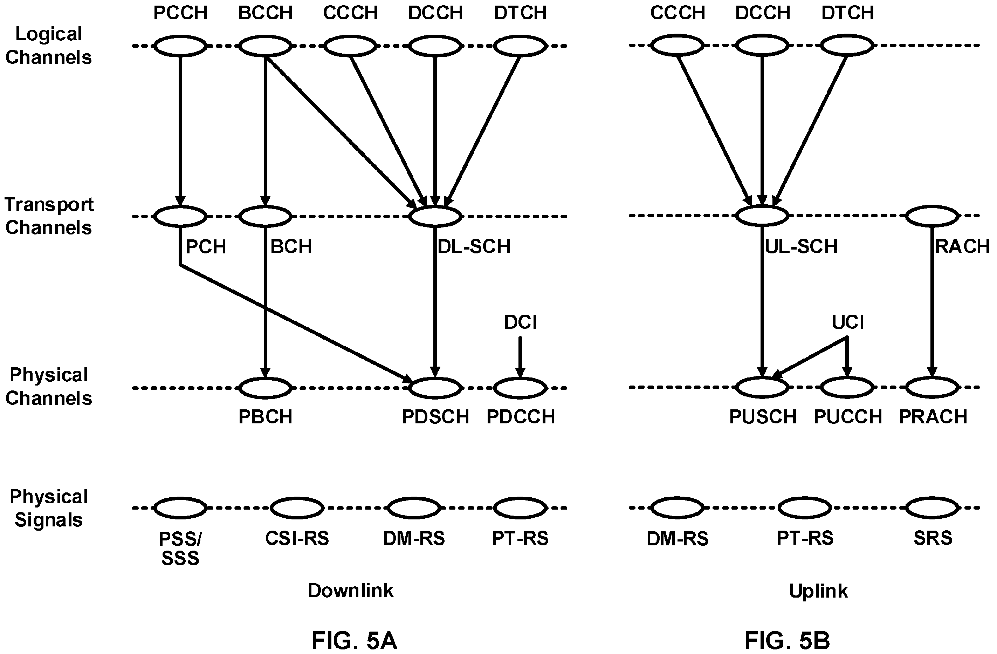

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

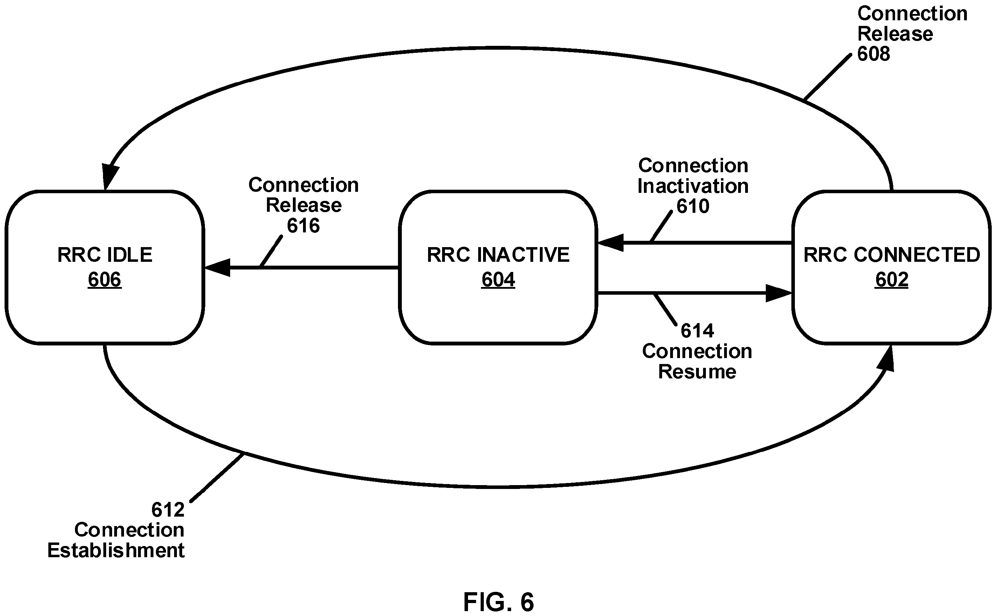

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g., instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

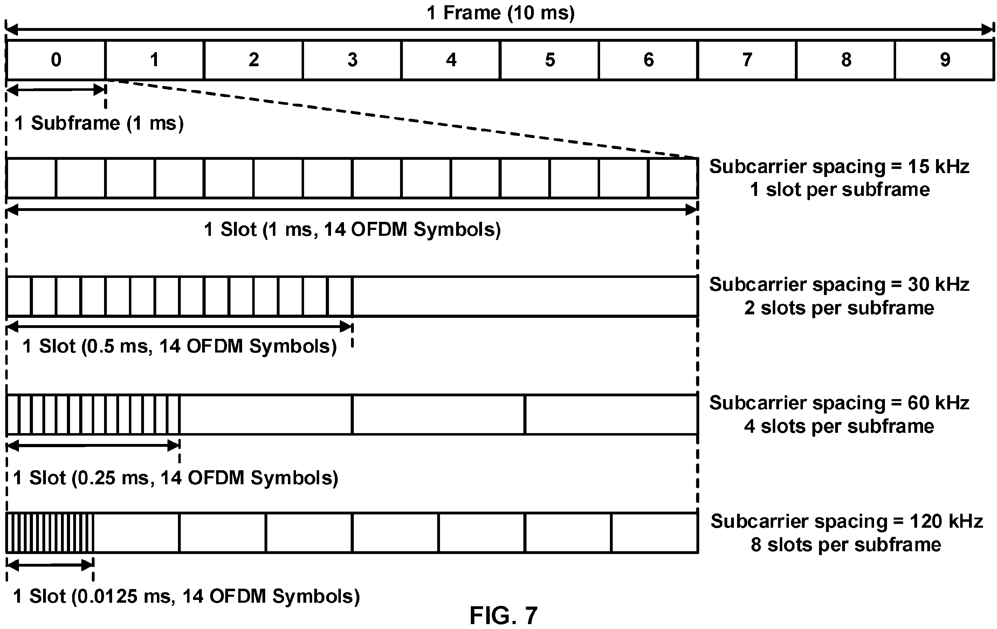

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

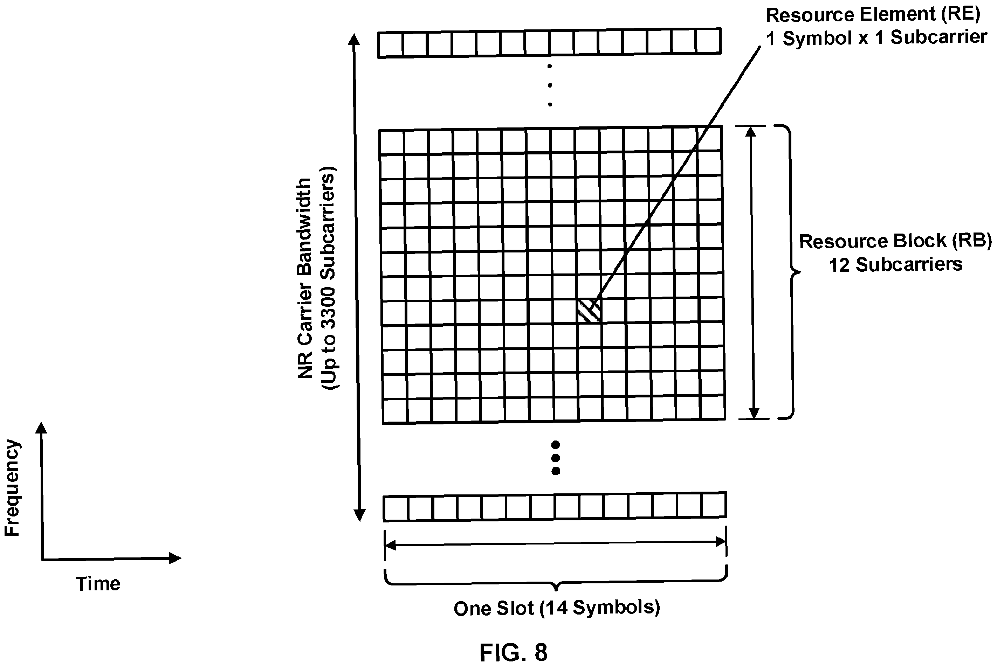

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e. g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access

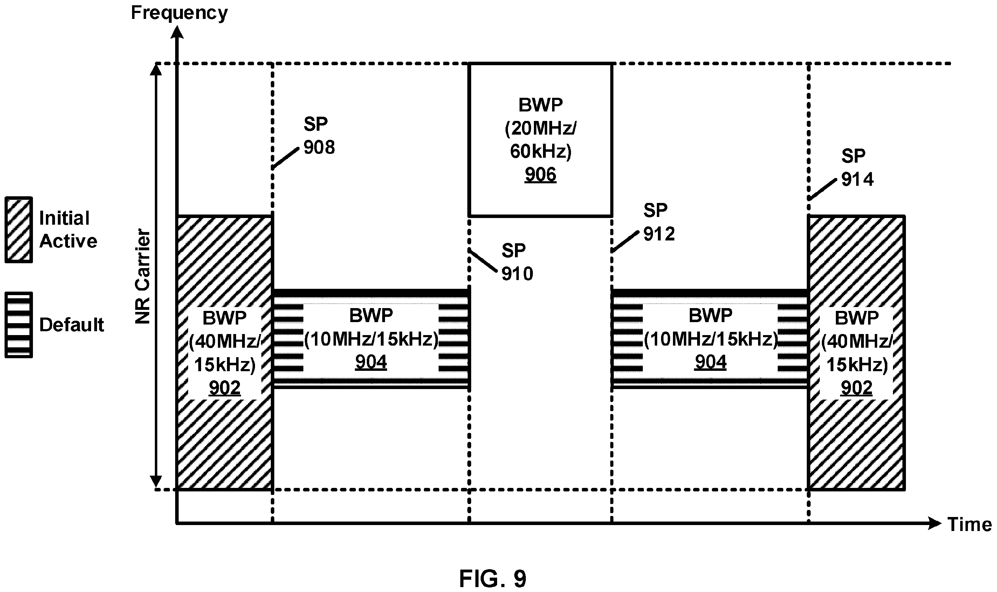

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

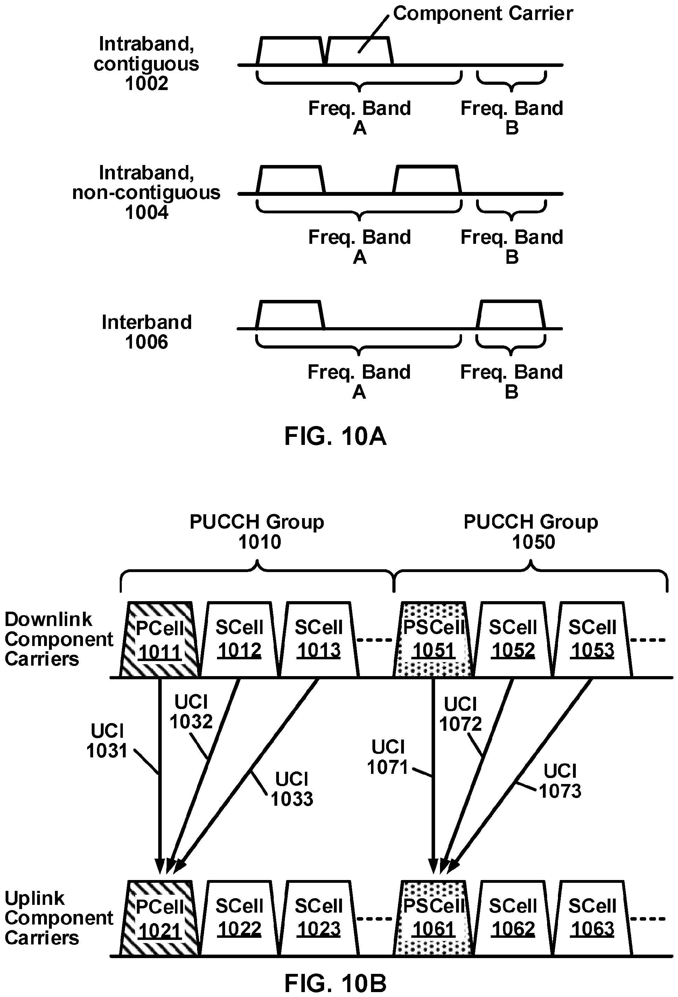

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (orPSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

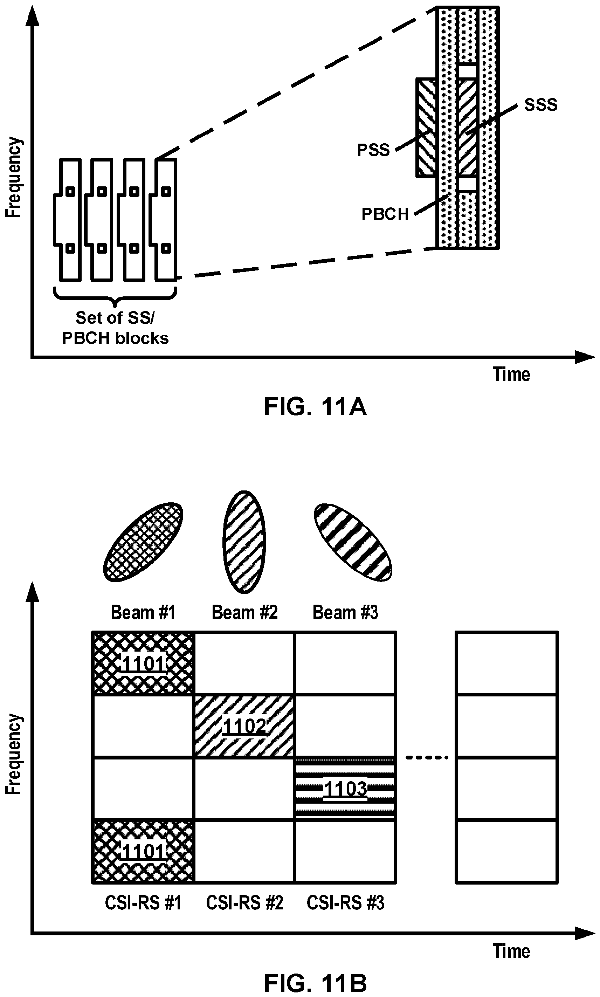

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g., a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

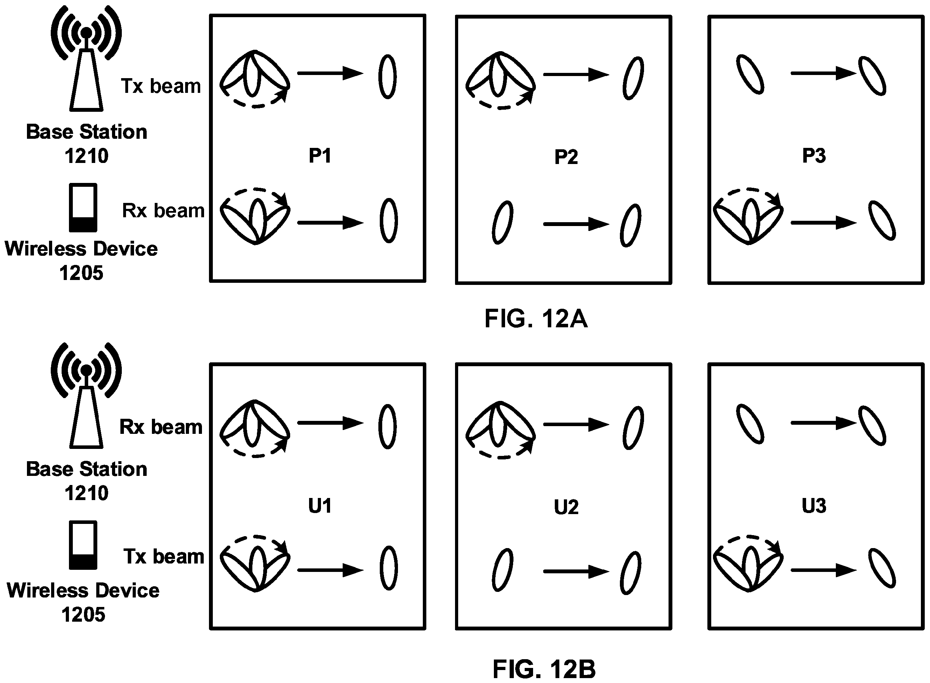

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

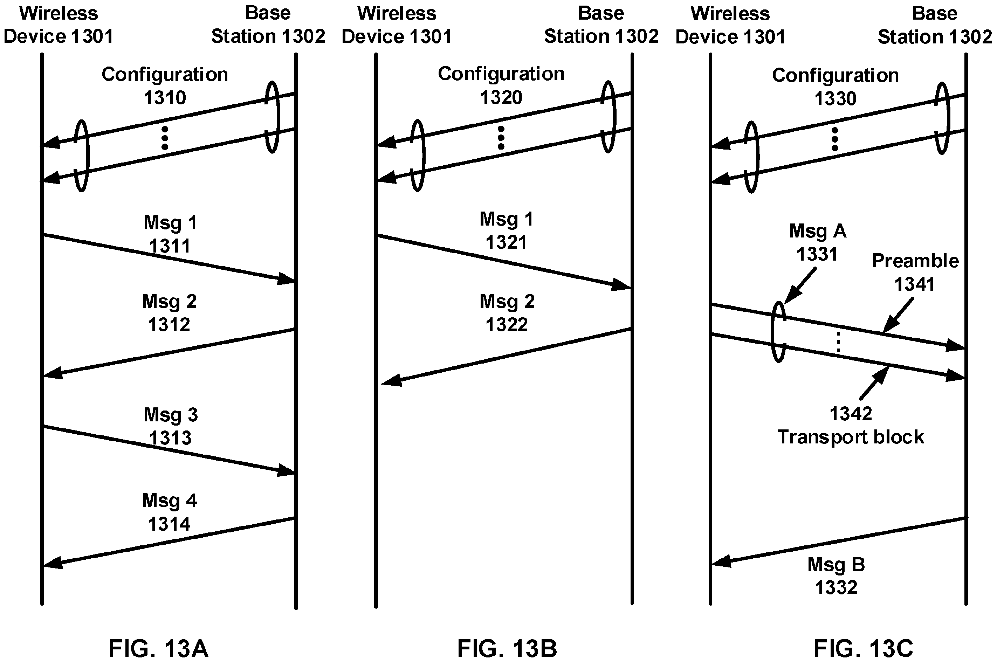

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e. g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e. g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

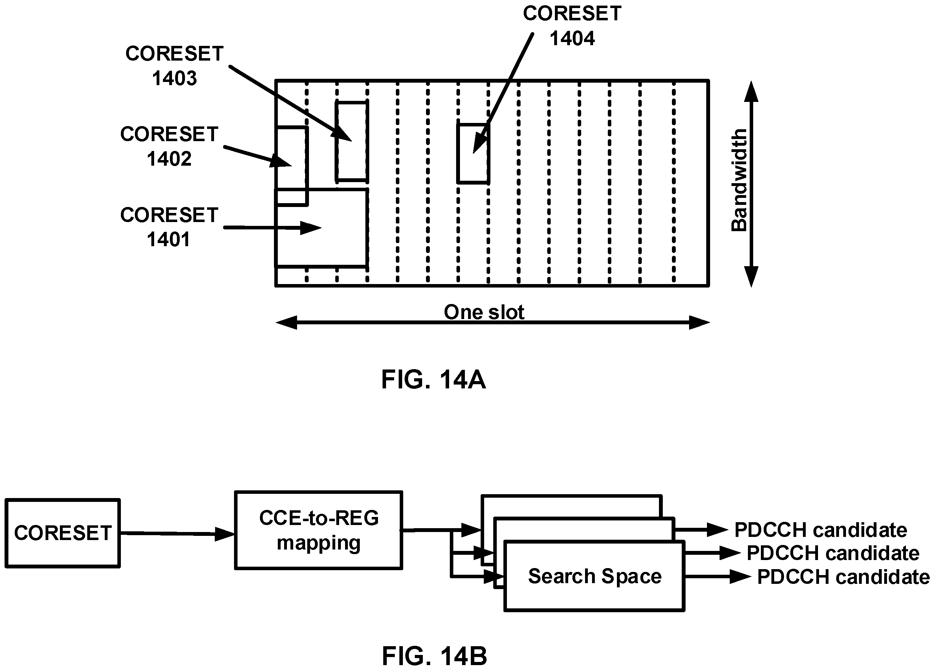

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g., a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

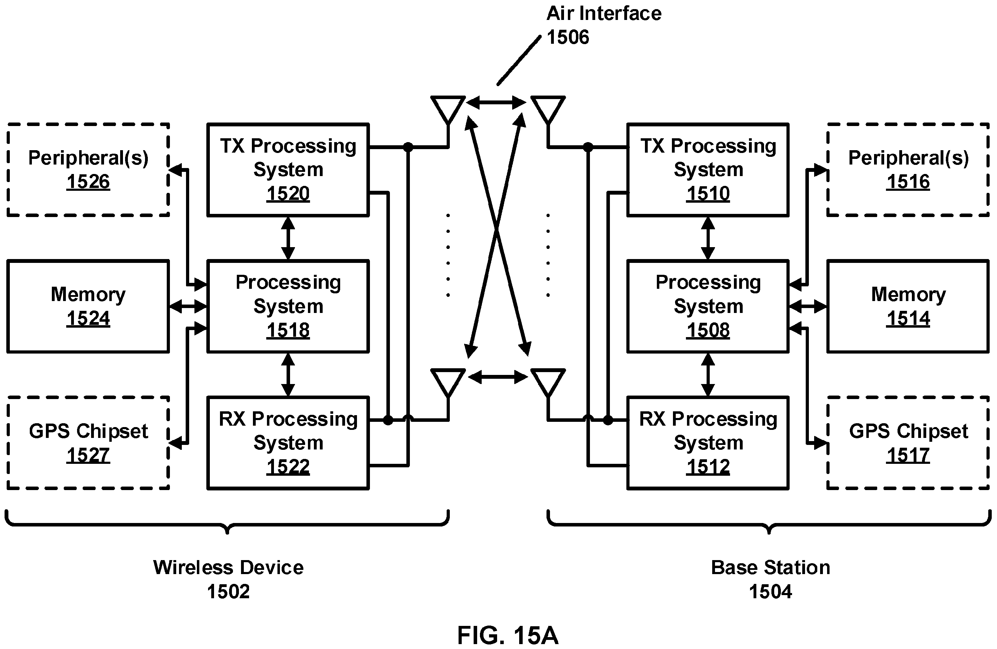

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

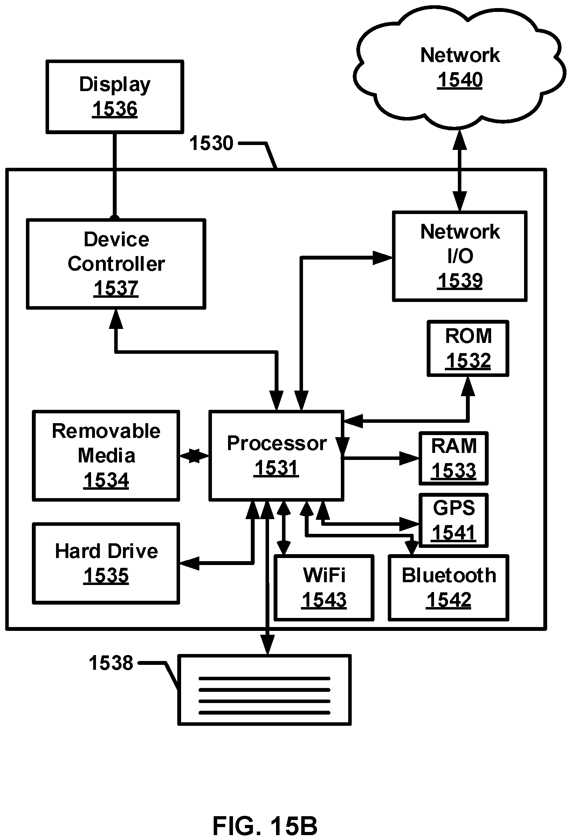

FIG. 15B shows example elements of a computing device that may be used to implement any of the various devices described herein, including, for example, the base station 160A, 160B, 162A, 162B, 220, 1210, 1302, and/or 1704, , the wireless device 106, 156A, 156B, 210, 1205, 1301, and/or 1702, the NCR node 180, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

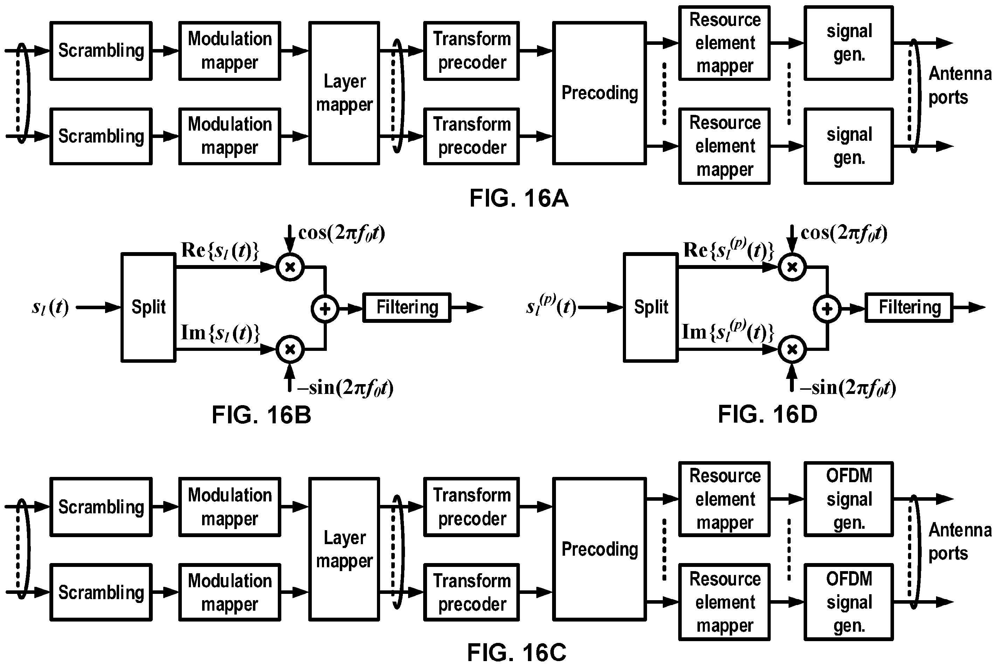

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g., RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g., as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may receive (e.g., from a base station) one or more messages (e.g., RRC message(s)) comprising one or more configuration parameters. The wireless device may receive, via a first cell, DCI (e.g., DCI format 1_3, DCI format 0_3) that may schedule one or more PDSCH receptions or one or more PUSCH transmissions via one or more cells. The DCI may schedule each PDSCH reception of the one or more PDSCH receptions, for example, via a respective cell of the one or more cells. The DCI may schedule each PUSCH transmission of the one or more PUSCH transmissions, for example, via a respective cell of the one or more cells. The one or more cells may be one or more scheduled cells. A first cell may be a scheduling cell. DCI may schedule a PDSCH reception of the one or more PDSCH receptions or a PUSCH transmission of the one or more PUSCH transmissions via a cell of the one or more cells.

A cell may be served by a multiple TRPs comprising a first TRP and a second TRP. The cell may be configured, by RRC message(s), with a multi-TRP operation comprising the first TRP and the second TRP.

One or more configuration parameters may not comprise a higher layer parameter *dl-OrJointTCI-StateList*. DCI may comprise a TCI field. The one or more configuration parameters may comprise a higher layer parameter *dl-OrJointTCI-StateList*. The wireless device may receive second DCI (e.g., DCI format 1_1/1_2) that comprises a TCI field. The second DCI may be different from the DCI.

A TCI field may indicate a TCI codepoint for a cell. The TCI codepoint may indicate at least two TCI states (e.g., at least two joint/downlink/uplink TCI states). A wireless device may be indicated with the at least two TCI states for the cell. The at least two TCI states may comprise a first TCI state for (e.g., associated with) a first TRP and a second TCI state for (e.g., associated with) a second TRP.

DCI scheduling one or more cells may not schedule a PDSCH reception via a cell for, via, and/or from multiple TRPs or a PUSCH transmission via the cell for, via, and/or to the multiple TRPs. The DCI scheduling the one or more cells may schedule the PDSCH reception via the cell for, via, and/or from a single TRP of the multiple TRPs or the PUSCH transmission via the cell for, via, and/or to a single TRP of the multiple TRPs. A wireless device may not apply at least to TCI states to the PDSCH reception or to the PUSCH transmission via the cell, for example, if the TCI codepoint of the cell indicates the at least two TCI states, in the current implementation of existing technologies.

A wireless device may not receive a PDSCH reception successfully, for example, if a base station and the wireless device are not aligned on a TCI state used for the PDSCH reception. This may increase an error rate and reduce data rate which may lead to increased latency.

A base station may not receive a PUSCH transmission successfully, for example, if the base station and a wireless device are not aligned on a TCI state used for the PUSCH transmission. This may increase the error rate and reduce data rate which may lead to increased latency.

PDSCH reception or a PUSCH transmission via a cell may be enhanced, for example, if a wireless device receives DCI scheduling one or more cells comprising the cell as described herein. The wireless device may apply a TCI state (e.g., a default TCI state) of at least two TCI states to the PDSCH reception or to the PUSCH transmission. The TCI state may be, for example, a first TCI state, among the at least two TCI states, that occur first in a set (e.g., list) of the at least two TCI states, and/or that occur in a lower octet in an activation command indicating and/or activating a TCI codepoint. The TCI state may be, for example, a first TCI state, among the at least two TCI states, that occur first in the TCI codepoint indicating the at least two TCI states.

A TCI state may be identified with a lowest TCI state index and/or identifier, for example, among at least two TCI state indexes and/or identifiers of at least two TCI states. Each TCI state index of the at least two TCI state indexes and/or identifiers may indicate and/or identify a respective TCI state of the at least two TCI states.

One or more configuration parameters may comprise a parameter (e.g., *applyIndicatedTCIState, applyIndicatedTCIState-DCI-0-3, applyIndicatedTCIState-DCI-1-3)* with a value (e.g., 0, 1, 'first', 'second') that may indicate which TCI state of at least two TCI states to apply to the PDSCH reception or to the PUSCH transmission. The wireless device may apply a first TCI state of the at least two TCI states to the PDSCH reception or to the PUSCH transmission, for example, if the parameter is set to a first value (e.g., 0, 'first'). The wireless device may apply a second TCI state of the at least two TCI states to the PDSCH reception or to the PUSCH transmission, for example, if the parameter is set to a second value (e.g., 1, 'second'). An error rate and increased data rate leading to reduced latency may be reduced as described herein.

A wireless device may be configured with a list of TCI states (e.g., *TCI-State*) by (e.g., within) a higher layer parameter *PDSCH-Config* to decode PDSCH according to a detected PDCCH with DCI intended for the wireless device and a given cell (e.g., a given serving cell, a given non-serving/candidate/target cell, etc.). A number of TCI states in a list may depend on a wireless device capability parameter *maxNumberConfiguredTCIstatesPerCC.* Each TCI state (e.g., *TCI-State*) may comprise (e.g., contain, include, indicate, and/or have) respective parameters for configuring a quasi co-location relationship between one or two downlink reference signals and DM-RS port(s) of a PDSCH, a DM-RS port of a PDCCH, or CSI-RS port(s) of a CSI-RS resource. The quasi co-location relationship may be configured by a higher layer parameter *qcl-Type1* for a first downlink reference signal of one or more downlink reference signals. The quasi co-location relationship may be configured by a higher layer parameter *qcl-Type2* for a second downlink reference signal of the one or more downlink reference signals. QCL types of the two downlink reference signals may not be the same, regardless of whether the first downlink reference signal and the second downlink reference signal may be the same or different, for example, if two downlink reference signals comprising a first downlink reference signal and a second downlink reference signal are indicated by a TCI state. A quasi co-location type corresponding to a downlink reference signal of the one or more downlink reference signals may be given by a higher layer parameter *qcl-Type* in a higher layer parameter *QCL-Info* and may take one of the following values: 'typeA': {Doppler shift, Doppler spread, average delay, delay spread}; 'typeB': {Doppler shift, Doppler spread}; 'typeC': {Doppler shift, average delay}; or 'typeD': {Spatial Rx parameter}.

A wireless device may be configured with a list of TCI states (e.g., up to 128 TCI-State configurations) by (e.g., within) a higher layer parameter *dl-OrJointTCI-StateList* in *PDSCH-Config.* A TCI state in the list of TCI states may indicate (e.g., provide) a reference signal for a quasi co-location for i) DM-RS of a PDSCH, ii) DM-RS of a PDCCH in a BWP/cell, and/or iii) a CSI-RS. A TCI state in the list of TCI states may indicate (e.g., provide) a reference signals for determining uplink transmission spatial filter for i) a dynamic-grant PUSCH, ii) a configured-grant based PUSCH, iii) a PUCCH resource in a BWP/cell, and/or, iv) an SRS.

A wireless device may receive an activation command (e.g., MAC-CE, DCI, Unified TCI States Activation/-Deactivation MAC-CE, Enhanced Unified TCI States Activation/Deactivation MAC-CE, The Enhanced Unified TCI States Activation/Deactivation MAC-CE for Joint TCI State Mode, Enhanced Unified TCI States Activation/Deactivation MAC-CE for Separate TCI State Mode, etc.) that may be used to map up to a number of TCI states and/or pairs of TCI states (e.g., up to 8 TCI states and/or pairs of TCI states), with one TCI state for downlink channels and/or signals and/or one TCI state for uplink channels and/or signals, to codepoint(s) of a DCI field 'Transmission Configuration Indication' for one cell or for a set of cells (e.g., downlink BWPs) and/or up to a number of sets of TCI states (e.g., up to 8 sets of TCI states). Each set of the number of sets may be comprised of up to a number of TCI state(s) for downlink and uplink signals and/or channels (e.g., up to two TCI state(s)), or up to a number of TCI state(s) for downlink channels and/or signals and up to a number of TCI state(s) (e.g., up to two TCI state(s)) for uplink channels and/or signals to codepoint(s) of a DCI field *'Transmission Configuration Indication'* for one cell or for a set of cells (e.g., downlink BWPs), and if applicable, for one cell or for a set of cells (e.g., uplink BWPs). A set of TCI state IDs (e.g., a same set of TCI state IDs) may be applied by the wireless device for and/or to all downlink and/or uplink BWPs in the indicated cells (e.g., an applicable list of cells), for example, if a set of TCI state IDs are activated, by the activation command, for a set of cells (e.g., downlink BWPs) and if applicable, for a set of cells (e.g., uplink BWPs), where the applicable list of cells may be determined, by the wireless device, by an indicated cell in the activation command. The wireless device may apply the indicated *TCI-State(s)* and/or *TCI-UL-State(s)* to one cell or to a set of cells (e.g., downlink BWPs), and if applicable, to one cell or to a set of cells (e.g., uplink BWPs), for example, if the activation command maps *TCI-State(s)* and/or *TCI-UL-State(s)* to only one (e.g., a single) TCI codepoint, and if the indicated mapping for the one single TCI codepoint is applied by the wireless device.

A wireless device, configured with *dl-OrJointTCI-StateList* by one or more configuration parameters (e.g., RRC messages/parameters) and activated with *TCI-State* by the activation command, may receive a DCI format (e.g., DCI format 1_1/1_2) indicating (e.g., providing, etc.) TCI state(s) (e.g., *TCI-State(s)* and/or *TCI-UL-State(s)*) for a cell or all cells in the same cell list configured by a simultaneous TCI update parameter (e.g., *simultaneousU-TCI-UpdateList1, simultaneousU-TCI-UpdateList2, simultaneousU-TCI-UpdateList3, simultaneousU-TCI-UpdateList4),* for example, if *tci-PresentInDCI* is set as 'enabled' or *tci-PresentDCI-1-2* is configured for a CORESET. The simultaneous TCI update parameter may be a higher layer parameter (e.g., RRC parameter).

Also, or alternatively, a wireless device, configured with *ul-TCI-StateList* by one or more configuration parameters (e.g., RRC messages/parameters) and activated with *TCI-UL-State* by the activation command, may receive a DCI format (e.g., DCI format 1_1/1_2) indicating (e.g., providing, etc.) TCI state(s) (e.g., *TCI-State(s)* and/or *TCI-UL-State(s)*) for a cell or all cells in the same cell list configured by a simultaneous TCI update parameter (e.g., *simultaneousU-TCI-UpdateList1, simultaneousU-TCI-UpdateList2, simultaneousU-TCI-UpdateList3, simultaneousU-TCI-UpdateList4).* The DCI format may be with or without a downlink assignment, for example, if *tci-PresentInDCI* is set as 'enabled' or *tci-PresentDCI-1-2* is configured for a CORESET. The simultaneous TCI update parameter may be a higher layer parameter (e.g., RRC parameter).

Indicated *TCI-State(s)* may be applied, by a wireless device, starting from a first (e.g., starting, earliest, initial, etc.) slot that may be at least a number of symbols (e.g., *beamAppTime* symbols) after a last symbol of an uplink transmission, for example, if a wireless device configured with *dl-OrJointTCI-StateList* by one or more configuration parameters (e.g., RRC messages/parameters) sends (e.g., transmits) an uplink transmission (e.g., a PUCCH transmission, a PUSCH transmission) with a positive HARQ-ACK corresponding to a DCI format indicating an indicated TCI state(s) (e.g., *TCI-State(s)* and/or *TCI-UL-State(s)),* and if the indicated TCI State(s) is/are different from previously indicated TCI state(s). The first (e.g., starting, earliest, initial, etc.) slot and the number of symbols may be both determined, by the wireless device, based on an active BWP with the smallest subcarrier spacing among BWP(s) of cells applying the indicated TCI-State(s) that are active at the end of the uplink transmission carrying (e.g., with) the positive HARQ-ACK. A number of symbols may be indicated (e.g., provided, configured, etc.) to the wireless device by RRC messages (e.g., one or more configuration parameters).

A wireless device may receive an activation command (e.g., MAC-CE, DCI) that may be used to map up to 8 combinations of one or two TCI states to codepoint(s) of a DCI field *'Transmission Configuration Indication',* for example, if a wireless device supports two TCI states in a codepoint of a DCI field *'Transmission Configuration Indication'.* The wireless device may not expect to receive more than 8 TCI states in the activation command.

A wireless device may be configured by a higher layer parameter *cjtSchemePDSCH* and *dl-OrJointTCI-StateList,.* The wireless device may be indicated with two TCI states applied for a PDSCH reception and/or reports support for two joint TCI states for PDSCH-CJT:

A wireless device, configured by a higher layer parameter *cjtSchemePDSCH* and *dl-OrJointTCI-StateList* and indicated with two TCI states applied for a PDSCH reception and/or reports support for two joint TCI states for PDSCH-CJT, may act as if a PDSCH DM-RS port(s) of a PDSCH reception may be quasi co-located (QCL-ed) with downlink reference signals of both of two indicated TCI states with respect to QCL-TypeA, for example, if the wireless device is configured with a higher layer parameter *cjtSchemeA.* The wireless device may act as if a PDSCH DM-RS port(s) of the PDSCH reception are quasi co-located (QCL-ed) with downlink reference signals of both of the two indicated TCI states with respect to QCL-TypeA except for QCL parameters {Doppler shift, Doppler spread} of a second indicated TCI state (e.g., second joint TCI state) of the two (indicated) TCI states, for example, if the wireless device is configured with a higher layer parameter *cjtSchemeB.*

An indicated TCI state may be specific to a *coresetPoolIndex* value (e.g., 0 or 1), for example, if a wireless device is configured with a higher layer parameter *dl-OrJointTCI-StateList* or a higher layer parameter *TCI-UL-State,* if the wireless device is configured with (e.g., by) a higher layer parameter *PDCCH-Config* that contains two different values (e.g., 0 and 1) of *coresetPoolIndex* in *ControlResourceSet,* and if the indicated TCI state is indicated by a DCI field 'Transmission Configuration Indication' in a DCI format 1_1/1_2 associated with the *coresetPoolIndex* value. The DCI format 1_1/1_2 may be associated with the *coresetPoolIndex* value, for example, if the DCI format 1_0/1_1/1_2 is received and/or detected, by the wireless device, in a CORESET associated with the *coresetPoolIndex* value.

A wireless device may apply a first indicated TCI state of two indicated TCI states to a scheduled and/or activated PDSCH reception, for example, if the wireless device is configured with a higher layer parameter *dl-OrJointTCI-StateList* and has two indicated TCI states, if the wireless device does not report its capability of two default beams in frequency range 2, and if an offset between the reception of a scheduling and/or activation DCI format 1_0/1_1/1_2 and a scheduled and/or activated PDSCH reception is less than a threshold (e.g., *timeDurationForQCL*) in frequency range 2.

A wireless device may be configured with a higher layer parameter *dl-OrJointTCI-StateList.* The wireless device may have two indicated TCI states (e.g., two indicated joint/DL TCI states) comprising a first TCI state and a second TCI state,

Regardless of a time and/or scheduling offset between reception of DCI format 1_0/1_1/1_2 and a PDSCH reception scheduled and/or activated by the DCI format 1_0/1_1/1_2, a wireless device, configured with a higher layer parameter *dl-OrJointTCI-StateList* and having two indicated TCI states (e.g., two indicated joint/DL TCI states) comprising a first TCI state and a second TCI state,

may be configured by a higher layer parameter *applyIndicatedTCIState* to if whether a first TCI state, a second TCI state, or both of two indicated TCI states may be applied to the PDSCH reception scheduled and/or activated by the DCI format 1_0, for example, if the wireless device is in frequency range 1 (FR1).

Regardless of a time and/or scheduling offset between reception of a DCI format 1_0/1_1/1_2 and a PDSCH reception scheduled and/or activated by the DCI format 1_0/1_1/1_2, the wireless device may be configured by a higher layer parameter *applyIndicatedTCIState* to indicate whether a first TCI state, a second TCI state, or both of two indicated TCI states may be applied to the PDSCH reception scheduled and/or activated by the DCI format 1_0, for example, if the wireless device reports a capability of two default beams in frequency range 2 (FR2).

Regardless of a time and/or scheduling offset between reception of a DCI format 1_0/1_1/1_2 and a PDSCH reception scheduled and/or activated by the DCI format 1_0/1_1/1_2, the wireless device may be configured by a higher layer parameter *applyIndicatedTCIState* to indicate whether a first TCI state, a second TCI state, or both of two indicated TCI states may be applied to the PDSCH reception scheduled and/or activated by the DCI format 1_0, for example, if the wireless device does not report a capability of two default beams in FR2 and if a time and/or scheduling offset between reception of a DCI format 1_0/1_1/1_2 and a PDSCH reception scheduled and/or activated by the DCI format 1_0/1_1/1_2 is equal to or larger (e.g., greater, more, etc.) than a threshold (e.g., *timeDurationForQCL)*.

A wireless device may be configured by a higher layer parameter *applyIndicatedTCIState* to indicate whether a first TCI state, a second TCI state, or both of a two indicated TCI states may be applied to the PDSCH reception scheduled and/or activated by the DCI format 1_0. The higher layer parameter *applyIndicatedTCIState* may be one of values = {'first', 'second', 'both'}. The wireless device may be configured with the higher layer parameter *applyIndicatedTCIState* with a value set to *'both',* for example, if the wireless device is configured with a higher layer parameter *cjtSchemePDSCH* and/or the wireless device reports support for two joint TCI states for PDSCH-CJT. The wireless device may be configured with the higher layer parameter *applyIndicatedTCIState* with a value set to *'both',* for example, if the wireless device is configured with a higher layer parameter *sfnSchemePdsch.* The wireless device may apply both of the two indicated TCI states to the PDSCH reception scheduled and/or activated by the DCI format 1_0 on a search space set other than Type0/0A/2 CSS set on/of a CORESET with index zero (e.g., CORESET#0), for example, if the value of the higher layer parameter *applyIndicatedTCIState* is set to *'both'*. The wireless device may receive the DCI format 1_0 via the search space set different from the Type0/0A/2 CSS set associated with the CORESET with index zero.

A first indicated TCI-state may be applied to PDSCH reception scheduled and/or activated by DCI format 1_0. The first indicated TCI-state may be applied to PDSCH reception scheduled and/or activated by DCI format 1_0, for example, if the wireless device is not configured with *applyIndicatedTCIState.*

A wireless device may determine, for the PDSCH reception, indicated TCI state(s) (e.g., indicated joint/DL TCI state(s)) among two indicated TCI states, for example, if the wireless device is configured with a higher layer parameter *tciSelection-PresentInDCI* and if the wireless device receives a DCI format 1_1/1_2 that schedules and/or activates a PDSCH reception via PDSCH transmission occasions(s), and if the DCI format 1_1/1_2 indicates codepoint "00" for a TCI selection field, the wireless device may apply the first TCI state of the two indicated TCI states to all PDSCH DM-RS port(s) of the PDSCH transmission occasions(s) of the PDSCH reception scheduled and/or activated by the DCI format 1_1/1_2.

Also, a wireless device may determine, for the PDSCH reception, indicated TCI state(s) (e.g., indicated joint/DL TCI state(s)) among two indicated TCI states, for example, if the wireless device is configured with a higher layer parameter *tciSelection-PresentInDCI* and if the wireless device receives a DCI format 1_1/1_2 that schedules and/or activates a PDSCH reception via PDSCH transmission occasions(s), and if the DCI format 1_1/1_2 indicates codepoint "01" for a TCI selection field, the wireless device may apply the second TCI state of the two indicated TCI states to all PDSCH DM-RS port(s) of the PDSCH transmission occasions(s) of the PDSCH reception scheduled and/or activated by the DCI format 1_1/1_2.

Also, a wireless device may determine, for the PDSCH reception, indicated TCI state(s) (e.g., indicated joint/DL TCI state(s)) among two indicated TCI states, for example, if the wireless device is configured with a higher layer parameter *tciSelection-PresentInDCI* and if the wireless device receives a DCI format 1_1/1_2 that schedules and/or activates a PDSCH reception via PDSCH transmission occasions(s), and if the DCI format 1_1/1_2 indicates codepoint "10" for a TCI selection field, the wireless device may apply both of the two indicated TCI states to the PDSCH reception scheduled and/or activated by the DCI format 1_1/1_2.

A wireless device may apply both of two indicated TCI states to a PDSCH reception scheduled and/or activated by DCI format 1_1/1_2, for example, if the wireless device is not configured with a higher layer parameter *tciSelection-PresentInDCI* and if the wireless device receives a DCI format 1_1/1_2 that schedules and/or activates a PDSCH reception. The wireless device may expect to be configured with a higher layer parameter *tciSelection-PresentInDCI,* for example, if the wireless device does not report and/or support a capability of using a default beam for SFN (e.g., *sfn-DefaultDL-BeamSetup)* for a DCI format, scheduling a PDSCH reception, without a TCI selection field.

A base station may transmit, to a wireless device, one or more configuration parameters (e.g., in RRC message(s)) comprising higher layer parameter *tciSelection-PresentInDCI,* for example, if the base station does not receive, from the wireless device, a report (e.g., a wireless device capability message) that may indicate support (e.g., capability) of using a default beam for SFN (e.g., *sfn-DefaultDL-BeamSetup)* for a DCI format, scheduling a PDSCH reception, without a TCI selection field. The base station may or may not transmit, to the wireless device, one or more configuration parameters (e.g., in RRC message(s)) comprising a higher layer parameter *tciSelection-PresentInDCI,* for example, if the base station receives, from the wireless device, a report (e.g., a UE capability message) indicating support (e.g., capability) of using a default beam for SFN (e.g., *sfn-DefaultDL-BeamSetup)* for a DCI format, scheduling a PDSCH reception, without a TCI selection field.

A higher layer parameter *applyIndicatedTCIState* that may indicate whether a first TCI state, a second TCI state, or both of two indicated TCI states may be applied to a PDSCH reception scheduled and/or activated by DCI format 1_0 may be indicated (e.g., provided, configured, etc.), to the wireless device, per downlink BWP.

A wireless device may be indicated (e.g., provided, configured, etc.), by a base station, with a higher layer parameter *dl-OrJointTCI-StateList* or a higher layer parameter *TCI-UL-State.* The wireless device may have two indicated TCI states (or two indicated uplink TCI states) comprising a first indicated TCI state and a second indicated TCI state.

A wireless device indicated (e.g., provided, configured, etc.), by a base station, with a higher layer parameter *dl-OrJointTCI-StateList* or a higher layer parameter *TCI-UL-State* and having two indicated TCI states (or two indicated uplink TCI states) comprising a first indicated TCI state and a second indicated TCI state may have PUSCH transmission scheduled and/or activated by DCI format 0_0 that may apply a first indicated TCI state to the PUSCH transmission. The wireless device may be configured, by a base station, with a PUSCH transmission corresponding to a Type 1 configured grant that may be expected to be configured with a higher layer parameter *applyIndicatedTCIState.*

The wireless device may apply a first indicated TCI state to a PUSCH transmission, for example, if a higher layer parameter *applyIndicatedTCIState* is set to 'first'. The wireless device may apply the first indicated TCI state to each PUSCH transmission occasion of the PUSCH transmission.

The wireless device may apply a second indicated TCI state to a PUSCH transmission, for example, if a higher layer parameter $applyIndicatedTCIState$ is set to 'second'. The wireless device may apply the second indicated TCI state to each PUSCH transmission occasion of the PUSCH transmission.

The wireless device may apply both of two indicated TCI states to a PUSCH transmission, for example, if a higher layer parameter *applyIndicatedTCIState* is set to 'both'. The wireless device may apply the first indicated TCI state to PUSCH transmission occasion(s) or PUSCH antenna port(s), of the PUSCH transmission, associated with a first SRS resource set for codebook or non-codebook transmission, for example, if the higher layer parameter *applyIndicatedTCIState* is set to 'both' (or if both of the two indicated TCI states are indicated to be applied for the PUSCH transmission). The wireless device may apply the second indicated TCI state to PUSCH transmission occasion(s) or PUSCH antenna port(s), of the PUSCH transmission, associated with a second SRS resource set for codebook or non-codebook transmission, for example, if the higher layer parameter *applyIndicatedTCIState* is set to 'both' (or if both of the two indicated TCI states are indicated to be applied for the PUSCH transmission).

A first indicated TCI state and a second indicated TCI state may be specific to a higher layer parameter *coresetPoolIndex* with value 0 and a higher layer parameter *coresetPoolIndex* with value 1, respectively, for example, if a wireless device is indicated (e.g., provided, configured, etc.), by a base station, by a higher layer parameter *PDCCH-Config* that comprises (e.g., contains) two different values of a higher layer parameter *coresetPoolIndex* in different *ControlResourceSets.* The higher layer parameter *applyIndicatedTCIState* may not be set to 'both' which may indicate that *both* of the two indicated TCI states may be applied for the PUSCH transmission, for example, if the wireless device is indicated (e.g., provided, configured, etc.), by the base station, by a higher layer parameter *PDCCH-Config* that comprises (e.g., contains) two different values of a higher layer parameter *coresetPoolIndex* in different *ControlResourceSets.*

A wireless device may be configured with a higher layer parameter *dl-OrJointTCI-StateList,* configured by a higher layer parameter *PDCCH-Config* that contains two different values of *coresetPoolIndex* in *ControlResourceSet.* The wireless device may not report its capability of default beam per *coresetPoolIndex* in frequency range 2.

A wireless device may apply an indicated joint and/or DL TCI state specific to a *coresetPoolIndex* value that may be equal to 0 to the scheduled and/or activated PDSCH reception, for example, if an offset between reception of a DCI format 1_0/1_1/1_2 in a CORESET associated with a *coresetPoolIndex* value equal to 0 and a PDSCH reception scheduled and/or activated by the DCI format 1_0/1_1/1_2 is less than a threshold (e.g., *timeDurationForQCL*) in frequency range 2, and if a wireless device is configured with a higher layer parameter *dl-OrJointTCI-StateList,* is configured by a higher layer parameter *PDCCH-Config* that contains two different values of *coresetPoolIndex* in *ControlResourceSet,* and if the wireless device does not report its capability of default beam per *coresetPoolIndex* in frequency range 2. A wireless device may not expect that an offset between reception of a DCI format 1_0/1_1/1_2 in a CORESET associated with a *coresetPoolIndex* value equal to 1 and a PDSCH reception scheduled and/or activated by the DCI format 1_0/1_1/1_2 may be less than the threshold (e.g., *timeDurationForQCL*) in frequency range 2.

A wireless device may be indicated (e.g., provided, configured, etc.) by a higher layer parameter *applyIndicatedTCIState* for an aperiodic CSI-RS resource set or an aperiodic CSI-RS resource in an aperiodic CSI-RS resource set to inform that the wireless device applies a first TCI state or a second TCI state to the aperiodic CSI-RS resource set or to the aperiodic CSI-RS resource in the aperiodic CSI-RS resource set, for example, if a wireless device is configured with a higher layer parameter *dl-OrJointTCI-StateList* and has two indicated TCI states (e.g., two indicated joint/DL TCI states) comprising a first TCI state and a second TCI state. The wireless device may be configured with a higher layer parameter *followUnifiedTCIState* for the aperiodic CSI-RS resource set for CSI or beam management (BM). A time and/or scheduling offset between the last symbol of a PDCCH carrying (e.g., with) a DCI and a first (e.g., starting, earliest, initial, etc.) symbol of the aperiodic CSI-RS resource in the aperiodic CSI-RS resource set triggered by the DCI may be equal to or larger (e.g., greater, more, etc.) than a threshold (e.g., *beamSwitchTiming*).

A first TCI state and a second TCI state may correspond to two indicated TCI states specific to a higher layer parameter *coresetPoolIndex* with value 0 and a higher layer parameter *coresetPoolIndex* with value 1, respectively, for example, if a wireless device is configured by a higher layer parameter *PDCCH-Config* that comprises (e.g., contains) two different values of a higher layer parameter *CORESETPoolIndex* in different CORESETS (e.g., *ControlResourceSets*).

A wireless device may be configured with a higher layer parameter *dl-OrJointTCI-StateList* and may have two indicated TCI states (e.g., two indicated joint/DL TCI states) comprising a first TCI state and a second TCI state, and a time and/or scheduling offset between a last symbol of a PDCCH carrying/with a DCI and a first (e.g., starting, earliest, initial, etc.) symbol of an aperiodic CSI-RS resource in an aperiodic CSI-RS resource set triggered by the DCI may be smaller than a threshold (e.g., *beamSwitchTiming*):

If a wireless device is configured with a higher layer parameter *dl-OrJointTCI-StateList* and is having two indicated TCI states (e.g., two indicated joint/DL TCI states) comprising a first TCI state and a second TCI state, and if a time and/or scheduling offset between the last symbol of a PDCCH carrying/with a DCI and a first (e.g., starting, earliest, initial, etc.) symbol of an aperiodic CSI-RS resource in an aperiodic CSI-RS resource set triggered by the DCI is smaller than a threshold (e.g., *beamSwitchTiming*):

A wireless device may apply a first TCI state or a second TCI state to an aperiodic CSI-RS via the aperiodic CSI-RS resource based on a higher layer parameter *applyIndicatedTCIState* indicated (e.g., provided, configured, etc.) to and/or for the aperiodic CSI-RS resource or to the aperiodic CSI-RS resource set comprising the aperiodic CSI-RS resource, for example, if there is no downlink signal in the same symbols as the aperiodic CSI-RS resource, if the wireless device is in frequency range 1 (FR1), or the wireless device reports a capability of two default beams in frequency range 2 (FR2), if the wireless device is configured with a higher layer parameter dl-OrJointTCI-StateList and is having two indicated TCI states (e.g., two indicated joint/DL TCI states) comprising a first TCI state and a second TCI state, and if a time and/or scheduling offset between the last symbol of a PDCCH carrying/with a DCI and a first (e.g., starting, earliest, initial, etc.) symbol of an aperiodic CSI-RS resource in an aperiodic CSI-RS resource set triggered by the DCI is smaller than a threshold (e.g., beamSwitchTiming).

Alternatively, the wireless device may apply the first TCI state to an aperiodic CSI-RS via the aperiodic CSI-RS resource, for example, if there is no downlink signal in the same symbols as the aperiodic CSI-RS resource, if the wireless device is not in frequency range 1 (FR1), or the wireless device does not report a capability of two default beams in frequency range 2 (FR2), if the wireless device is configured with a higher layer parameter *dl-OrJointTCI-StateList* and is having two indicated TCI states (e.g., two indicated joint/DL TCI states) comprising a first TCI state and a second TCI state, and if a time and/or scheduling offset between the last symbol of a PDCCH carrying/with a DCI and a first (e.g., starting, earliest, initial, etc.) symbol of an aperiodic CSI-RS resource in an aperiodic CSI-RS resource set triggered by the DCI is smaller than a threshold (e.g., *beamSwitchTiming*).

Alternatively, a wireless device may apply a QCL assumption (e.g., an indicated TCI state) of a downlink signal, for example, if receiving an aperiodic CSI-RS via the aperiodic CSI-RS resource, if there is a downlink signal with an indicated TCI state in the same symbols as the aperiodic CSI-RS resource, if a wireless device is configured with a higher layer parameter *dl-OrJointTCI-StateList* and is having two indicated TCI states (e.g., two indicated joint/DL TCI states) comprising a first TCI state and a second TCI state, and if a time and/or scheduling offset between the last symbol of a PDCCH carrying/with a DCI and a first (e.g., starting, earliest, initial, etc.) symbol of an aperiodic CSI-RS resource in an aperiodic CSI-RS resource set triggered by the DCI is smaller than a threshold (e.g., *beamSwitchTiming*).

. The downlink signal may refer to a PDSCH scheduled with an offset larger (e.g., greater, more, etc.) than or equal to a threshold *timeDurationForQCL,* a periodic CSI-RS, a semi-persistent CSI-RS, or an aperiodic CSI-RS scheduled with an offset larger (e.g., greater, more, etc.) than or equal to a threshold *beamSwitchTiming* reported by the wireless device. A wireless device may apply a first indicated joint and/or DL TCI state or a second indicated joint and/or DL TCI state to an aperiodic CSI-RS via the aperiodic CSI-RS resource according to the higher layer configuration *applyIndicatedTCIState* indicated (e.g., provided, configured, etc.) to the aperiodic CSI-RS resource or to the aperiodic CSI-RS resource set, for example, if there is a PDSCH applying two indicated joint and/or DL TCI states in the same symbols as the aperiodic CSI-RS resource.

A wireless device may apply a first TCI state or a second TCI state to an aperiodic CSI-RS via the aperiodic CSI-RS resource based on (or according to) a higher layer parameter *applyIndicatedTCIState* indicated (e.g., provided, configured, etc.) for and/or to the aperiodic CSI-RS resource or to the aperiodic CSI-RS resource set comprising the aperiodic CSI-RS resource, for example, if there is no downlink signal in the same symbols as the aperiodic CSI-RS resource, if the wireless device is in frequency range 1 (FR1), or the wireless device reports a capability of default beam per coreset pool index in frequency range 2 (FR2), and if a wireless device i) is configured with a higher layer parameter *dl-OrJointTCI-StateList,* ii) is configured by a higher layer parameter *PDCCH-Config* that comprises (e.g., contains) two different values of a higher layer parameter *CORESETPoolIndex* in different CORESETS (e.g., *ControlResourceSets),* iii) is having two indicated TCI states (e.g., two indicated joint and/or DL TCI states) comprising a first TCI state and a second TCI state, and if a time and/or scheduling offset between the last symbol of a PDCCH carrying (e.g., with) a DCI and a first (e.g., starting, earliest, initial, etc.) symbol of an aperiodic CSI-RS resource in an aperiodic CSI-RS resource set triggered by the DCI is smaller than a threshold (e.g., *be$\alpha$mSwitchTiming).*

Alternatively, a wireless device may apply the first TCI state associated with (or specific with or of) a higher layer parameter *coresetPoolIndex* with value 0 to an aperiodic CSI-RS via the aperiodic CSI-RS resource, for example, if there is no downlink signal in the same symbols as the aperiodic CSI-RS resource, if the wireless device is not in frequency range 1 (FR1), or the wireless device does not report a capability of default beam per coreset pool index in frequency range 2 (FR2), and if a wireless device i) is configured with a higher layer parameter *dl-OrJointTCI-StateList,* ii) is configured by a higher layer parameter *PDCCH-Config* that comprises (e.g., contains) two different values of a higher layer parameter *CORESETPoolIndex* in different CORESETS (e.g., *ControlResourceSets),* iii) is having two indicated TCI states (e.g., two indicated joint and/or DL TCI states) comprising a first TCI state and a second TCI state, and if a time and/or scheduling offset between the last symbol of a PDCCH carrying (e.g., with) a DCI and a first (e.g., starting, earliest, initial, etc.) symbol of an aperiodic CSI-RS resource in an aperiodic CSI-RS resource set triggered by the DCI is smaller than a threshold (e.g., *be$\alpha$mSwitchTiming).*

Alternatively, A wireless device may apply a QCL assumption (e.g., an indicated TCI state) of a downlink signal, for example, if receiving an aperiodic CSI-RS via the aperiodic CSI-RS resource if there is a downlink signal with an indicated TCI state in the same symbols as the aperiodic CSI-RS resource, and if a wireless device i) is configured with a higher layer parameter *dl-OrJointTCI-StateList,* ii) is configured by a higher layer parameter *PDCCH-Config* that comprises (e.g., contains) two different values of a higher layer parameter *CORESETPoolIndex* in different CORESETS (e.g., *ControlResourceSets),* iii) is having two indicated TCI states (e.g., two indicated joint and/or DL TCI states) comprising a first TCI state and a second TCI state, and if a time and/or scheduling offset between the last symbol of a PDCCH carrying (e.g., with) a DCI and a first (e.g., starting, earliest, initial, etc.) symbol of an aperiodic CSI-RS resource in an aperiodic CSI-RS resource set triggered by the DCI is smaller than a threshold (e.g., *be$\alpha$mSwitchTiming).* The downlink signal may refer to a PDSCH scheduled with an offset larger (e.g., greater, more, etc.) than or equal to a threshold *timeDurationForQCL,* a periodic CSI-RS, a semi-persistent CSI-RS, or an aperiodic CSI-RS scheduled with an offset larger (e.g., greater, more, etc.) than or equal to a threshold *be$\alpha$mSwitchTiming* reported by the wireless device.

A wireless device may act as if a DM-RS antenna port for PDCCH receptions in a CORESET and a DM-RS antenna port for PDSCH receptions scheduled by DCI formats provided by the PDCCH receptions in the CORESET may be quasi co-located with reference signal(s) indicated (e.g., provided, configured, etc.) by the indicated TCI state, for example, for a CORESET with index 0, and if a wireless device is indicated (e.g., provided, configured, etc.) with a TCI state and indicated (e.g., provided, configured, etc.) with a higher layer parameter *follow UnifiedTCI-State* for the CORESET.

A wireless device may act as if a DM-RS antenna port for PDCCH receptions in the CORESET may be quasi co-located with reference signal(s) indicated (e.g., provided, configured, etc.) by the first TCI state, for example, for a CORESET with index 0, if the wireless device is indicated (e.g., provided, configured, etc.) with a higher layer parameter *dl-OrJointTCI-StateList* and is indicated a first TCI state and a second TCI state, and indicated (e.g., provided, configured, etc.) with a higher layer parameter *apply-IndicatedTCIState* for the CORESET, and if the higher layer parameter *apply-IndicatedTCIState* = 'first'.

A wireless device may act as if a DM-RS antenna port for PDCCH receptions in the CORESET may be quasi co-located with reference signal(s) indicated (e.g., provided, configured, etc.) by the second TCI state, for example, for a CORESET with index 0, if the wireless device is indicated (e.g., provided, configured, etc.) with a higher layer parameter *dl-OrJointTCI-StateList* and is indicated a first TCI state and a second TCI state, and indicated (e.g., provided, configured, etc.) with a higher layer parameter *apply-IndicatedTCIState* for the CORESET, and if the higher layer parameter *apply-IndicatedTCIState* = 'second'.

A wireless device may act as if a DM-RS antenna port for PDCCH receptions in the CORESET may be quasi co-located with reference signals indicated (e.g., provided, configured, etc.) by the first TCI state and the second TCI state, for example, for a CORESET with index 0, if the wireless device is indicated (e.g., provided, configured, etc.) with a higher layer parameter *dl-OrJointTCI-StateList* and is indicated a first TCI state and a second TCI state, and indicated (e.g., provided, configured, etc.) with a higher layer parameter *apply-IndicatedTCIState* for the CORESET, and if the higher layer parameter *apply-IndicatedTCIState* = 'both'.

A wireless device may act as if a DM-RS antenna port for PDCCH receptions in the CORESET may be quasi co-located with reference signal(s) indicated (e.g., provided, configured, etc.) by a TCI state that may be indicated by a MAC CE activation command for the CORESET, if any. Alternatively, a wireless device may act as if a SS/PBCH block the wireless device identified during a most recent random access procedure may not be initiated by a PDCCH order that triggers a contention-free random access procedure, for example, if no MAC CE activation command indicating a TCI state for the CORESET is received after the most recent random access procedure, or a SS/PBCH block the wireless device identified during a most recent configured grant PUSCH transmission for a small data transmission (SDT).

A wireless device may act as if a DM-RS antenna port for PDCCH receptions in the CORESET may be quasi co-located with reference signal(s) indicated (e.g., provided, configured, etc.) by the first TCI state, for example, if the higher layer parameter *apply-IndicatedTCIState* = 'first', if the CORESET is associated only with USS sets and/or Type3-PDCCH CSS sets, and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna port for PDCCH receptions in the CORESET may be quasi co-located with reference signal(s) indicated (e.g., provided, configured, etc.) by a second TCI state, for example, if the higher layer parameter *apply-IndicatedTCIState* = 'second', if the CORESET is associated only with USS sets and/or Type3-PDCCH CSS sets, and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna port for PDCCH receptions in the CORESET may be quasi co-located with reference signals indicated (e.g., provided, configured, etc.) by a first TCI state and a second TCI state, for example, if the higher layer parameter *apply-IndicatedTCIState* = 'both', if the CORESET is associated only with USS sets and/or Type3-PDCCH CSS sets, and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna port for PDCCH receptions in the CORESET may be quasi co-located with reference signal(s) indicated (e.g., provided, configured, etc.) by the first TCI state, for example, if the higher layer parameter *apply-IndicatedTCIState* = 'first', if the CORESET is associated at least with CSS sets other than Type3-PDCCH CSS sets, and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna port for PDCCH receptions in the CORESET may be quasi co-located with reference signal(s) indicated (e.g., provided, configured, etc.) by the second TCI state, for example, if the higher layer parameter *apply-IndicatedTCIState* = 'second', if the CORESET is associated at least with CSS sets other than Type3-PDCCH CSS sets, and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna port for PDCCH receptions in the CORESET may be quasi co-located with reference signals indicated (e.g., provided, configured, etc.) by the first TCI state and the second TCI state, for example, if the higher layer parameter *apply-IndicatedTCIState* = 'both', if the CORESET is associated at least with CSS sets other than Type3-PDCCH CSS sets, and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna port for PDCCH receptions in the CORESET may be quasi co-located with reference signal(s) indicated (e.g., provided, configured, etc.) by a TCI state indicated by a MAC CE activation command for the CORESET, for example, if the higher layer parameter *apply-IndicatedTCIState* = 'none', if the CORESET is associated at least with CSS sets other than Type3-PDCCH CSS sets and if a wireless device is indicated (e.g., provided, configured, etc.) with a higher layer parameter *dl-OrJointTCI-StateList* and is indicated a first TCI state and a second TCI state, and is indicated (e.g., provided, configured, etc.) with a higher layer parameter *apply-IndicatedTCIState* for a CORESET, other than a CORESET with index 0.

A wireless device may act as if a DM-RS antenna ports for PDCCH receptions in the first CORESETs and second CORESETs, and DM-RS antenna ports for PDSCH receptions scheduled by DCI formats provided by PDCCH receptions in the first CORESETs and second CORESETs, may be quasi co-located with reference signals provided by indicated TCI state specific to the first CORESETs (or *coresetPoolIndex* =0) and second CORESETs (or *coresetPoolIndex* =1), respectively, for example, if a wireless device is indicated (e.g., provided, configured, etc.) with a higher layer parameter *dl-OrJointTCI-StateList* and is not indicated (e.g., provided, configured, etc.) with a higher layer parameter *coresetPoolIndex* or is indicated (e.g., provided, configured, etc.) with a higher layer parameter *coresetPoolIndex* with a value of 0 for first CORESETs on an active DL BWP of a serving cell; or is indicated (e.g., provided, configured, etc.) with a higher layer parameter *coresetPoolIndex* with a value of 1 for second CORESETs on the active DL BWP of the serving cells; and for a first and a second CORESETs that do not include a CORESET with index 0, and a) are associated only with USS sets and/or Type3-PDCCH CSS sets or b) are associated with CSS sets other than Type3-PDCCH CSS sets and indicated (e.g., provided, configured, etc.) with a higher layer parameter *followUnifiedTCIState.*

A wireless device may transmit PUSCH scheduled by DCI formats provided by PDCCH receptions in the first CORESETs and second CORESETs using a spatial domain filter corresponding to TCI state or TCI UL state specific to the first CORESETs (or *coresetPoolIndex* =0) and second CORESETs (or *coresetPoolIndex* =1), respectively, for example, if a wireless device is indicated (e.g., provided, configured, etc.) with a higher layer parameter *dl-OrJointTCI-StateList* and is not indicated (e.g., provided, configured, etc.) with a higher layer parameter *coresetPoolIndex* or is indicated (e.g., provided, configured, etc.) with a higher layer parameter *coresetPoolIndex* with a value of 0 for first CORESETs on an active DL BWP of a serving cell; or is indicated (e.g., provided, configured, etc.) with a higher layer parameter *coresetPoolIndex* with a value of 1 for second CORESETs on the active DL BWP of the serving cells; and for a first and a second CORESETs that do not include a CORESET with index 0, and a) are associated only with USS sets and/or Type3-PDCCH CSS sets or b) are associated with CSS sets other than Type3-PDCCH CSS sets and indicated (e.g., provided, configured, etc.) with a higher layer *parameter follow UnifiedTCI-State*.

A wireless device that may have a PUSCH transmission scheduled and/or activated by a DCI format 0_0 may apply the first indicated TCI state to the PUSCH transmission, for example, if a wireless device is indicated (e.g., provided, configured, etc.), by a base station, with a higher layer parameter *dl-OrJointTCI-StateList* or a higher layer parameter *TCI-UL-State* and having two indicated TCI states (e.g., two indicated uplink TCI states) comprising a first indicated TCI state and a second indicated TCI state.

A wireless device that may be configured, by the base station, with a PUSCH transmission corresponding to a Type 1 configured grant may be expected to be configured with a higher layer parameter *applyIndicatedTCIState,* for example, if a wireless device is indicated (e.g., provided, configured, etc.), by a base station, with a higher layer parameter *dl-OrJointTCI-StateList* or a higher layer parameter *TCI UL-State* and having two indicated TCI states (e.g., two indicated uplink TCI states) comprising a first indicated TCI state and a second indicated TCI state.

A wireless device may apply a first indicated TCI state to a PUSCH transmission, for example, if a higher layer parameter *applyIndicatedTCIState* is set to 'first'. The wireless device may apply the first indicated TCI state to each PUSCH transmission occasion of the PUSCH transmission.

A wireless device may apply a second indicated TCI state to a PUSCH transmission, for example, if the higher layer parameter *applyIndicatedTCIState* is set to 'second'. The wireless device may apply the second indicated TCI state to each PUSCH transmission occasion of the PUSCH transmission.

A wireless device may apply both of two indicated TCI states to a PUSCH transmission, for example, if a higher layer parameter *applyIndicatedTCIState* is set to 'both'. The wireless device may apply the first indicated TCI state to PUSCH transmission occasion(s) or PUSCH antenna port(s), of the PUSCH transmission, associated with a first SRS resource set for codebook or non-codebook transmission, and the wireless device may apply the second indicated TCI state to PUSCH transmission occasion(s) or PUSCH antenna port(s), of the PUSCH transmission, associated with a second SRS resource set for codebook or non-codebook transmission, for example, if the higher layer parameter *applyIndicatedTCIState* is set to 'both' or if both of the two indicated TCI states are indicated to be applied for the PUSCH transmission.

A first indicated TCI state and a second indicated TCI state may be specific to a higher layer parameter *coresetPoolIndex* with value 0 and a higher layer parameter *coresetPoolIndex* with value 1, respectively, for example, if the wireless device is indicated (e.g., provided, configured, etc.), by the base station, by a higher layer parameter *PDCCH-Config* that comprises (e.g., contains) two different values of a higher layer parameter *coresetPoolIndex* in different *ControlResourceSets.* The higher layer parameter *applyIndicatedTCIState* may not be set to 'both' indicating *both* of the two indicated TCI states to be applied for the PUSCH transmission, for example, if the wireless device is indicated (e.g., provided, configured, etc.), by the base station, by a higher layer parameter *PDCCH-Config* that comprises (e.g., contains) two different values of a higher layer parameter *coresetPoolIndex* in different *ControlResourceSets.*

PUSCH transmission occasion(s) of a configured uplink grant may be associated with a first SRS resource set of two SRS resource sets, for example, if the first indicated TCI state (e.g., TCI-UL state) is applied to the higher layer parameter *rrc-ConfiguredUplinkGrant* (e.g., to a configured uplink grant), and if a wireless device is configured with a higher layer parameter *dl-OrJointTCI-StateList* or a higher layer parameter *TCI-UL-State* and two SRS resource sets are configured in a higher layer parameter *srs-ResourceSetToAddModList* or a higher layer parameter *srs-ResourceSet-ToAddModListDCI-0-2* with a higher layer parameter *usage* in *SRS-ResourceSet* set to 'codebook' or 'noncodebook', and a higher layer parameter *multipanelScheme* is set to 'SDMscheme' or 'SFNscheme', and a higher layer parameter *rrc-*

*ConfiguredUplinkGrant* of a configured uplink grant (e.g., Type 1 configured uplink grant) does not comprise (e.g., contain) a higher layer parameter *srs-ResourceIndicator2* or a higher layer parameter *precodingAndNumberOfLayers2*.

PUSCH transmission occasion(s) of a configured uplink grant may be associated with a second SRS resource set of the two SRS resource sets, for example, if the second indicated TCI state (or TCI-UL state) is applied to the higher layer parameter *rrc-ConfiguredUplinkGrant* (or to the configured uplink grant), and if a wireless device is configured with a higher layer parameter *dl-OrJointTCI-StateList* or a higher layer parameter *TCI-UL-State* and two SRS resource sets are configured in a higher layer parameter *srs-ResourceSetToAddModList* or a higher layer parameter *srs-ResourceSet-ToAddModListDCI-0-2* with a higher layer parameter *usage* in *SRS-ResourceSet* set to 'codebook' or 'noncodebook', and a higher layer parameter *multipanelScheme* is set to 'SDMscheme' or 'SFNscheme', and a higher layer parameter *rrc-ConfiguredUplinkGrant* of a configured uplink grant (e.g., Type 1 configured uplink grant) does not comprise (e.g., contain) a higher layer parameter *srs-ResourceIndicator2* or a higher layer parameter *precodingAndNumberOfLayers2*.

A first TPMI of the two TPMIs may indicate a transmission precoder that may be applied over layers {0... vi-1 }, for example, if codepoint "10" of *SRS Resource Set indicator* is indicated in the DCI format 0_1/0_2, and if a higher layer parameter *multipanelScheme* is set to 'SDMScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook', two SRIs and two TPMIs may be given/indicated (e.g., provided, configured, etc.) by two SRS resource indicator fields and two Precoding-information-and-number-of-layers fields in and/or for a DCI format 0_1 and a DCI format 0_2. $v_1$ may be a number of layers indicated by the first TPMI, that corresponds to an SRS resource selected by a first SRI of the two SRSs if multiple SRS resources are configured for a first SRS resource set or if single SRS resource is configured for the first SRS resource set.

A second TPMI of the two TPMIs may indicate a transmission precoder that may be applied over layers {$v_1$... . $v_2$ +$v_1$-1}, for example, if codepoint "10" of *SRS Resource Set indicator* is indicated in the DCI format 0_1/0_2, and if a higher layer parameter *multipanelScheme* is set to 'SDMScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook', two SRIs and two TPMIs may be given/indicated (e.g., provided, configured, etc.) by two SRS resource indicator fields and two Precoding-information-and-number-of-layers fields in and/or for a DCI format 0_1 and a DCI format 0_2. $v_2$ may be a number of layers indicated by the second TPMI, that corresponds to an SRS resource selected by a second SRI of the two SRIs if multiple SRS resources are configured for a second SRS resource set or if single SRS resource is configured for the second SRS resource set, $v_1 \leq$ *maxRankSdm* and $v_2 \leq$ *maxRankSdm* or *maxRankSdmDCI-0-2* and *maxRankSdm* or *maxRankSdmDCI-0-2* may define the maximum number of layers applied over the first SRS resource set and the second SRS resource sets, separately.

A second SRI and second TPMI may be reserved, and a first TPMI may indicate a precoder that may be applied over layers {0... v-1}, where v $\leq$ *maxRank,* where *maxRank* may define a maximum number of layers, for example, if codepoint "00" or "01" of *SRS Resource Set indicator* is indicated in the DCI format 0_1/0_2, and if a higher layer parameter *multipanelScheme* is set to 'SDMScheme' and two SRS resource sets are indicated (e.g., provided, configured, etc.), by a base station, in a higher layer parameter *srs-ResourceSetToAddModList* or a higher layer parameter *srs-ResourceSet-ToAddModListDCI-0-2* with a higher layer parameter *usage* in a higher layer parameter *SRS-ResourceSet* set to 'codebook', two SRIs and two TPMIs may be given/indicated (e.g., provided, configured, etc.) by two SRS resource indicator fields and two Precoding-information-and-number-of-layers fields in and/or for a DCI format 0_1 and a DCI format 0_2. Codepoint "11" of *SRS Resource Set indicator* in the DCI format 0_1/0_2 may be reserved.

A transmission precoder may be selected from an uplink codebook that may have a number of antenna ports equal to a higher layer parameter *nrofSRS-Ports* in a higher layer parameter *SRS-Config* for the indicated SRI(s), for example, for one or two TPMIs.

A wireless device may expect that a number of SRS antenna ports may be associated with two indicated SRIs that may be the same, for example, if two SRIs are indicated. The wireless device may be indicated (e.g., provided, configured, etc.) with at least one SRS resource, for example, if the wireless device is indicated (e.g., provided, configured, etc.) with a higher layer parameter *txConfig* set to 'codebook'. Each of the indicated one or two SRIs in slot n may be associated with a most recent transmission of an SRS resource, in an associated SRS resource set, identified by an SRI of the two SRIs. The SRS resource may be prior to a PDCCH reception with the DCI format 0_1/0_2 carrying the SRI. The wireless device may not be expected to be configured with a different number of SRS resources in the two SRS resource sets, for example, if two SRS resource sets are indicated (e.g., provided, configured, etc.) in a higher layer parameter *srs-ResourceSetToAddMod-List* or a higher layer parameter *srs-ResourceSetToAddModListDCI-0-2* with a higher layer parameter *usage* in a higher layer parameter *SRS-ResourceSet* set to 'codebook'.

Two SRIs and two TPMIs may be indicated (e.g., provided, configured, etc.) by two SRS resource indicator fields and two Precoding-information-and-number-of-layers fields in and/or for a DCI format 0_1 and a DCI format 0_2, and a first TPMI of the two TPMIs may indicate a transmission precoder to be applied over layers {0...v-1}, and a second TPMI of the two TPMIs may indicate a transmission precoder that may be applied over layers {0... v-1}, for example, if codepoint "10" of *SRS Resource Set indicator* is indicated in the DCI format 0_1/0_2, and if a higher layer parameter *multipanelScheme* is set to 'SFNScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook'. v may be less (e.g., lower, etc.) than or equal to *maxRankSfn* or *maxRankSfnDCI-0-2* and *maxRankSfn* or *maxRankSfnDCI-0-2* may define a maximum number of layers applied over the first SRS resource set and the second SRS resource sets, separately.

Two SRIs and two TPMIs may be indicated (e.g., provided, configured, etc.) by two SRS resource indicator fields and two Precoding-information-and-number-of-layers fields in and/or for a DCI format 0_1 and a DCI format 0_2, and a second SRI and second TPMI may be reserved, and a first TPMI may indicate a precoder to be applied over layers {0... v-1}, for example, if codepoint "00" or "01" of *SRS Resource Set indicator* is indicated in the DCI format 0_1/0_2, and if a higher layer parameter *multipanelScheme* is set to 'SFNScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook'. v may be less (e.g., lower, below, etc.) than or equal to *maxRank,* and *maxRank* may define a maximum number of layers. Codepoint "11" of *SRS Resource Set indicator* in the DCI format 0_1/0_2 may be reserved.

A transmission precoder may be selected from an uplink codebook that has a number of antenna ports equal to a higher layer parameter *nrofSRS-Ports* in a higher layer parameter *SRS-Config* for the indicated SRI(s), for example, for one or two TPMIs.

A wireless device may expect that a number of SRS antenna ports that may be associated with two indicated SRIs may be the same, for example, if two SRIs are indicated. The wireless device may be indicated (e.g., provided, configured, etc.) with at least one SRS resource, for example, if the wireless device is indicated (e.g., provided, configured, etc.) with a higher layer parameter *txConfig* set to 'codebook'. Each of the indicated one or two SRIs in slot n may be associated with a most recent transmission of an SRS resource, in associated SRS resource set, identified by an SRI of the two SRIs. The SRS resource may be prior to a PDCCH reception with the DCI format 0_1/0_2 carrying the SRI. The wireless device may not be expected to be configured with a different number of SRS resources in the two SRS resource sets, for example, if two SRS resource sets are indicated (e.g., provided, configured, etc.) in a higher layer parameter *srs-ResourceSetToAddMod-List* or a higher layer parameter *srs-ResourceSetToAddModListDCI-0-2* with a higher layer parameter *usage* in a higher layer parameter *SRS-ResourceSet* set to 'codebook'.

Two SRIs may be indicated (e.g., provided, configured, etc.) by two SRS resource indicator fields in and/or for a DCI format 0_1 and a DCI format 0_2, and a first SRI of the two SRIs may indicate resource(s) that may be associated with layers {0... vi-1}, for example, if codepoint "10" of *SRS Resource Set indicator* is indicated in the DCI format 0_1/0_2, and if a higher layer parameter *multipanelScheme* is set to 'SDMScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'. vi may be a number of layers indicated by a first SRI and a second SRI of two SRIs that may indicate resource(s) to be associated with layers {$v_1$... . $v_2+v_1$-1}, $v_1 \leq L_{max}$ and $v_2 \leq L_{max}$.

Two SRIs may be indicated (e.g., provided, configured, etc.) by two SRS resource indicator fields in and/or for a DCI format 0_1 and a DCI format 0_2, and a second SRI may be reserved, and a first SRI may indicate resource(s) associated with layers {0... v-1}, where $v \leq L_{max}$, for example, if codepoint "00" or "01" of *SRS Resource Set indicator* is indicated in the DCI format 0_1/0_2, and if a higher layer parameter *multipanelScheme* is set to 'SDMScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'.

Two SRIs may be indicated (e.g., provided, configured, etc.) by two SRS resource indicator fields in and/or for a DCI format 0_1 and a DCI format 0_2, and a first SRI of the two SRIs may indicate resource(s) to be associated with layers {0...v-1} and a second SRI of the two SRIs may indicate resource(s) to be associated with layers {0 ... v-1}, $v \leq L_{max}$, for example, if codepoint "10" of *SRS Resource Set indicator* is indicated in the DCI format 0_1/0_2, and if a higher layer parameter *multipanelScheme* is set to 'SFNScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'. A wireless device may expect that a number of SRS antenna ports associated with two indicated SRIs may be the same, for example, if two SRIs are indicated.

Two SRIs may be indicated (e.g., provided, configured, etc.) by two SRS resource indicator fields in and/or for a DCI format 0_1 and a DCI format 0_2, and a second SRI may be reserved, and the first SRI may indicate resource(s) associated with layers {0... v-1}, where $v \leq L_{max}$, for example, if codepoint "00" or "01" of *SRS Resource Set indicator* is indicated in the DCI format 0_1/0_2, and if a higher layer parameter *multipanelScheme* is set to 'SFNScheme' and two SRS resource sets are indicated (e.g., provided, configured, etc.), by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'. A wireless device may expect that a number of SRS antenna ports associated with two indicated SRIs may be the same, for example, if two SRIs are indicated.

A wireless device may be indicated (e.g., provided, configured, etc.) with at least one SRS resource, for example, if the wireless device is indicated (e.g., provided, configured, etc.) with a higher layer parameter *txConfig* set to 'nonCodebook'. Each of the indicated one or two SRIs in slot *n* may be associated with a most recent transmission of an SRS resource, in an associated SRS resource set, identified by an SRI of the two SRIs, where the SRS resource is prior to a PDCCH reception with the DCI format 0_1/0_2 carrying the SRI. The wireless device may not be expected to be configured with a different number of SRS resources in the two SRS resource sets, for example, if two SRS resource sets are indicated (e.g., provided, configured, etc.) in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'.

A first indicated TCI state or second indicated TCI state may be applied, by a wireless device, to all PUSCH transmission occasions, respectively, for example, if a DCI format 0_1 or a DCI format 0_2 indicates codepoint "00" or "01" for an *SRS resource set indicator,* and if a wireless device is indicated (e.g., provided, configured, etc.), by a base station, with a higher layer parameter *dl-OrJointTCI-StateList* or a higher layer parameter *TCI-UL-State* and is having two indicated TCI states (e.g., two indicated joint/uplink TCI states) comprising a first indicated TCI state and a second indicated TCI state, and two SRS resource sets are indicated (e.g., provided, configured, etc.), by the base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook' or 'nonCodebook', for a PUSCH repetition Type A or Type B, or for a PUSCH transmission if the higher layer parameter *multipanelScheme* is set to 'SDMscheme' or 'SFNscheme'.

A first indicated TCI state may be applied, by a wireless device, to PUSCH transmission occasion(s) that may be associated with a first SRS resource set of the two SRS resource sets and a second indicated TCI state may be applied to PUSCH transmission occasion(s) that may be associated with a second SRS resource set of the SRS resource sets, for example, if a DCI format 0_1 or a DCI format 0_2 indicates codepoint "10" or "11" for an *SRS resource set indicator,* and the higher layer parameter *multipanelScheme* is not configured, and if a wireless device is indicated (e.g., provided, configured, etc.), by a base station, with a higher layer parameter *dl-OrJointTCI-StateList* or a higher layer parameter *TCI-UL-State* and is having two indicated TCI states (e.g., two indicated joint/uplink TCI states) comprising a first indicated TCI state and a second indicated TCI state, and two SRS resource sets are indicated (e.g., provided, configured, etc.), by the base station, in a higher layer parameter *srs-ResourceSetToAddModList* or a higher layer parameter *srs-Resource-SetToAddModListDCI-0-2* with a higher layer parameter *usage* in a higher layer parameter *SRS-ResourceSet* set to 'codebook' or 'nonCodebook', for a PUSCH repetition Type A or Type B, or for a PUSCH transmission if the higher layer parameter *multipanelScheme* is set to 'SDMscheme' or 'SFNscheme'. The association of PUSCH transmission occasions to the two SRS resource sets may be determined based on whether a higher layer parameter *cyclicMapping* or a higher layer parameter *sequentialMapping* in a higher layer parameter *PUSCH-Config* is enabled.

A first indicated TCI state may be applied, by a wireless device, to first PUSCH antenna port(s), of a PUSCH transmission occasion, that may be associated with a first SRS resource set, and a second indicated TCI state may be applied, by the wireless device, to second PUSCH antenna port(s), of the PUSCH transmission occasion, that may be associated with the second SRS resource set, for example, if a DCI format 0_1 or a DCI format 0_2 indicates codepoint "10" for an *SRS resource set indicator* and the higher layer parameters *multipanelScheme* is configured and set to 'SDMscheme' or 'SFNscheme'. The first PUSCH antenna port(s) and the second PUSCH antenna port(s) may be the same or different.

A wireless device may be indicated (e.g., provided, configured, etc.) with (e.g., by) a higher layer parameter *applyIndicatedTCIState,* to the SRS resource set, to indicate whether the wireless device may apply a first indicated TCI state or a second indicated TCI state to a SRS resource set, for example, if a wireless device is indicated (e.g., provided, configured, etc.) with a higher layer parameter *dl-OrJointTCI-StateList* or a higher layer parameter *TCI-UL-State* and is having two indicated TCI states (e.g., two indicated uplink TCI states) comprising a first indicated TCI state and a second indicated TCI state, for a periodic, semi-persistent or aperiodic SRS resource set with a higher layer parameter *usage,* in *SRS ResourceSet,* set to *'codebook', 'nonCodebook'* or *'antennaSwitching'* or for an aperiodic SRS resource set with a higher layer parameter *usage,* in *SRS-ResourceSet,* set to *'beamManagement'.*

A first indicated TCI state and second indicated TCI state correspond to indicated TCI states (e.g., uplink TCI states) specific to a higher layer parameter *coresetPoolIndex* with value 0 and a higher layer parameter *coresetPoolIndex* with value 1, respectively, for example, if a wireless device is indicated (e.g., provided, configured, etc.) by a higher layer parameter *PDCCH-Config* that contains two different values of a higher layer parameter *coresetPoolIndex* in a higher layer parameter *ControlResourceSet.*

A wireless device may apply, to a aperiodic SRS resource set, an indicated TCI state (e.g., uplink TCI state) specific to the *coresetPoolIndex* value, for example, if the wireless device is indicated (e.g., provided, configured, etc.) with (e.g., by) a higher layer parameter *PDCCH-Config* that comprises (e.g., contains) two different values of a higher layer parameter *coresetPoolIndex* in a higher layer parameter *ControlResourceSet,* and is not indicated (e.g., provided, configured, etc.) with a higher layer parameter *applyIndicatedTCIState* for an aperiodic SRS resource set, if the aperiodic SRS resource set is triggered by PDCCH on a CORESET associated with a *coresetPoolIndex* value.

A wireless device may not expect that a first indicated TCI state may be applied to a second SRS resource set and that a second indicated TCI state may be applied to a first SRS resource set. A wireless device may not expect this, for example, if two SRS resource sets comprising a first SRS resource set and a second SRS resource with a higher layer parameter *usage* in a higher layer parameter *SRS-ResourceSet* set to 'codebook' or 'nonCodebook' are indicated (e.g., provided, configured, etc.).

A wireless device may be indicated (e.g., provided, configured, etc.) with (e.g., by) a higher layer parameter $applyIndicatedTCIState$, to a PUCCH resource, to indicate whether the wireless device may apply a first indicated TCI state or a second indicated TCI state or both of two indicated TCI states to the PUCCH resource. A higher layer parameter *applyIndicatedTCIState* may be an indication for applying one or both of the two indicated TCI states to the PUCCH resource.

A wireless device may transmit, via a PUCCH resource, a PUCCH transmission that may use a spatial domain filter corresponding to a first indicated TCI state, for example, if a higher layer parameter *applyIndicatedTCIState* is set to 'first'. A wireless device may transmit, via a PUCCH resource, a PUCCH transmission using a spatial domain filter corresponding to a second indicated TCI state, for example, if a higher layer parameter *applyIndicatedTCIState* is set to 'second'. A wireless device may transmit, via a PUCCH resource, a PUCCH transmission using a spatial domain filter corresponding to a first indicated TCI state and a spatial domain filter corresponding to a second indicated TCI state, for example, if the higher layer parameter $applyIndicatedTCIState$ is set to 'both'.

A first indicated TCI state and A second indicated TCI state may be specific to a first CORESETs (e.g., a higher layer parameter *coresetPoolIndex* with a value of 0) and a second CORESETs (e.g., a higher layer parameter *coresetPoolIndex* with a value of 1), respectively, for example, if a wireless device is not provided with a higher layer parameter *coresetPoolIndex* or is provided with a higher layer parameter *coresetPoolIndex* with a value of 0 for first CORESETs on an active downlink BWP of a cell, and the wireless device is provided with a higher layer parameter *coresetPoolIndex* with a value of 1 for second CORESETs on the active downlink BWP of the cell.

A wireless device may be indicated, by a base station, to transmit a PUCCH transmmisison over a number of slots (e.g., $N_{\mathrm{PUCCH}}^{\mathrm{repeat}}$ slots) using (e.g., via a PUCCH resource. The number of slots may be indicated by the higher layer parameter *pucch-RepetitionNrofSlots,* for example, if the PUCCH resource is indicated by a DCI format and the PUCCH resource includes (e.g., configured with) a higher layer parameter *pucch-RepetitionNrofSlots.* The number of slots may be indicated by a higher layer parameter *nrofSlots,* for example, if the PUCCH resource is not indicated by a DCI format or the PUCCH resource does not include (e.g., not configured with) a higher layer parameter *pucch-RepetitionNrofSlots.*

A wireless devive may use a PUCCH resource for repitions of a PUCCH transmission that includes a first TCI state and a second TCI state and may not be provided a higher layer parameter. A wireless device may use a first indicated TCI state and a second indicated TCI state for first and second repetitions of the PUCCH transmission, respectively, for example, if the number of slots (e.g., $N_{\mathrm{PUCCH}}^{\mathrm{repeat}}$ slots) is equal to two, and if a PUCCH resource used for repetitions of a PUCCH transmission by a wireless device includes a first TCI state and a second TCI state (e.g., $applyIndicatedTCIState$ = 'both') and the wireless device is not provided a higher layer parameter *multipanelSfnScheme.*

A wireless device may also alternate between a first indicated TCI state and a second indicated TCI state per $N_{\mathrm{PUCCH}}^{\mathrm{switch}}$ repetitions of the PUCCH transmission, where $N_{\mathrm{PUCCH}}^{\mathrm{switch}} = 1$, for example, if a higher layer parameter *mappingPattern* = 'cyclicMapping', and if a PUCCH resource used for repetitions of a PUCCH transmission by a wireless device includes a first TCI state and a second TCI state (e.g., $applyIndicatedTCIState$ = 'both') and the wireless device is not provided a higher layer parameter *multipanelSfnScheme.* A wireless device uses, for example, $N_{\mathrm{PUCCH}}^{\mathrm{switch}} = 2$, if a higher layer parameter *mappingPattern = 'sequentialMapping'*, elsewise.

A first and second SRS resource sets may be applied, by a wireless device and/or a base station, to a first and second slot of 2 slots, respectively, for example, if a wireless device sends (e.g., transmits) repetitions of a PUSCH transmission over and/or across K slots (e.g., K consecutive slots) and K = 2.

A first and second SRS resource sets may be applied, by a wireless device and/or a base station, to a first and second slot of K slots, respectively, and a same SRS resource set mapping pattern may continue to remaining slots of K slots, for example, if a wireless device sends (e.g., transmits) repetitions of a PUSCH transmission over and/or across K slots (e.g., K consecutive slots) > 2 slots, and if the higher layer parameter *mappingPattern* = 'cyclicMapping'.

A first SRS resource set may be applied, by a wireless device and/or a base station, to a first and second slots of K slots, and a second SRS resource set may be applied, by the wireless device and/or the base station, to a third and fourth slot of K slots. The same SRS resource set mapping pattern may continue to remaining slots of K slots, for example, if a wireless device sends (e.g., transmits) repetitions of a PUSCH transmission over and/or across K slots (e.g., K consecutive slots) > 2 slots, and if the higher layer parameter *mappingPattern = 'sequentialMapping'*.

A DCI format 0_3 may be used for the scheduling of one PUSCH in one cell, or multiple PUSCHs in multiple cells with one PUSCH per cell. The DCI format 0_3 may comprise a scheduled cell set indicator field. A number of bits of the scheduled cell set indicator field may be determined based on a number of cell sets which may be indicated (e.g., provided, configured, etc.) by a higher layer parameter *MC-DCI-SetofCellsToAddModList* to be respectively scheduled by DCI format 0_3/1_3 from a cell on which DCI format 0_3 may be carried by PDCCH. The scheduled cell set indicator field may be used to indicate a scheduled cell set according to a table, for example, if the scheduled cell set indicator field is present, ; otherwise, the scheduled cell set may be a cell set configured to be scheduled by a DCI format 0_3/1_3 from the cell by a higher layer parameter *MC-DCI-SetofCellsToAddModList.*

A DCI format 0_3 may comprise a scheduled cells indicator field. A number of bits of the scheduled cells indicator field may be 0 bit, for example, if a higher layer parameter *ScheduledCellCombo-ListDCI-0-3* for a scheduled cell set that is not configured. A number of bits of the scheduled cells indicator field may be $\lceil \log_2 I_{UL} \rceil$ bits indicating scheduled cell(s) in the scheduled cell set according to a table, where $I_{UL}$ is the number of entries in the higher layer parameter *ScheduledCellCombo-ListDCI-0-3*. If only one entry is configured in the higher layer parameter *ScheduledCellCombo-ListDCI-0-3*, the scheduled cell(s) are the cell(s) configured by a higher layer parameter *ScheduledCellCombo-ListDCI-0-3*, for example, otherwise. The DCI format 0_3 may comprise a frequency domain resource assignment. The frequency domain resource assignment may comprise block(s) (e.g., block number 1, block number 2, ..., block number $N_{cell}^{UL}$). $N_{cell}^{UL}$ may be the number of the scheduled cell(s) indicated by the scheduled cells indicator field, and $N_{cell}^{UL}$ may be a number of cells that may be configured by a higher layer parameter *ScheduledCellCombo-ListDCI-0-3*, for example, if a higher layer parameter *ScheduledCellCombo-ListDCI-0-3* for the scheduled cell set is configured with only one entry, and if a higher layer parameter *ScheduledCellCombo-ListDCI-0-3* for the scheduled cell set is configured with more than one entry. $N_{cell}^{UL}$ may be the number of the scheduled cell(s) indicated by the scheduled cells indicator field, and $N_{cell}^{UL}$ may be the number of cells that may be configured by a higher layer parameter *ScheduledCell-ListDCI-0-3* in the scheduled cell set, for example, otherwise, if a higher layer parameter *ScheduledCellCombo-ListDCI-0-3* for the scheduled cell set is configured with more than one entry.

Each block of block(s) may correspond to a frequency domain resource assignment for a respective cell, and the block(s) may be placed according to an ascending order of a serving cell index. Block number 1 may correspond to a frequency domain resource assignment for a first cell with the smallest serving cell index; block number 2 may correspond to a frequency domain resource assignment for a second cell with the second smallest serving cell index; etc.

Each block of the block(s) may be used to indicate whether the corresponding cell is scheduled or not. A cell corresponding to a block may not be scheduled, for example, if a higher layer parameter *ScheduledCellCombo-ListDCI-0-3* for the scheduled cell set is not configured, and if all bits of a block are set to 0 for resource allocation type 0 or set to 1 for resource allocation type 1 or set to 0 or 1 for dynamic switch resource allocation type. A cell corresponding to a block may be scheduled, for example, if a higher layer parameter *ScheduledCellCombo-ListDCI-0-3* for the scheduled cell set is not configured, otherwise.

A DCI format 1_3 may be used for a scheduling of one PDSCH in one cell, or multiple PDSCHs in multiple cells using one PDSCH per cell. The DCI format 1_3 may comprise a scheduled cell set indicator field. A number of bits of the scheduled cell set indicator field may be determined based on a number of cell sets which are indicated (e.g., provided, configured, etc.) by a higher layer parameter*MC-DCI-SetofCellsToAddModList* to be respectively scheduled by DCI format 0_3/1_3 from the cell on which DCI format 1_3 may be carried by PDCCH. The scheduled cell set indicator field may be used to indicate a scheduled cell set according to a table, for example, if the scheduled cell set indicator field is present. The scheduled cell set may be a cell set configured to be scheduled by a DCI format 0_3/1_3 from the cell by a higher layer parameter *MC-DCI-SetofCellsToAddModList*otherwise.

The DCI format 1_3 may comprise a scheduled cells indicator field. A number of bits of the scheduled cells indicator field may be determined as 0 bit, for example, if a higher layer parameter *ScheduledCellCombo-ListDCI-1-3* for a scheduled cell set is not configured. A number of bits of the scheduled cells indicator field may be determined as $\lceil \log_2 I_{DL} \rceil$ bits indicating scheduled cell(s) in the scheduled cell set according to a table, where $I_{DL}$ is the number of entries in the higher layer parameter *ScheduledCellCombo-ListDCI-1-3*, for example, otherwise. The scheduled cell(s) are the cell(s) configured by a higher layer parameter *ScheduledCellCombo-ListDCI-1*-3, for example, if only one entry is configured in the higher layer parameter *ScheduledCellCombo-ListDCI-1-3*.

The DCI format 1_3 may comprise a frequency domain resource assignment. The frequency domain resource assignment may comprise block(s) (e.g., block number 1, block number 2, ..., block number $N_{cell}^{DL}$). $N_{cell}^{DL}$ may be the number of the scheduled cell(s) indicated by the scheduled cells indicator field and $N_{cell}^{DL}$ may be a number of cells configured by a higher layer parameter *ScheduledCellCombo-ListDCI-1-3,* for example, if a higher layer parameter *ScheduledCellCombo-ListDCI-1-3* for the scheduled cell set is configured with only one entry. $N_{cell}^{DL}$ may be the number of the scheduled cell(s) indicated by the scheduled cells indicator field and $N_{cell}^{DL}$ may be the number of cells configured by a higher layer parameter *ScheduledCell-ListDCI-1-3* in the scheduled cell set, for example, if a higher layer parameter *ScheduledCellCombo-ListDCI-1-3* for the scheduled cell set is configured with more than one entry.

Each block of the block(s) may correspond to a frequency domain resource assignment for a respective cell, and the block(s) may be placed according to an ascending order of a serving cell index, with block number 1 corresponds to a frequency domain resource assignment for a first cell with the smallest serving cell index, with block number 2 corresponds to a frequency domain resource assignment for a second cell with the second smallest serving cell index, etc. Each block of the block(s) may be used to indicate whether the corresponding cell may be scheduled or not. The cell corresponding to the block may not be scheduled, for example, if a higher layer parameter *ScheduledCellCombo-ListDCI-1-3* for the scheduled cell set is not configured, and if all bits of a block are set to 0 for resource allocation type 0 or set to 1 for resource allocation type 1 or set to 0 or 1 for dynamic switch resource allocation type. The cell corresponding to the block may be scheduled, for example, if a higher layer parameter *ScheduledCellCombo-ListDCI-1-3* for the scheduled cell set is not configured, otherwise.

A DCI format 1_3 may comprise a transmission configuration indication (TCI) field. A number of the TCI field may be determined based on 0 bit if a higher layer parameter *tci-PresentInDCI* is not enabled. A number of the TCI field may be determined based on $\lceil \log_2(I_{TCI}) \rceil$ bits, where $I_{TCI}$ is a number of entries in a higher layer parameter *tci-ListDCI-1-3,* for example, otherwise. The TCI field may be used to indicate an entry in the higher layer parameter *tci-ListDCI-1-3.* Each entry in the higher layer parameter *tci-ListDCI-1-3* may comprise (e.g., contain) a 'Transmission configuration indication' index, or a TCI codepoint, for each cell in the scheduled cell set. 'Transmission configuration indication' indexes (e.g., TCI codepoints) for all cells in an entry in and/or of the higher layer parameter *tci-ListDCI-1-3* may be placed according to an ascending order of a serving cell index. Each 'Transmission configuration indication' index (or a TCI codepoint) may be 3 bits.

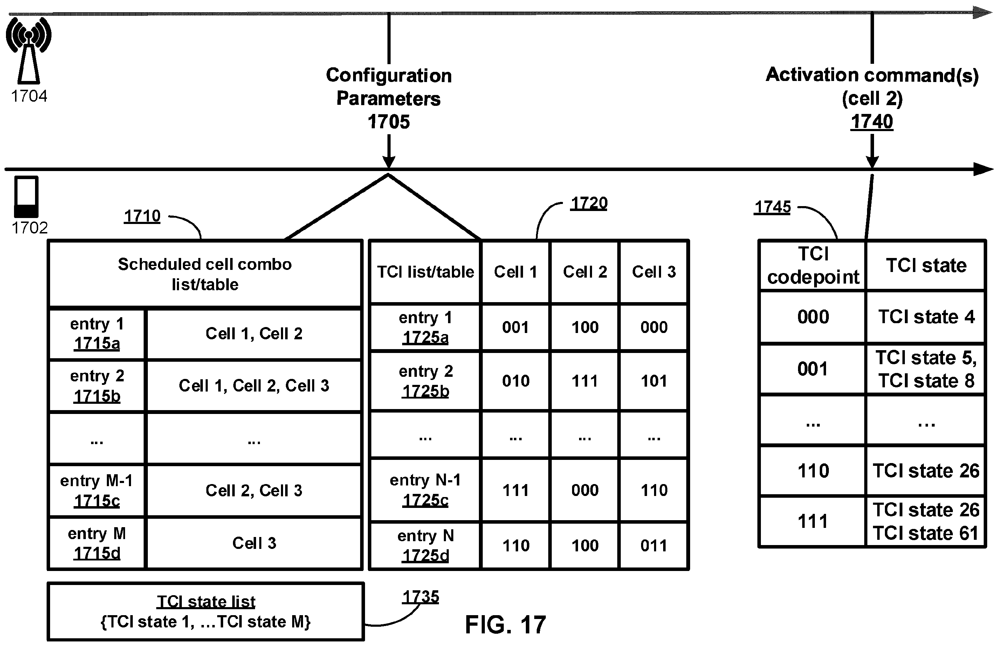

FIG. 17 shows an example of cell scheduling. Specifically, FIG. 17 shows an example of cell scheduling with an associated scheduled cell list/table 1710 and an associated TCI list/table 1720 that may be indicated in configuration parameters 1705, and a TCI codepoint table received in activation commands 1740 and that may indicate one or two TCI states per TCI codepoint.

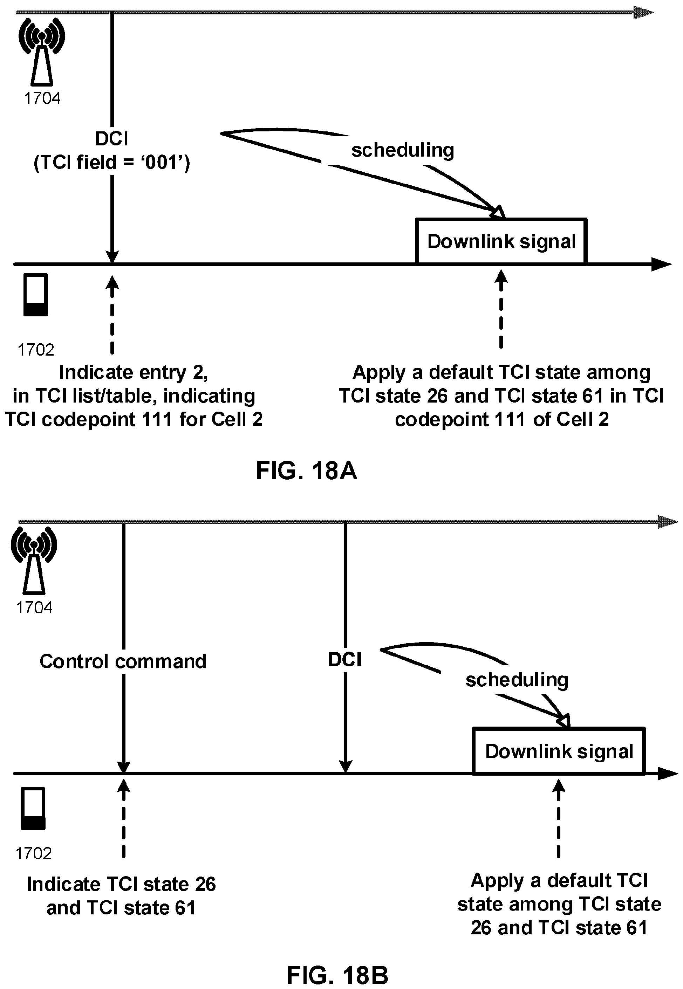

FIGS. 18A and 18B show examples of cell scheduling. Specifically, FIGS. 18A and 18B show examples of a wireless device 1702 receiving DCI scheduling a downlink signal.

A wireless device 1702 may receive one or more messages. The wireless device 1702 may receive the one or more messages, for example, from a base station 1704. The base station 1704 may transmit the one or more messages. The wireless device 1702 may receive the one or more messages, for example, from a relay node. The wireless device 1702 may receive the one or more messages, for example, from another wireless device (e.g., TRP, vehicle, remote radio head, etc.). The one or more messages may comprise one or more configuration parameters (e.g., Configuration parameters 1705 as described herein in FIG. 17). The one or more configuration parameters may be one or more RRC configuration parameters. The one or more configuration parameters may be one or more RRC reconfiguration parameters (e.g., *RRCReconfiguration, reconfigurationWithSync).* The one or more messages may be one or more RRC messages. The one or more messages may be one or more RRC reconfiguration messages (e.g., *RRCReconfiguration, reconfigurationWithSync).* The one or more configuration parameters may be for one or more cells. The one or more cells may comprise a first cell.

A first cell may be a serving cell. At least one configuration parameter of the one or more configuration parameters may be for the first cell. The first cell may be a primary cell (PCell). The first cell may be a primary secondary cell (PSCell). The first cell may be a secondary cell (SCell). The first cell may be a secondary cell configured with PUCCH (e.g., PUCCH SCell). The first cell may be a special Cell (SpCell). The SpCell may indicate (e.g., refer to) the PCell of the MCG or the PSCell of the SCG, for example, for dual connectivity (DC) operation, , otherwise the SpCell may indicate (e.g., refer to) the PCell. The first cell may be a primary SCG cell (PSCell). The wireless device may perform a random-access procedure via the PSCell, for example, if performing the Reconfiguration with Sync procedure for dual connectivity operation.

A first cell may be an unlicensed cell (e.g., operating in an unlicensed band). The first cell may be a licensed cell (e.g., operating in a licensed band). The first cell may operate in a first frequency range (FR1). The FR1 may, for example, comprise frequency bands below 6 GHz. The first cell may operate in a second frequency range (FR2). The FR2 may comprise frequency bands from 24 GHz to 52.6 GHz. The first cell may operate in a third frequency range (FR3). The FR3 may comprise frequency bands from 52.6 GHz to 71 GHz. The FR3 may comprise frequency bands starting from, or above, 52.6 GHz.

A wireless device may perform uplink transmissions (e.g., PUSCH, PUCCH, PUCCH) via a first cell in a first time and in a first frequency. The wireless device may perform downlink receptions (e.g., PDCCH, PDSCH) via the first cell in a second time and in a second frequency. The first cell may operate in a time-division duplex (TDD) mode. The first frequency and the second frequency may be the same, for example, in the TDD mode. The first time and the second time may be different, for example, in the TDD mode. The first cell may operate in a frequency-division duplex (FDD) mode. The first frequency and the second frequency may be different, for example, in the FDD mode. The first time and the second time may be the same, for example, in the FDD mode. The wireless device may be in an RRC connected mode (e.g., state). The wireless device may be in an RRC idle mode (e.g., state). The wireless device may be in an RRC inactive mode (e.g., state).

A first cell may comprise a plurality of BWPs. one or more configuration parameters may indicate the plurality of BWPs, for example, for the first cell. The plurality of BWPs may comprise one or more uplink BWPs comprising an uplink BWP of the first cell. The plurality of BWPs may comprise one or more downlink BWPs comprising a downlink BWP of the first cell.

A BWP of a plurality of BWPs may be in one of an active state and an inactive state (e.g., a deactivated state). The wireless device may monitor a downlink channel and/or signal (e.g., PDCCH, DCI, CSI-RS, PDSCH) on, for, and/or via a downlink BWP, for example, in the active state of a downlink BWP of the one or more downlink BWPs. The wireless device may receive a PDSCH on, for, and/or via the downlink BWP, for example, in the active state of a downlink BWP of the one or more downlink BWPs. The wireless device may not monitor a downlink channel and/or signal (e.g., PDCCH, DCI, CSI-RS, PDSCH) on, for, and/or via the downlink BWP, for example, in the inactive state of a downlink BWP of the one or more downlink BWPs. The wireless device may stop monitoring (or receiving) a downlink channel and/or signal (e.g., PDCCH, DCI, CSI-RS, PDSCH) on, for, and/or via the downlink BWP, for example, in the inactive state of a downlink BWP of the one or more downlink BWPs. The wireless device may not receive a PDSCH on, for, and/or via the downlink BWP, for example, in the inactive state of a downlink BWP of the one or more downlink BWPs. The wireless device may stop receiving a PDSCH on, for, and/or via the downlink BWP, for example, in the inactive state of a downlink BWP of the one or more downlink BWPs.

A wireless device may transmit an uplink channel and/or signal (e.g., PUCCH, preamble, PUSCH, PRACH, PUCCH, etc.) via the uplink BWP, for example, in the active state of an uplink BWP of the one or more uplink BWPs. The wireless device may not transmit an uplink channel and/or signal (e.g., PUCCH, preamble, PUSCH, PRACH, PUCCH, etc.) via the uplink BWP, for example, in the inactive state of an uplink BWP of the one or more uplink BWPs.

A wireless device may activate a downlink BWP of one or more downlink BWPs of a first cell. Activating the downlink BWP may comprise setting the downlink BWP as an active downlink BWP of the first cell. Activating the downlink BWP may comprise setting the downlink BWP as an active state. Activating the downlink BWP may comprise switching the downlink BWP from an inactive state to an active state.

A wireless device may activate an uplink BWP of one or more uplink BWPs of a first cell. Activating the uplink BWP may comprise setting the uplink BWP as an active uplink BWP of the first cell. Activating the uplink BWP may comprise setting the uplink BWP as an active state. Activating the uplink BWP may comprise switching the uplink BWP from an inactive state to an active state.

One or more configuration parameters may be for a downlink BWP (e.g., an active downlink BWP) of a first cell. At least one configuration parameter of the one or more configuration parameters may be for the downlink BWP of the first cell. The one or more configuration parameters may be for an uplink BWP (e.g., an active uplink BWP) of the first cell. At least one configuration parameter of the one or more configuration parameters may be for the uplink BWP of the first cell. The one or more configuration parameters may comprise a list-of-set-of-cells parameter (e.g., *MC-DCI-SetofCellsToAdd-ModList*) for multi-cell PDSCH/PUSCH scheduling from the first cell (e.g., the serving cell). The list-of-set-of-cells parameter may indicate one or more sets of cells (e.g., *MC-DCI-SetOfCells*). The list-of-set-of-cells parameter may indicate a list of configurations of one or more sets of cells.

One or more configuration parameters may indicate one or more set of cell identifiers, identities, and/or indexes (e.g., *setOfCellsId*), for example, for the one or more sets of cells. The one or more configuration parameters may indicate a respective set of cell identifier of the one or more set of cells identifiers, for example, for each set of cells of the one or more sets of cells.

Each set of cells of one or more sets of cells may comprise and/or indicate respective cells (e.g., indicated by *scheduledCellListDCI-1-3, scheduledCellListDCI-0-3)*. The one or more configuration parameters may comprise a scheduling cell list parameter (e.g., *scheduledCellListDCI-1-3, scheduledCellListDCI*-0-3) indicating the respective cells, for example, for each set of cells of the one or more sets of cells. A first set of cells of the one or more sets of cells may comprise and/or indicate Cell 1 and Cell 2. A second set of cells of the one or more sets of cells may comprise and/or indicate Cell 3, Cell 4, and Cell 5. A third set of cells of the one or more sets of cells may comprise and/or indicate Cell 2, Cell 5, and Cell 6.

A scheduling cell list parameter (e.g., *scheduledCellListDCI-1-3, scheduledCellListDCI-0-3)* of a set of cells of one or more sets of cells may indicate and/or configure a list of possible co-scheduled cells in a set of cells for downlink scheduling or uplink scheduling via a DCI format. The DCI format may be, for example, DCI format 1_3 for the downlink scheduling. The DCI format may be, for example, DCI format 0_3 for the uplink scheduling. The one or more configuration parameters may comprise a scheduling cell list parameter, for example, for the set of cells. The set of cells may comprise at least two cells. The at least two cells in the list may be in an ascending order of serving cell index(es) of the at least two cells.

A maximum number (e.g., maxNrofDCI-SetOfCells) of one or more sets of cells may be reported by a wireless device to a base station. The one or more sets of cells may comprise a set of cells (e.g., a scheduled cell set). The set of cells may comprise and/or indicate Cell 1, Cell 2, and Cell 3, for example, as described herein in FIG. 17. At least two cells in the set of cells may comprise and/or indicate Cell 1, Cell 2, and Cell 3, for example, as described herein in FIG. 17. The set of cells may be, or may be interchangeably used with, a scheduled cell set.

One or more configuration parameters may comprise a list of scheduled cell combinations parameter (e.g., *ScheduledCellCombo-ListDCI-1-3, ScheduledCellCombo-ListDCI-0-3)* indicating a table 1710 (e.g., Scheduled cell combo list/table as described herein in FIG. 17), for example, for combinations of co-scheduled cells, or a set of cells in the set of cells, for downlink scheduling or uplink scheduling via a DCI format. The DCI format may be DCI format 1_3, for example, for the downlink scheduling. The DCI format may be DCI format 0_3, for example, for the uplink scheduling. The table 1710 (e.g., Scheduled cell combo list/table as described herein in FIG. 17) may comprise one or more entries (e.g., rows). The one or more entries may be entry 1 1715a, entry 2 1715b, ..., entry M-1 1715c, and entry M 1715d, for example, as described herein in FIG. 17. The one or more entries may be, or may be interchangeably used with, one or more rows.

Each entry of one or more entries in a table 1710 (e.g., Scheduled cell combo list/table as described herein in FIG. 17) may indicate respective cell(s). Entry 1 1715a may indicate Cell 1 and Cell 2. Entry 2 1715b may indicate Cell 1, Cell 2, and Cell 3. Entry M-1 1715c may indicate Cell 2 and Cell 3. Entry M 1715d may indicate Cell 3.

One or more configuration parameters may comprise a TCI list parameter (e.g., *tci-ListDCI-1-3)* indicating a (joint) TCI table 1720 (e.g., TCI list/table as described herein in FIG. 17). The one or more configuration parameters may comprise a TCI list parameter (e.g., *tci-ListDCI-1-3)* indicating a (joint) TCI table 1720 (e.g., TCI list/table as described herein in FIG. 17), for example, for downlink scheduling via DCI format 1_3. The TCI table 1720 (e.g., TCI list/table as described herein in FIG. 17) may comprise one or more entries (e.g., rows). The one or more entries, for example, as described herein (e.g., as described herein in FIG. 17) may be entry 1 1725a, entry 2 1725b, ..., entry N-1 1725c, and entry N 1725d. The one or more entries may be, or may be interchangeably used with, one or more rows.

Each entry of the one or more entries in the TCI table 1720 (e.g., TCI list/table as described herein in FIG. 17) may indicate respective TCI state codepoints, or TCI indexes, for a set of cells (e.g., a scheduled cell set). Entry 1 1725a may indicate and/or comprise TCI codepoint 001 for Cell 1, TCI codepoint 100 for Cell 2, and TCI codepoint 000 for Cell 3. Entry 2 1725b may indicate and/or comprise TCI codepoint 010 for Cell 1, TCI codepoint 111 for Cell 2, and TCI codepoint 101 for Cell 3. Entry N-1 1725c may indicate and/or comprise TCI codepoint 111 for Cell 1, TCI codepoint 000 for Cell 2, and TCI codepoint 110 for Cell 3. Entry N 1725d may indicate and/or comprise TCI codepoint 110 for Cell 1, TCI codepoint 100 for Cell 2, and TCI codepoint 011 for Cell 3.

One or more configuration parameters may comprise a DCI-format parameter (e.g., *dci-FormatsMC)* of a search space set of a first cell. The search space set may be a user-specific search space (USS) set. The DCI-format parameter may indicate that a wireless device may monitor downlink control channels for DCI format 0_3 and/or DCI format 1_3, for example, via and/or in the search space set of the first cell.

One or more configuration parameters may indicate a plurality of TCI states for a cell. A set of one or more cells may comprise the cell. The one or more configuration parameter may comprise a TCI state list parameter (e.g., provided by a higher layer (e.g., RRC) parameter *dl-OrJoint-TCIStateList)* indicating a TCI state list 1735 (e.g., TCI state list as described herein in FIG. 17). The TCI state list 1735 may comprise the plurality of TCI states. The one or more configuration parameters may comprise one or more PDSCH configuration parameters (e.g., *PDSCH-Config),* for example, comprising the TCI state list parameter that indicates the plurality of TCI states. The plurality of TCI states in the TCI state list 1735 may be TCI state 1, ..., TCI state M, for example, as described herein in FIG. 17.

One or more configuration parameters may indicate a plurality of TCI state indexes, identifiers, and/or identities (e.g., *TCI-StateId).* The one or more configuration parameters may indicate a plurality of TCI state indexes, identifiers, and/or identities (e.g., *TCI-StateId),* for example, for the plurality of TCI states. The one or more configuration parameters may indicate a respective TCI state index of the plurality of TCI state indexes, for example, for each TCI state of the plurality of TCI states. Each TCI state of the plurality of TCI states may be indicated and/or identified by a respective TCI state index of the plurality of TCI state indexes. The one or more configuration parameters may indicate a first TCI state index of the plurality of TCI state indexes, for example, for a first TCI state of the plurality of TCI states. The one or more configuration parameters may indicate a second TCI state index of the plurality of TCI state indexes, for example, for a second TCI state of the plurality of TCI states.

One or more configuration parameters may indicate a plurality of TCI states that indicate a unified TCI state for a cell. The one or more configuration parameters may comprise the one or more PDSCH configuration parameters, for example, for a downlink BWP (e.g., an active downlink BWP) of the cell. The one or more configuration parameters may indicate the plurality of TCI states for the downlink BWP of the cell.

One or more configuration parameters may comprise one or more PDSCH configuration parameters. The one or more configuration parameters may comprise the one or more PDSCH configuration parameters, for example, for a second downlink BWP of a second cell. The one or more cells may comprise the second cell. The one or more configuration parameters may indicate a plurality of TCI states for the second downlink BWP of the second cell. The one or more configuration parameters may comprise a reference unified TCI state list parameter (e.g., *unifiedTCI-StateRef)* indicating the second downlink BWP of the second cell, for example, for the downlink BWP of the cell. The reference unified TCI state list parameter may comprise a BWP index (e.g., BWP-Id) indicating and/or identifying the second downlink BWP. The reference unified TCI state list parameter may comprise a cell index (e.g., *ServCellIndex)* indicating and/or identifying the second cell. The second downlink BWP of the second cell may be a reference BWP of a reference cell for the downlink BWP of the cell. The downlink BWP of the cell may be a target BWP of a target cell. The one or more PDSCH configuration parameters of the downlink BWP of the cell may not comprise a higher layer (e.g., RRC) parameter *dl-OrJoint-TCIState-List,* for example, based on the one or more configuration parameters comprising, for the downlink BWP of the cell, the reference unified TCI state list parameter.

One or more configuration parameters may comprise a unified-TCI-state-type parameter (e.g., *unifiedtci-StateType).* The one or more configuration parameters may comprise one or more serving cell parameters (e.g., *ServingCellConfig)* comprising the unified-TCI-state-type parameter. The unified-TCI-state-type parameter may indicate the unified TCI state type of the cell.

A unified-TCI-state-type parameter may be set to "Joint". The wireless device may use and/or apply the plurality of TCI states (e.g., provided/indicated by *dl-OrJoint-TCIState αteList)* for both uplink transmissions (e.g., PUSCH/-PUCCH/SRS transmissions) via the cell and downlink receptions (e.g., PDCCH/PDSCH/CSI-RS receptions) via the cell, for example, based on the one or more configuration parameters comprising the unified-TCI-state-type parameter set to "Joint". The plurality of TCI states may be, for example, a plurality of joint TCI states.

A unified-TCI-state-type parameter may be set to "Separate". The wireless device may use and/or apply the plurality of TCI states (e.g., provided/indicated by a higher layer parameter *dl-OrJoint-TCIStateList)* for downlink receptions (e.g., PDCCH/PDSCH/CSI-RS receptions) via the cell, for example, based on the one or more configuration parameters comprising the unified-TCI-state-type parameter set to "Separate". The wireless device may not use and/or apply the plurality of TCI states for uplink transmissions (e.g., PUSCH/PUCCH/SRS transmissions) via the cell, for example, based on the one or more configuration parameters comprising the unified-TCI-state-type parameter set to "Separate". The plurality of TCI states may be, for example, a plurality of downlink TCI states.

One or more configuration parameters may indicate a second plurality of TCI states. The one or more configuration parameters may comprise an uplink TCI state list parameter (e.g., provided/indicated by a higher layer parameter *ul-TCI-StateList)* indicating an uplink TCI state list 1735. The uplink TCI state list 1735 may comprise the second plurality of TCI states. The one or more configuration parameters may comprise one or more uplink BWP configuration parameters comprising the uplink TCI state list parameter that indicates the second plurality of TCI states. The second plurality of TCI states may be TCI state 1, , TCI state M, for example, as described herein in FIG. 17.

One or more configuration parameters may comprise one or more uplink BWP configuration parameters. The one or more configuration parameters may comprise the one or more uplink BWP configuration parameters, for example, for an uplink BWP (e.g., an active uplink BWP) of the cell. The one or more configuration parameters may indicate a second plurality of TCI states for the uplink BWP of the cell.

One or more configuration parameters may comprise one or more uplink BWP configuration parameters, for example, for a second uplink BWP of a second cell. The one or more configuration parameters may indicate a second plurality of TCI states for the second uplink BWP of the second cell. The one or more configuration parameters may comprise a reference unified TCI state list parameter (e.g., *unifiedtci-St αteType)* indicating the second uplink BWP of the second cell for the uplink BWP of the cell. The reference unified TCI state list parameter may comprise a BWP index (e.g., BWP-Id) indicating and/or identifying the second uplink BWP. The reference unified TCI state list parameter may comprise a cell index (e.g., *ServCellIndex)* indicating and/or identifying the second cell. The second uplink BWP of the second cell may be a reference BWP of a reference cell for the uplink BWP of the cell. The uplink BWP of the cell may be a target BWP of a target cell. The one or more uplink BWP configuration parameters of the uplink BWP of the cell may not comprise a higher layer (e.g., RRC) parameter *ul-TCI-StateList,* for example, based on the one or more configuration parameters comprising, for the uplink BWP of the cell, the reference unified TCI state list parameter.

A wireless device may use and/or apply a second plurality of TCI states for uplink transmissions (e.g., PUSCH/PUCCH/SRS transmissions) via a cell. The wireless device may use and/or apply the second plurality of TCI states for uplink transmissions (e.g., PUSCH/PUCCH/SRS transmissions) via the cell, for example, based on the one or more configuration parameters comprising the unified-TCI-state-type parameter set to "Separate". The wireless device may not use and/or apply the second plurality of TCI states for downlink receptions (e.g., PDCCH/PDSCH/CSI-RS receptions) via the cell, for example, based on the one or more configuration parameters comprising the unified-TCI-state-type parameter set to "Separate". The second plurality of TCI states may be, for example, a plurality of uplink TCI states.

A wireless device may use a plurality of TCI states for downlink receptions via a downlink BWP of a cell. The wireless device may use, for downlink receptions via the downlink BWP of the cell, the plurality of TCI states, for example, based on the one or more configuration parameters indicating the plurality of TCI states for the downlink BWP of the cell.

A wireless device may use a plurality of TCI states for uplink transmissions receptions via an uplink BWP of the cell. The wireless device may use, for uplink transmissions receptions via the uplink BWP of the cell, the plurality of TCI states, for example, based on the one or more configuration parameters indicating the plurality of TCI states for the downlink BWP of the cell.

A wireless device may use a plurality of TCI states of a second downlink BWP of a second cell for downlink receptions via a downlink BWP of a cell. The wireless device may use, for downlink receptions via the downlink BWP of the cell, the plurality of TCI states of the second downlink BWP of the second cell, for example, based on the reference unified TCI state list parameter indicating, for the downlink BWP of the cell, the second downlink BWP of the second cell.

A wireless device may use a plurality of TCI states of a second downlink BWP of a second cell for uplink transmissions receptions via an uplink BWP of a cell. The wireless device may use, for uplink transmissions receptions via the uplink BWP of the cell, the plurality of TCI states of the second downlink BWP of the second cell, for example, based on the reference unified TCI state list parameter indicating, for the downlink BWP of the cell, the second downlink BWP of the second cell.

A wireless device may use a second plurality of TCI states for uplink transmissions receptions via an uplink BWP of a cell. The wireless device may use, for uplink transmissions receptions via the uplink BWP of the cell, the second plurality of TCI states, for example, based on the one or more configuration parameters indicating the second plurality of TCI states for the uplink BWP of the cell.

A wireless device may use a second plurality of TCI states of a second uplink BWP of a second cell for uplink transmissions receptions via an uplink BWP of a cell. The wireless device may use, for uplink transmissions receptions via the uplink BWP of the cell, the second plurality of TCI states of the second uplink BWP of the second cell, for example, based on the reference unified TCI state list parameter indicating, for the uplink BWP of the cell, the second uplink BWP of the second cell.

A cell may be served by a plurality of TRPs comprising a first TRP and a second TRP. A wireless device may be served by the plurality of TRPs via the cell. The wireless device may receive, via the cell, a first downlink reception (e.g., PDSCH, PDCCH, CSI-RS) from the first TRP. The first TRP may send (e.g., transmit), to the wireless device, the first downlink reception. The wireless device may receive, via the cell, a second downlink reception (e.g., PDSCH, PDCCH, CSI-RS) from the second TRP. The second TRP may send (e.g., transmit), to the wireless device, the second downlink reception.

A wireless device may send (e.g., transmit), via a cell, a first uplink transmission (e.g., PUSCH, PUCCH, SRS) to a first TRP. The first TRP may receive, from the wireless device, the first uplink transmission. The wireless device may send (e.g., transmit), via the cell, a second uplink transmission (e.g., PUSCH, PUCCH, SRS) to the second TRP. A second TRP may receive, from the wireless device, the second uplink transmission.

A wireless device 1702 may receive one or more activation commands 1740 (e.g., MAC-CE, DCI, RRC, one or more control commands, one or more downlink control commands/messages, one or more control commands/messages, Unified TCI States Activation/Deactivation MAC CE, Enhanced Unified TCI States Activation/Deactivation MAC CE, The Enhanced Unified TCI States Activation/Deactivation MAC-CE for Joint TCI State Mode, Enhanced Unified TCI States Activation/Deactivation MAC-CE for Separate TCI State Mode and the like). The one or more activation commands 1740 may be an activation command 1740 (e.g., a single activation command), for example, if the one or more configuration parameters do not indicate two different values of coreset pool index for coreset(s) in a downlink BWP of a cell. The one or more configuration parameters may not comprise one or more PDCCH configuration parameters (e.g., *PDCCH-Config)* that contain and/or comprise two different values of a higher layer parameter *CORESETPoolIndex* in different coresets (e.g., *ControlResourceSets)* of the downlink BWP of the cell.

One or more activation commands 1740 may be at least two activation commands 1740, for example, if one or more configuration parameters indicate two different values of coreset pool index for coreset(s) in the downlink BWP of a cell. The one or more configuration parameters may comprise one or more PDCCH configuration parameters (e.g., *PDCCH-Config)* that contain and/or comprise two different values of a higher layer parameter *CORESETPoolIndex* in different coresets (e.g., *ControlResourceSets)* of the downlink BWP of the cell. The at least two activation commands 1740 may comprise a first activation command and a second activation command.

One or more activation commands 1740 may indicate activation of a subset of TCI states 1745 of the plurality of TCI states (e.g., *DLorJoint-TCIStateList).* The subset of TCI states 1745 may be, for example, a subset of joint TCI states of a plurality of joint TCI states. The subset of TCI states 1745 may be, for example, a subset of downlink TCI states of a plurality of downlink TCI states.

One or more activation commands 1740 may indicate activation of a subset of TCI states 1745 of a second plurality of TCI states (e.g., *ul-TCI-StateList).* The subset of TCI states 1745 may be, for example, a subset of uplink TCI states of a plurality of uplink TCI states.

A subset of TCI states 1745 may comprise one or more first TCI states associated with a first coreset pool index (e.g., *CoresetPoolIndex* = 0) and one or more second TCI states associated with a second coreset pool index (e.g., *CoresetPoolIndex* = 1), for example, if one or more configuration parameters comprise one or more PDCCH configuration parameters (e.g., *PDCCH-Config)* that contain and/or comprise two different values of a higher layer parameter *CORESETPoolIndex* in different coresets (e.g., *ControlResourceSets)*. A first activation command 1740 of the one or more activation commands 1740 may indicate activation of the one or more first TCI states for the first coreset pool index (e.g., *CoresetPoolIndex* = 0). The first activation command 1740 may comprise a field set to the first coreset pool index. The one or more first TCI states may be for and/or associated with a first TRP. The second activation command of the one or more activation commands 1740 may indicate activation of the one or more second TCI states for the second coreset pool index (e.g., *CoresetPoolIndex* = 1). The second activation command may comprise a field set to the second coreset pool index. The one or more second TCI states may be for/or associated with a second TRP.

A base station 1704 may activate and/or deactivate a subset of TCI states 1745, for example, by sending (e.g., transmitting) one or more activation commands 1740. A wireless device 1702 may map the subset of TCI states 1745 to one or more TCI codepoints of a cell. The one or more activation commands 1740 may indicate mapping of the subset of TCI states 1745 to the one or more TCI codepoints. The wireless device may map respective TCI state(s) of the subset of TCI states 1745 to a respective TCI codepoint of the one or more TCI codepoints. The one or more TCI codepoints may comprise and/or indicate the subset of TCI states 1745. Each TCI codepoint of the one or more TCI codepoints may indicate, comprise, and/or be mapped to respective TCI state(s) of the subset of TCI states 1745. Each TCI codepoint of the one or more TCI codepoints may indicate, comprise, and/or be mapped to one or more TCI states.

One or more TCI codepoints may be TCI codepoint 000, TCI codepoint 001, ..., TCI codepoint 110, and TCI codepoint 111, for example, as described herein in FIG. 17. The subset of TCI states 1745 are TCI state 4, TCI state 5, TCI state 8, ..., TCI state 26, and TCI state 61. TCI codepoint 000 may indicate, comprise, and/or be mapped to TCI state 4. TCI codepoint 001 may indicate, comprise, and/or be mapped to TCI state 5 and TCI state 8. TCI codepoint 110 may indicate, comprise, and/or be mapped to TCI state 26. TCI codepoint 111 may indicate, comprise, and/or be mapped to TCI state 26 and TCI state 61. For example, TCI codepoint 000 and TCI codepoint 110 indicate a single TCI state (e.g., a single joint TCI state, a single downlink TCI state, a single uplink TCI state, etc.). TCI codepoint 001 and TCI codepoint 111 indicate two TCI states (e.g., two joint TCI states, two uplink TCI states, two downlink TCI states, etc.).

A wireless device 1702 may map one or more first TCI states to one or more first TCI codepoints, for example, if one or more configuration parameters comprise one or more PDCCH configuration parameters (e.g., *PDCCH-Config)* that contain and/or comprise two different values of a higher layer parameter *CORESETPoolIndex* in different coresets (e.g., *ControlResourceSets)*. one or more TCI codepoints may comprise the one or more first TCI codepoints. The first activation command 1740 may indicate mapping of one or more first TCI states to the one or more first TCI codepoints. The wireless device 1702 may map each TCI state of the one or more first TCI states to a respective TCI codepoint of the one or more first TCI codepoints. The one or more first TCI codepoints may comprise and/or indicate the one or more first TCI states. Each TCI codepoint of the one or more first TCI codepoints may indicate (e.g., be mapped to) respective TCI state of the one or more first TCI states. Each TCI codepoint of the one or more first TCI codepoints may indicate, comprise, and/or be mapped to one TCI state.

One or more first TCI states may be, for example, TCI state 4, TCI state 5, TCI state 26, and TCI state 49. The one or more first TCI codepoints may comprise a first TCI codepoint (e.g., TCI codepoint 000), a second TCI codepoint (e.g., TCI codepoint 001), a third TCI codepoint (e.g., TCI codepoint 010), and a fourth TCI codepoint (e.g., TCI codepoint 011). The first TCI codepoint (e.g., TCI codepoint 000) may comprise and/or indicate the TCI state 4. The second TCI codepoint (e.g., TCI codepoint 001) may comprise and/or indicate the TCI state 5. The third TCI codepoint (e.g., TCI codepoint 010) may comprise and/or indicate TCI state 26. The fourth TCI codepoint (e.g., TCI codepoint 011) may comprise and/or indicate the TCI state 49. Each TCI codepoint of the one or more first TCI codepoints may indicate a single TCI state (e.g., one joint TCI state, one uplink TCI state, one downlink TCI state, etc.).

A wireless device may map one or more second TCI states to one or more second TCI codepoints, for example, if one or more configuration parameters comprise one or more PDCCH configuration parameters (e.g., *PDCCH-Config)* that contain and/or comprise two different values of a higher layer parameter *CORESETPoolIndex* in different coresets (e.g., *ControlResourceSets)*. The one or more TCI codepoints may comprise the one or more second TCI codepoints. The second activation command 1740 may indicate mapping of the one or more second TCI states to the one or more second TCI codepoints. The wireless device may map each TCI state of the one or more second TCI states to a respective TCI codepoint of the one or more second TCI codepoints. The one or more second TCI codepoints may comprise and/or indicate the one or more second TCI states. Each TCI codepoint of the one or more second TCI codepoints may indicate (e.g., be mapped to) respective TCI state of the one or more second TCI states. Each TCI codepoint of the one or more second TCI codepoints may indicate, comprise, and/or be mapped to one TCI state.

One or more second TCI states may be TCI state 8, TCI state 14, TCI state 33, and TCI state 61. The one or more second TCI codepoints may comprise a first TCI codepoint (e.g., TCI codepoint 000), a second TCI codepoint (e.g., TCI codepoint 001), a third TCI codepoint (e.g., TCI codepoint 010), and a fourth TCI codepoint (e.g., TCI codepoint 011). The first TCI codepoint (e.g., TCI codepoint 000) may comprise and/or indicate the TCI state 8. The second TCI codepoint (e.g., TCI codepoint 001) may comprise and/or indicate the TCI state 14. The third TCI codepoint (e.g., TCI codepoint 010) may comprise and/or indicate TCI state 33. The fourth TCI codepoint (e.g., TCI codepoint 011) may comprise and/or indicate the TCI state 61. Each TCI codepoint of the one or more second TCI codepoints may indicate a single TCI state (e.g., one joint TCI state, one uplink TCI state, one downlink TCI state, etc.).

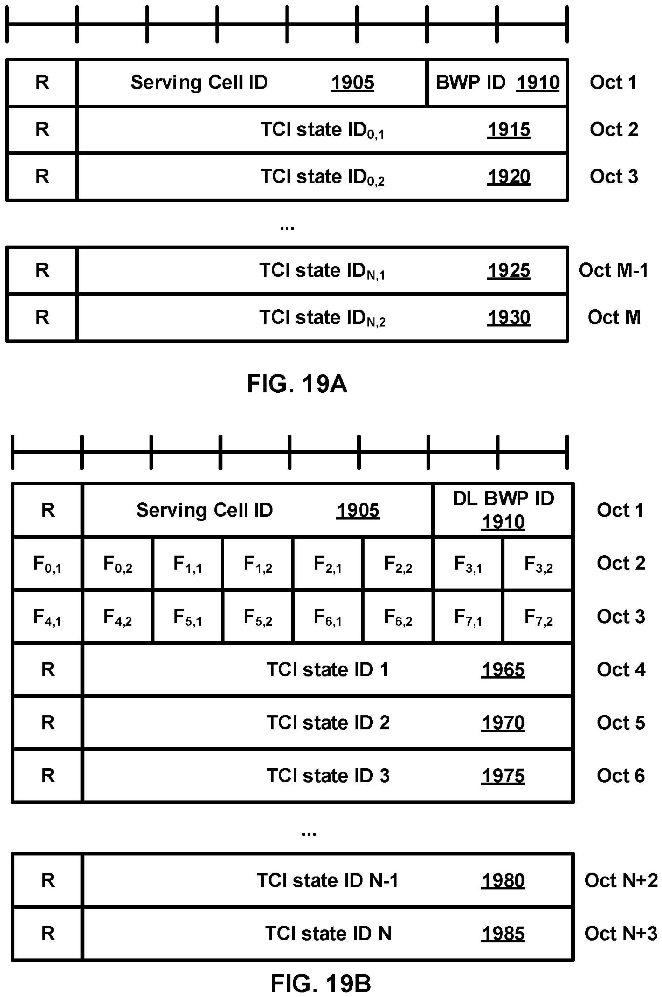

FIGS. 19A and 19B show examples of an activation command. An activation command 1740 that may indicate activation of the subset of TCI states 1745 of a plurality of TCI states may comprise a plurality of fields.

A first field 1905 (e.g., Serving Cell ID as described herein in FIG. 19A and FIG. 19B) of a plurality of fields may comprise a serving cell index, identity, and/or identifier indicating and/or identifying a cell. The first field 1905 may comprise the serving cell index, identity, and/or identifier indicating and/or identifying the cell for which the activation command 1740 applies. The activation command 1740 may apply to each cell in the simultaneous TCI update cell list, for example, if the one or more configuration parameters indicate and/or configure the cell in (e.g., as a part of) a simultaneous TCI update cell list (e.g., *simultaneousTCI-UpdateList1, simultaneousTCI-UpdateList2)*.

A second field 1910 (e.g., BWP ID as described herein in FIG. 19A and DL BWP ID as described herein in FIG. 19B) of a plurality of fields may comprise a BWP index, identity, and/or identifier indicating and/or identifying a downlink BWP of a cell. The second field may comprise and/or indicate the BWP index, identity, and/or identifier indicating and/or identifying the downlink BWP of the cell for which the activation command 1740 applies as a codepoint of a bandwidth part indicator field in DCI.

A third field (e.g., TCI state $ID_{i,j}$ 1915, 1920, 1925, and/or 1930 as described herein in FIG. 19A) of a plurality of fields may comprise a TCI state index, identifier, and/or identity (e.g., *TCI-StateId)* identifying a TCI state of a plurality of TCI states. The plurality of TCI state indexes may comprise the TCI state index. An index i may be an index of a codepoint of a *Transmission configuration indication* (TCI) field in DCI, for example, in TCI state $ID_{i,j}$. TCI state $ID_{i,j}$ may be (e.g., denote) the $j^{th}$ TCI state indicated for the $i^{th}$ codepoint in/of a *Transmission Configuration Indication* field in DCI. TCI state $ID_{0,1}$ may denote the first TCI state (e.g., 1st TCI state), for example, indicated for a TCI codepoint 000. TCI state $ID_{0,2}$ may denote the second TCI state (e.g., 2nd TCI state), for example, indicated for the TCI codepoint 000. TCI state $ID_{1,1}$ may denote the first TCI state (e.g., 1st TCI state), for example, indicated for a TCI codepoint 001. TCI state $ID_{1,2}$ may denote the second TCI state (e.g., 2nd TCI state), for example, indicated for the TCI codepoint 001. TCI state $ID_{N,1}$ may denote the first TCI state (e.g., 1st TCI state) indicated for a TCI codepoint 111, for example, if N is equal to 8 (e.g., as described herein in FIG. 19A). TCI state $ID_{N,2}$ may denote the second TCI state (e.g., 2nd TCI state), for example, indicated for the TCI codepoint 111. TCI state $ID_{i,1}$ may be (e.g., denote) the first TCI state (e.g., 1st TCI state) and TCI state $ID_{i,2}$ may be (e.g., denote) the second TCI state (e.g., 2nd TCI state), for example, for a TCI codepoint i. The activation command 1740 may comprise TCI state index(es) of the subset of TCI states 1745. The activation command 1740 may comprise a respective TCI state index, of the TCI state index(es), of each TCI state of the subset of TCI states 1745. The plurality of TCI state indexes may comprise the TCI state index(es) of the subset of TCI states 1745.

A TCI codepoint that a TCI state(s) may be mapped to may be determined, by a wireless device and/or a base station, by an ordinal position of a TCI codepoint among ordinal position(s) of TCI codepoint(s). The first TCI codepoint with TCI state $ID_{0,1}$ and TCI state $ID_{0,2}$ may be mapped to the codepoint value 0 (e.g., TCI codepoint 000), the second TCI codepoint with TCI state $ID_{1,1}$ and TCI state $ID_{1,2}$ may be mapped to the codepoint value 1 (e.g., TCI codepoint 001) and so on. TCI codepoint 000 may comprise and/or indicate TCI state 4. TCI state 4 may be mapped to TCI codepoint 000, for example, as described herein in FIG. 17. TCI codepoint 001 may comprise and/or indicate TCI state 5 and TCI state 8. TCI state 5 and TCI state 8 may be mapped to the second TCI codepoint (e.g., TCI codepoint 001), and so on.

Activation command 1740 may comprise a TCI state index, identifier, and/or identity (e.g., TCI state $ID_{1,1}$) of TCI state 5 and a TCI state index, identifier, and/or identity (e.g., TCI state $ID_{1,2}$) of TCI state 8. TCI state 5 may be a first TCI state and TCI state 8 may be a second TCI state, for example, based on the TCI state index, identifier, and/or identity (e.g., TCI state $ID_{1,1}$) of TCI state 5 occurring (e.g., being, positioned, etc.) in a lower octet in the activation command 1740 than the TCI state index, identifier, and/or identity (e.g., TCI state $ID_{1,2}$) of TCI state 8. Octet 4 of the activation command 1740 may comprise the TCI state index, identifier, and/or identity (e.g., TCI state $ID_{1,1}$), for example, of TCI state 5 and Octet 5 of the activation command 1740 may comprise the TCI state index, identifier, and/or identity (e.g., TCI state $ID_{1,2}$), for example, of TCI state 8.

Activation command 1740 may comprise a TCI state index, identifier, and/or identity (e.g., TCI state $ID_{1,1}$) of TCI state 8 and a TCI state index, identifier, and/or identity (e.g., TCI state $ID_{1,2}$) of TCI state 5. TCI state 8 may be a first TCI state and TCI state 5 may be a second TCI state, for example, based on the TCI state index, identifier, and/or identity (e.g., TCI state $ID_{1,1}$) of TCI state 8 occurring (e.g., being, positioned, etc.) in a lower octet in the activation command 1740 than the TCI state index, identifier, and/or identity (e.g., TCI state $ID_{1,2}$) of TCI state 5. Octet 4 of the activation command 1740 may comprise the TCI state index, identifier, and/or identity (e.g., TCI state $ID_{1,1}$), for example, of TCI state 8 and Octet 5 of the activation command 1740 may comprise the TCI state index, identifier, and/or identity (e.g., TCI state $ID_{1,2}$), for example, of TCI state 5.

TCI codepoint 111 may comprise and/or indicate TCI state 26 and TCI state 61. TCI state 26 and TCI state 61 may be mapped to TCI codepoint 111, for example, as described herein in FIG. 17. Activation command 1740 may comprise a TCI state index, identifier, and/or identity (e.g., TCI state $ID_{8,1}$) of TCI state 26 and a TCI state index, identifier, and/or identity (e.g., TCI state $ID_{8,2}$) of TCI state 61. TCI state 26 may be a first TCI state and TCI state 61 may be a second TCI state, for example, based on the TCI state index, identifier, and/or identity (e.g., TCI state $ID_{8,1}$) of TCI state 26 occurring (e.g., being, positioned, etc.) in a lower octet in the activation command 1740 than the TCI state index, identifier, and/or identity (e.g., TCI state $ID_{8,2}$) of TCI state 61. Octet 6 of the activation command 1740 may comprise the TCI state index, identifier, and/or identity (e.g., TCI state $ID_{8,1}$), for example, of TCI state 26 and Octet 7 of the activation command 1740 may comprise the TCI state index, identifier, and/or identity (e.g., TCI state $ID_{8,2}$), for example, of TCI state 61.

Activation command 1740 may comprise a TCI state index, identifier, and/or identity (e.g., TCI state $ID_{8,1}$) of TCI state 61 and a TCI state index, identifier, and/or identity (e.g., TCI state $ID_{8,2}$) of TCI state 26. TCI state 61 may be the first TCI state and TCI state 26 may be the second TCI state, for example, based on the TCI state index, identifier, and/or identity (e.g., TCI state $ID_{8,1}$) of the TCI state 61 occurring (e.g., being, positioned, etc.) in a lower octet in the activation command 1740 than the TCI state index, identifier, and/or identity (e.g., TCI state $ID_{8,2}$) of TCI state 26. Octet 6 of the activation command 1740 may comprise the TCI state index, identifier, and/or identity (e.g., TCI state $ID_{8,1}$), for example, of TCI state 61 and Octet 7 of the activation command 1740 may comprise the TCI state index, identifier, and/or identity (e.g., TCI state $ID_{8,2}$), for example, of TCI state 26.

A third field (e.g., $F_{i,j}$ 1965, 1970, 1975, 1980, and/or 1985 as described herein in FIG. 19B) of a plurality of fields may indicate if a TCI state (e.g., a joint TCI state, a downlink TCI state, an uplink TCI state) indicated and/or identified by a TCI state ID field, of the plurality of fields, for TCI codepoint i applies for the first TRP and/or the second TRP. The third field may indicate that the TCI state indicated and/or identified by the TCI state ID field for TCI codepoint i applies for the $j^{th}$ TRP (j = 1 or 2), for example, if the third field (e.g., $F_{i,j}$) is set to 1. The third field may indicate that the there is no TCI state ID (or no TCI state) being applied for TCI codepoint i for the $j^{th}$ TRP, for example, if the third field (e.g., $F_{i,j}$) is set to 0. The TCI codepoint to which a TCI state may be mapped to may be determined, by a wireless device and/or a base station, by its ordinal position among all the TCI state ID fields.

$F_{0,1}$ set to 1 may indicate a TCI state indicated and/or identified by TCI state ID 1 for TCI codepoint 000 applies for a first TRP. $F_{0,1}$ set to 0 may indicate that there may be no TCI state ID (e.g., no TCI state) being applied for TCI codepoint 000 for the first TRP.

$F_{0,2}$ set to 1 may indicate a TCI state, indicated and/or identified by TCI state ID 1, for example, if $F_{0,1}$ set to 0 or by TC state ID 2 1970, for example, if $F_{0,1}$ set to 1, for TCI codepoint 000 applied for the second TRP. $F_{0,2}$ set to 0 may indicate that there may be no TCI state ID (e.g., no TCI state) applied for TCI codepoint 000 for the second TRP.

A TCI state indicated and/or identified by TCI state ID 1 may be a first TCI state in TCI codepoint 000 and a TCI state indicated and/or identified by TC state ID 2 1970 may be a second TCI state in TCI codepoint 000, for example, if $F_{0,1}$ is set to 1 and $F_{0,2}$ is set to 1. The first TCI state in TCI codepoint 000 may be associated with $F_{0,1}$. The second TCI state in TCI codepoint 000 may be associated with $F_{0,2}$. The first TCI state for TCI codepoint 000 applies to (e.g., for) a first TRP. The second TCI state for TCI codepoint 000 applies to (e.g., for) a second TRP. A TCI state indicated and/or identified by TC state ID 3 1975 may be a first TCI state in TCI codepoint 001 and a TCI state indicated and/or identified by TCI state ID 4 may be a second TCI state in TCI codepoint 001, for example, if $F_{1,1}$ set to 1 and $F_{1,2}$ set to 1. The first TCI state in TCI codepoint 001 may be associated with $F_{1,1}$. The second TCI state in TCI codepoint 001 may be associated with $F_{1,2}$. The first TCI state for TCI codepoint 001 may apply to (e.g., for) the first TRP. The second TCI state for TCI codepoint 001 may apply to (e.g., for) the second TRP.

TCI state 4 may be indicated by (e.g., mapped to) TCI codepoint 000 (e.g., as described herein in FIG. 17) that applies to (e.g., for) a first TRP, for example, if $F_{0,1}$ is set to 1 and $F_{0,2}$ is set to 0. TCI state 4 may be indicated by (e.g., mapped to) TCI codepoint 000 (e.g., as described herein in FIG. 17) that applies to (e.g., for) a second TRP. TCI state ID 1 1965 (e.g., as described herein in FIG. 19B) may indicate and/or identify TCI state 4, for example, if $F_{0,1}$ set to 0 and $F_{0,2}$ set to 1.

TCI state 5 and TCI state 8 may be indicated by (e.g., mapped to) TCI codepoint 001 (e.g., as described herein in FIG. 17) may apply to (e.g., for) a first TRP and a second TRP, respectively. TCI state 5 and TCI state 8 may be indicated by (e.g., mapped to) TCI codepoint 001 (e.g., as described herein in FIG. 17) may apply to (e.g., for) a first TRP and a second TRP, respectively, for example, if $F_{1,1}$ is set to 1 and $F_{1,2}$ is set to 1. TC state ID 2 1970 and TC state ID 3 1975 (e.g., as described herein in FIG. 19B) may indicate and/or identify TCI state 5 and TCI state 8, respectively. TCI state 5 may be the first TCI state based on a first octet (e.g., Octet 5) comprising TC state ID 2 1970 that may indicate and/or identify TCI state 5 being smaller (e.g., lower, less than, etc.) than a second octet (e.g., Octet 6) comprising TC state ID 3 1975 that may indicate and/or identify TCI state 8. TCI state 8 may be the second TCI state based on a first octet (e.g., Octet 5) comprising TC state ID 2 1970 that may indicate and/or identify TCI state 5 being smaller (e.g., lower, less than, etc.) than a second octet (e.g., Octet 6) comprising TC state ID 3 1975 that may indicate and/or identify TCI state 8. The first TCI state (e.g., TCI state 5) in TCI codepoint 001 may be associated with $F_{1,1}$. The second TCI state (e.g., TCI state 8) in TCI codepoint 001 may be associated with $F_{1,2}$. TC state ID 2 1970 that may indicate and/or identify TCI state 5 may be associated with $F_{1,1}$.

TC state ID 3 1975 that may indicate and/or identify TCI state 8 may be associated with $F_{1,2}$.

TCI state 8 and TCI state 5 may be indicated by (e.g., mapped to) TCI codepoint 001 (e.g., as described herein in FIG. 17) that may apply to (e.g., for) a first TRP and a second TRP, respectively, for example, if Fi,i is set to 1 and $F_{1,2}$ is set to 1. TCI state ID 2 1970 and TCI state ID 3 1975 (e.g., as describeed herein in FIG. 19B) may indicate and/or identify TCI state 8 and TCI state 5, respectively. TCI state 8 may be a first TCI state based on a first octet (e.g., Octet 5) comprising TCI state ID 2 1970 that may indicate and/or identify TCI state 8 being smaller (e.g., lower, less than, etc.) than a second octet (e.g., Octet 6) comprising TC state ID 3 1975 that may indicate and/or identify TCI state 5. TCI state 5 may be a second TCI state based on a first octet (e.g., Octet 5) comprising TC state ID 2 1970 that may indicate and/or identify TCI state 8 being smaller (e.g., lower, less than, etc.) than a second octet (e.g., Octet 6) comprising TC state ID 3 1975 that may indicate and/or identify TCI state 5. The first TCI state (e.g., TCI state 8) in TCI codepoint 001 may be associated with $F_{1,1}$. The second TCI state (e.g., TCI state 5) in TCI codepoint 001 may be associated with $F_{1,2}$. TC state ID 2 1970 may indicate and/or identify TCI state 8 that may be associated with $F_{1,1}$. TC state ID 3 1975 may indicate and/or identify TCI state 5 that may be associated with $F_{1,2}$.

TCI state 26 may be indicated by (e.g., mapped to) TCI codepoint 110 (e.g., as described herein in FIG. 17) that may apply to (e.g., for) a first TRP, for example, if $F_{6,1}$ is set to 1 and $F_{6,2}$ is set to 0. TCI state 26 may be indicated by (e.g., mapped to) TCI codepoint 110 (e.g., as described herein in FIG. 17) that applies to (e.g., for) the second TRP, for example, if $F_{6,1}$ is set to 0 and $F_{6,2}$ is set to 1.

TCI state 26 and TCI state 61 may be indicated by (e.g., mapped to) TCI codepoint 111 (e.g., as described herein in FIG. 17) that may apply to (e.g., for) a first TRP and a second TRP, respectively, for example, if $F_{7,1}$ is set to 1 and $F_{7,2}$ is set to 1. TCI state ID N-1 and TCI state ID N (e.g., as described herein in FIG. 19B) may indicate and/or identify TCI state 26 and TCI state 61, respectively. TCI state 26 may be a first TCI state based on a first octet (e.g., Octet N+2) comprising TCI state ID N-1 that may indicate and/or identify TCI state 26 being smaller (e.g., lower, less than, etc.) than a second octet (e.g., Octet N+3) comprising TCI state ID N that may indicate and/or identify TCI state 61. TCI state 61 may be a second TCI state based on a first octet (e.g., Octet N+2) comprising TCI state ID N-1 that may indicate and/or identify TCI state 26 being smaller (e.g., lower, less than, etc.) than a second octet (e.g., Octet N+3) comprising TCI state ID N that may indicate and/or identify TCI state 61. The first TCI state (e.g., TCI state 26) in TCI codepoint 111 may be associated with $F_{7,1}$. The second TCI state (e.g., TCI state 61) in TCI codepoint 111 may be associated with $F_{7,2}$. TCI state ID N-1 may indicate and/or identify TCI state 26 that may be associated with $F_{7,1}$. TCI state ID N may indicate and/or identify TCI state 61 that may be associated with $F_{7,2}$.

TCI state 61 and TCI state 26 may be indicated by (e.g., mapped to) TCI codepoint 111 (e.g., as described herein in FIG. 17) that may apply to (e.g., for) a first TRP and a second TRP, respectively, for example, if $F_{7,1}$ is set to 1 and $F_{7,2}$ is set to 1. TCI state ID N-1 and TCI state ID N (e.g., as described herein in FIG. 19B) may indicate and/or identify TCI state 61 and TCI state 26, respectively. TCI state 61 may be a first TCI state based on a first octet (e.g., Octet N+2) comprising TCI state ID N-1 that may indicate and/or identify TCI state 61 being smaller (e.g., lower, less than, etc.) than a second octet (e.g., Octet N+3) comprising TCI state ID N that may indicate and/or identify TCI state 26. TCI state 26 may be a second TCI state based on a first octet (e.g., Octet N+2) comprising TCI state ID N-1 that may indicate and/or identify TCI state 61 being smaller (e.g., lower, less than, etc.) than a second octet (e.g., Octet N+3) comprising TCI state ID N that may indicate and/or identify TCI state 26. The first TCI state (e.g., TCI state 61) in TCI codepoint 111 may be associated with $F_{7,1}$. The second TCI state (e.g., TCI state 26) in TCI codepoint 111 may be associated with $F_{7,2}$. TCI state ID N-1 may indicate and/or identify TCI state 61 that may be associated with $F_{7,1}$. TCI state ID N may indicate and/or identify TCI state 26 that may be associated with $F_{7,2}$.

A fourth field (e.g., R as described herein in FIG. 19A and FIG. 19B) of a plurality of fields may be a reserved bit. The reserved bit, for example, may be set to zero.

A first activation command 1740 may comprise a plurality of fields. A first field 1905 of the plurality of fields of the first activation command 1740 may be same as the first field 1905 (e.g., Serving Cell ID as described herein in FIG. 19A) of the plurality of fields of the activation command 1740. A second field of the plurality of fields of the first activation command 1740 may be same as the second field (e.g., BWP ID as described herein in FIG. 19A) of the plurality of fields of the activation command 1740.

A third field (e.g., TCI state IDi 1965 as described herein in FIG. 19B) of a plurality of fields of a first activation command 1740 may comprise a TCI state index, identifier, and/or identity (e.g., *TCI-StateId*) identifying a TCI state of the plurality of TCI states. The plurality of TCI state indexes may comprise a TCI state index. Index i may be an index of a codepoint of a *Transmission configuration indication* (TCI) field, for example, in DCI In TCI state IDi. TCI state IDi may be (e.g., denote) a TCI state indicated for an ith codepoint of a *Transmission Configuration Indication* field in DCI. TCI state $ID_0$ may denote the TCI state indicated for a TCI codepoint 000. TCI state $ID_1$, for example, may denote the TCI state indicated for a TCI codepoint 001. The first activation command 1740 may comprise TCI state index(es) of one or more first TCI states. The first activation command 1740 may comprise a respective TCI state index, of the TCI state index(es), of each TCI state of the one or more first TCI states. The plurality of TCI state indexes may comprise the TCI state index(es) of the one or more first TCI states.

A TCI codepoint to which a TCI state may be mapped may be determined, by the wireless device and/or the base station, by an ordinal position of the TCI codepoint among ordinal position(s) of TCI codepoint(s). The first TCI codepoint with TCI state $ID_0$ may be mapped to a codepoint value 0 (e.g., TCI codepoint 000); the second TCI codepoint with TCI state $ID_1$ may be mapped to the codepoint value 1 (e.g., TCI codepoint 001); and so on.

A first TCI codepoint (e.g., TCI codepoint 000) may comprise and/or indicate a TCI state 4. The TCI state 4 may be mapped to the first TCI codepoint (e.g., TCI codepoint 000). A second TCI codepoint (e.g., TCI codepoint 001) may comprise and/or indicate a TCI state 5. The TCI state 5 may be mapped to the second TCI codepoint (e.g., TCI codepoint 001), and so on.

A fourth field (e.g., Coreset pool index) of a plurality of fields of a first activation command 1740 may comprise and/or be a coreset pool index. The first activation command 1740 may indicate and/or activate one or more first TCI states for a first coreset pool index that may be equal to zero, for example, if the fourth field is set and/or equal to zero (e.g., *CoresetPoolIndex* = 0). The one or more first TCI states may be associated with (e.g., correspond to) the first coreset pool index that may be equal to zero. A wireless device may receive downlink receptions associated with the first coreset pool index, for example, based on the one or more first TCI states. The wireless device may send (e.g., transmit) uplink transmissions associated with the first coreset pool index, for example, based on the one or more first TCI states.

A second activation command 1740 may comprise a plurality of fields. A first field 1905 of a plurality of fields of a second activation command 1740 may be same as a first field 1905 (e.g., Serving Cell ID as described herein in FIG. 19A) of the plurality of fields of the activation command 1740. A second field of the plurality of fields of the second activation command 1740 may be same as the second field (e.g., BWP ID as described herein in FIG. 19A) of the plurality of fields of the activation command 1740. A third field (e.g., TCI state $ID_i$) of the plurality of fields of the second activation command 1740 may comprise a TCI state index, identifier, and/or identity (e.g., *TCI-StateId*) identifying a TCI state of the plurality of TCI states. The plurality of TCI state indexes may comprise the TCI state index. In TCI state $ID_i$, i may be an index of a codepoint of a *Transmission configuration indication* (TCI) field in DCI. TCI state $ID_i$ may be (e.g., denote) a TCI state indicated for the $i^{th}$ codepoint in/of a *Transmission Configuration Indication* field in DCI. For example, TCI state $ID_0$ may denote the TCI state indicated for a TCI codepoint 000. TCI state $ID_1$ may denote the TCI state indicated for a TCI codepoint 001. The second activation command 1740 may comprise TCI state index(es) of the one or more second TCI states. The second activation command 1740 may comprise a respective TCI state index, of the TCI state index(es), of each TCI state of the one or more second TCI states. The plurality of TCI state indexes may comprise the TCI state index(es) of the one or more second TCI states.

A TCI codepoint to which a TCI state may be mapped to may be determined, by the wireless device and/or the base station, by an ordinal position of the TCI codepoint among ordinal position(s) of TCI codepoint(s). A first TCI codepoint with TCI state $ID_0$ may be mapped to the codepoint value 0 (e.g., TCI codepoint 000); a second TCI codepoint with TCI state $ID_1$ may be mapped to the codepoint value 1 (e.g., TCI codepoint 001); and so on.

A first TCI codepoint (e.g., TCI codepoint 000) may comprise and/or indicate a TCI state 8. The TCI state 8 may be mapped to the first TCI codepoint (e.g., TCI codepoint 000). A second TCI codepoint (e.g., TCI codepoint 001) may comprise and/or indicate a TCI state 14. The TCI state 14 may be mapped to the second TCI codepoint (e.g., TCI codepoint 001), and so on.

A fourth field (e.g., Coreset pool index) of a plurality of fields of a second activation command 1740 may comprise and/or be a coreset pool index. The second activation command 1740 may indicate and/or activate one or more second TCI states for a second coreset pool index that may be equal to one, for example, if the fourth field is set and/or equal to one (e.g., *CoresetPoolIndex* = 1). The one or more second TCI states may be associated with (e.g., correspond to) a second coreset pool index that may be equal to one. A wireless device may receive downlink receptions associated with the second coreset pool index, for example, based on the one or more second TCI states. The wireless device may send (e.g., transmit) uplink transmissions associated with the second coreset pool index, for example, based on the one or more second TCI states.

A wireless device may receive one or more control commands (e.g., Control command as described herein in FIG. 18B). The one or more control commands may be a control command (e.g., a single control command, one control command, etc.). The one or more control commands may be a control command (e.g., Control command as described herein in FIG. 18B), for example, if the one or more configuration parameters do not indicate two different values of coreset pool index for coreset(s) in a downlink BWP of a cell. The one or more configuration parameters may not comprise one or more PDCCH configuration parameters (e.g., *PDCCH-Config)* that contain and/or comprise two different values of a higher layer parameter *CORESETPoolIndex* in different coresets (e.g., *ControlResourceSets)* of the downlink BWP of the cell.

A control command may be, for example, a MAC-CE. The control command may be, for example, DCI (e.g., DCI format 1_2/1_2). The control command may be, for example, a downlink control command (e.g., activation command).

A control command (e.g., Control command as described herein in FIG. 18B) may indicate at least two TCI states of the subset of TCI states 1745, for example, for a cell. The at least two TCI states may comprise a first TCI state and a second TCI state. The first TCI state may be for and/or associated with a first TRP. The second TCI state may be for and/or associated with a second TRP. The one or more configuration parameters may comprise the list of downlink-or-joint TCI states parameter (e.g., *dl-OrJointTCI-StateList*) of the cell. The wireless device may have the at least two TCI states for the cell, for example, based on the control command indicating, for the cell, the at least two TCI states.

A control command may indicate at least two TCI states, for example, for downlink receptions (e.g., PDCCH, PDSCH, CSI-RS) via a cell. A control command may indicate at least two TCI states, for example, for uplink transmissions (e.g., PUCCH, PUSCH, SRS) via the cell.

A number of one or more TCI codepoints may be equal to one (e.g., a single TCI codepoint). A single TCI codepoint may indicate at least two TCI states. A control command may indicate that the at least two TCI states may be an activation command 1740 activating a subset of TCI states 1745, for example, based on the number of the one or more TCI codepoints being equal to one. The at least two TCI states may be the subset of TCI states 1745, for example, based on the number of the one or more TCI codepoints being equal to one. The activation command 1740 may indicate the at least two TCI states, for example, based on the number of the one or more TCI codepoints being equal to one. The control command may be, for example, a MAC-CE.

A number of one or more TCI codepoints may be more than one. A control command that may indicate at least two TCI states may be different from an activation command 1740 that may activate a subset of TCI states 1745, for example, based on the number of the one or more TCI codepoints being more than one. The wireless device may receive the control command after receiving the activation command 1740. The control command may be, for example, DCI (e.g., DCI format 1_2/1_2). The control command (e.g., DCI format 1_1/1_2) may comprise a TCI field indicating the at least two TCI states. A value of the TCI field (e.g., '111') may be equal to a TCI codepoint (e.g., TCI codepoint 111 as described herein in FIG. 17), of the one or more TCI codepoints, indicating the at least two TCI states (e.g., TCI state 26 and TCI state 61 as described herein in FIG. 17). The control command may indicate the TCI codepoint, for example, for the TCI field. The at least two TCI states may be mapped to the TCI codepoint.

One or more control commands may be at least two control commands. The one or more control commands may be at least two control commands, for example, if the one or more configuration parameters indicate two different values of coreset pool index for coreset(s) in a downlink BWP of a cell. The one or more configuration parameters may comprise one or more PDCCH configuration parameters (e.g., *PDCCH-Config)* that contain and/or comprise two different values of a higher layer parameter *CORESETPoolIndex* in different coresets (e.g., *ControlResourceSets)* of the downlink BWP of the cell. The at least two control commands may comprise a first control command and a control command.

A first control command may be a first MAC-CE. The first control command may be first DCI (e.g., DCI format 1_1, DCI format 1_2). The first control command may be a first downlink control command (e.g., activation command). The second control command may be a second MAC-CE. The second control command may be second DCI (e.g., DCI format 1_1, DCI format 1_2). The second control command may be a second downlink control command (e.g., activation command).

One or more control commands, or at least two control commands, may indicate at least two TCI states of a subset of TCI states 1745. The at least two TCI states may comprise a first TCI state and a second TCI state. The first control command may indicate the first TCI state of the at least two TCI states. The one or more first TCI states associated with a first coreset pool index may comprise the first TCI state. The first TCI state may be associated with a higher layer parameter *coresetPoolIndex* with value 0. The first TCI state may be for and/or associated with a first TRP. The second control command may indicate a second TCI state of the at least two TCI states. The one or more second TCI states associated with the second coreset pool index may comprise the second TCI state. The second TCI state may be associated with a higher layer parameter *coresetPoolIndex* with value 1. The second TCI state may be for and/or associated with a second TRP.

A number of one or more first TCI codepoints may be equal to one (e.g., a single TCI codepoint). A single TCI codepoint may indicate a first TCI state. A first control command that may indicate the first TCI state may be a first activation command 1740 activating the one or more first TCI states, for example, based on the number of the one or more first TCI codepoints being equal to one. The first TCI state may be the one or more first TCI states, for example, based on the number of the one or more first TCI codepoints being equal to one. The first activation command 1740 may indicate the first TCI state, for example, based on the number of the one or more first TCI codepoints being equal to one.

A number of one or more first TCI codepoints may be more than one. A first control command that may indicate a first TCI state may be different from a first activation command 1740 activating the one or more first TCI states, for example, based on the number of the one or more first TCI codepoints being more than one. A wireless device may receive the first control command, for example, after, or in response to, receiving the first activation command 1740. The first control command (e.g., DCI) may comprise a TCI field indicating the first TCI state. A value of the TCI field may be equal to a first TCI codepoint, of the one or more first TCI codepoints, indicating the first TCI state. The first TCI state may be mapped to the first TCI codepoint.

A number of one or more second TCI codepoints may be equal to one (e.g., a single TCI codepoint). A single TCI codepoint may indicate a second TCI state. A second control command that may indicate the second TCI state may be a second activation command 1740 activating the one or more second TCI states, for example, based on the number of the one or more second TCI codepoints being equal to one. The second TCI state may be the one or more second TCI states, for example, based on the number of the one or more second TCI codepoints being equal to one. The second activation command 1740 may indicate the second TCI state, for example, based on the number of the one or more second TCI codepoints being equal to one.

A number of one or more second TCI codepoints may be more than one. A second control command that may indicate the second TCI state may be different from a second activation command 1740 that may activate one or more second TCI states, for example, based on the number of the one or more second TCI codepoints being more (e.g., greater) than one. A wireless device may receive the second control command, for example, after, or in response to, receiving the second activation command 1740. The second control command (e.g., DCI) may comprise a TCI field that may indicate a second TCI state. A value of the TCI field may be equal to a second TCI codepoint, of the one or more second TCI codepoints, that may indicate the second TCI state. The second TCI state may be mapped to a second TCI codepoint.

At least two TCI states may be, for example, at least two joint TCI states. The at least two TCI states may be, for example, at least two downlink TCI states. The at least two TCI states may be, for example, at least two uplink TCI states.

A first TCI state may comprise and/or indicate a first reference signal (e.g., CSI-RS, SSB/PBCH block, DM-RS, SRS, etc.). The first TCI state may comprise and/or indicate a first quasi co-location type (e.g., QCL TypeA, QCL TypeB, QCL TypeC, QCL TypeD).

A second TCI state may comprise and/or indicate a second reference signal (e.g., CSI-RS, SSB/PBCH block, DM-RS, SRS, etc.). The second TCI state may comprise and/or indicate a second quasi co-location type (e.g., QCL TypeA, QCL TypeB, QCL TypeC, QCL TypeD).

A wireless device may receive, via a first cell, DCI (e.g., DCI as described herein in FIG. 18A and FIG. 18B). The wireless device may receive, via and/or in the search space set of the first cell, the DCI. The DCI may be, for example, DCI format 1_3. The DCI may schedule one or more PDSCH receptions via one or more cells. The one or more cells may comprise a cell. The DCI may schedule each PDSCH reception of the one or more PDSCH receptions via a respective cell of the one or more cells. The DCI may schedule a first PDSCH reception of the one or more PDSCH receptions, for example, via a first cell of the one or more cells. The DCI may schedule a second PDSCH reception of the one or more PDSCH receptions via a second cell of the one or more cells.

Also, or alternatively, the DCI may be, for example, DCI format 0_3. The DCI may schedule one or more PUSCH transmissions via one or more cells. The one or more cells may comprise the cell. The DCI may schedule each PUSCH transmission of the one or more PUSCH transmissions via a respective cell of the one or more cells. The DCI may schedule a first PUSCH transmission of the one or more PUSCH transmissions, for example, via a first cell of the one or more cells. The DCI may schedule a second PUSCH transmission of the one or more PUSCH transmissions via a second cell of the one or more cells. A first cell may be, for example, a scheduling cell. The one or more cells may be, for example, one or more scheduled cells. The one or more cells may comprise the first cell. Alternatively, the one or more cells may not comprise the first cell.

DCI may schedule a PDSCH reception via a cell. The one or more PDSCH receptions may comprise the PDSCH reception via the cell. The DCI may schedule the PDSCH reception, for example, based on the DCI indicating resources for the PDSCH reception via the cell. The DCI may schedule the PDSCH reception, for example, based on the DCI comprising one or more fields (e.g., TDRA field, MCS field, FDRA field, BWP index, HARQ process index, etc.) used by the wireless device for the PDSCH reception via the cell. The DCI may schedule a PUSCH transmission via the cell. The one or more PUSCH transmissions may comprise the PUSCH transmission via the cell. The DCI may schedule the PUSCH transmission, for example, based on the DCI indicating resources for the PUSCH transmission via the cell. The DCI may schedule the PUSCH transmission, for example, based on the DCI comprising one or more fields (e.g., TDRA field, MCS field, FDRA field, BWP index, HARQ process index, etc.) used by the wireless device for the PUSCH transmission via the cell.

A number of one or more sets of cells (e.g., *MC-DCI-SetOfCells)* may be more (e.g., greater) than one. The DCI may comprise a scheduled cell set indicator field, for example, if the number of the one or more sets of cells is greater than one. A value of the scheduled cell set indicator field may indicate a set of cells (e.g., a scheduled cell set) among the one or more sets of cells. The value of the scheduled cell set indicator field may be, for example, equal to a set of cell's identifier, identity, and/or index (e.g., *setOfCellsId*) indicating and/or identfying the set of cells. The one or more set of cell identifiers, identities, and/or indexes (e.g., *setOfCellsId*) may comprise the set of cell's identifier, identity, and/or index.

A set of cells may be (e.g., interchangeably used with) a scheduled cell set. A number of one or more sets of cells (e.g., *MC-DCI-SetOfCells*) may be equal to one. The one or more sets of cells may be a set of cells. DCI may not comprise a scheduled cell set indicator field, for example, if the number of the one or more sets of cells is equal to one. The list-of-set-of-cells parameter may indicate the set of cells. The set of cells may be the one or more sets of cells indicated by the list-of-set-of-cells parameter.

A set of cells may comprise and/or indicate at least two cells (e.g., indicated by *scheduledCellListDCI-1-3,* indicated by *scheduledCellListDCI-0-3).* The one or more configuration parameters may comprise a scheduling cell list parameter (e.g., *scheduledCellListDCI-1-3, scheduledCellListDCI-0-3)* that may indicate the at least two cells for the set of cells. The set of cells may comprise and/or indicate Cell 1, Cell 2, and Cell 3, for example, as described herein in FIG. 17. The at least two cells in the set of cells may comprise and/or indicate Cell 1, Cell 2, and Cell 3, for example, as described herein in FIG. 17.

One or more configuration parameters may comprise a list of scheduled cell combinations parameter (e.g., *ScheduledCellCombo-ListDCI-1-3*) indicating a table 1710 (e.g., Scheduled cell combo list/table as described herein in FIG. 17) for combinations of the at least two cells in the set of cells (e.g., a set of cells, co-scheduled cells, etc.) for downlink scheduling via DCI with a DCI format (e.g., DCI format 1_3).

One or more configuration parameters may comprise a list of scheduled cell combinations parameter (e.g., *ScheduledCellCombo-ListDCI-0-3*) indicating a table 1710 (e.g., Scheduled cell combo list/table as described herein in FIG. 17) for combinations of the at least two cells in the set of cells (e.g., a set of cells, co-scheduled cells, etc.) for uplink scheduling via the DCI with a DCI format (e.g., DCI format 0_3).

A table 1710 (e.g., Scheduled cell combo list/table as described herein in FIG. 17) may comprise one or more entries (e.g., rows). A number of entries and/or rows in the table indicated by the list of scheduled cell combinations parameter may be more (e.g., greater) than one. A number of the one or more entries in the table may be more (e.g., greater) than one. The DCI may comprise a scheduled cells indicator field, for example, if the number is more (e.g., greater) than one. A value of the scheduled cells indicator field may indicate an entry in the table. The one or more entries may comprise the entry. The entry may indicate the one or more cells scheduled by the DCI (e.g., DCI format 1_3, DCI format 0_3). The entry may indicate the one or more cells in the set of cells (e.g., a scheduled cell set). The at least two cells in the set of cells may comprise the one or more cells.

One or more cells may be Cell 1, Cell 2, and Cell 3, for example, if the scheduled cells indicator field in DCI indicates entry 2 in Scheduled cell combo list/table as described herein in FIG. 17. The one or more cells may be Cell 2 and Cell 3, for example, if the scheduled cells indicator field in the DCI indicates entry M-1 in Scheduled cell combo list/table as described herein in FIG. 17. The one or more cells may be Cell 3, for example, if the scheduled cells indicator field in the DCI indicates entry M in Scheduled cell combo list/table as described herein in FIG. 17.

DCI may comprise one or more frequency domain resource assignment (FDRA) fields for one or more cells. Each FDRA field of the one or more FDRA fields may be for a respective cell of the one or more cells. A number of the one or more FDRA fields may be equal to a number of the one or more cells indicated by the scheduled cells indicator field.

A number of entries and/or rows in a table indicated by a list of scheduled cell combinations parameter may be equal to one. A number of the one or more entries in the table may be equal to one. DCI may not comprise a scheduled cells indicator field, for example, based on if the number is equal to one. The one or more entries in the table may be an entry The entry may be a single entry in the table. The entry may indicate the one or more cells scheduled by DCI (e.g., DCI format 1_3, DCI format 0_3). The list of scheduled cell combinations parameter may indicate the entry that indicates the one or more cells. The entry may indicate the one or more cells in a set of cells (e.g., a scheduled cell set). The at least two cells in the set of cells may comprise the one or more cells. A number of the one or more FDRA fields may be equal to a number of the one or more cells indicated by the list of scheduled cell combinations parameter.

One or more configuration parameters may not comprise a list of scheduled cell combinations parameter (e.g., *ScheduledCellCombo-ListDCI-1-3, ScheduledCellCombo-ListDCI-0-3*) for the set of cells (e.g., a scheduled cell set). DCI may not comprise a scheduled cells indicator field, for example, based on the one or more configuration parameters not comprising a list of scheduled cell combinations parameter.

DCI may comprise at least two frequency domain resource assignment (FDRA) fields for the set of cells (e.g., at least two cells in a set of cells). Each FDRA field of the at least two FDRA fields may be for a respective cell of at least two cells. The DCI may comprise the at least two FDRA fields for the set of cells, for example, based on the one or more configuration parameters not comprising a list of scheduled cell combinations parameter. A number of the at least two FDRA fields may be equal to a number of cells in the set of cells. A number of the at least two FDRA fields may be equal to a number of the at least two cells. The at least two FDRA fields may indicate the one or more cells scheduled by the DCI. The at least two FDRA fields of the DCI may indicate that the one or more cells among the at least two cells in the set of cells may be scheduled.

Each FDRA field of at least two FDRA fields may indicate, for example, if a respective cell in a set of cells is scheduled by the DCI or not. Each FDRA field of the at least two FDRA fields may indicate, for example, if a respective cell of the at least two cells is scheduled by the DCI or not. Each FDRA field of the at least two FDRA fields may correspond to and/or be associated with a respective cell in the set of cells (e.g., of the at least two cells).

DCI may not schedule a cell in a set of cells (e.g., at least two cells), for example, based on an FDRA field, of at least two FDRA fields, if the cell is set to zero (e.g., '0') for resource allocation type 0, set to one (e.g., '1') for resource allocation type 1, or set to zero (e.g., '0') or one ('1') for dynamic switch resource allocation type. DCI may schedule a cell in a set of cells (e.g., at least two cells), for example, based on an FDRA field, of the at least two FDRA fields, of the cell not being set to zero (e.g., '0') for resource allocation type 0, or not being set to one (e.g., '1') for resource allocation type 1, or not being set to zero (e.g., '0') and one ('1') for dynamic switch resource allocation type. DCI may schedule a cell in a set of cells (e.g., at least two cells), for example, based on an FDRA field, of at least two FDRA fields, if the cell is set to a value different from zero (e.g., '0') for resource allocation type 0, set to a value different from one (e.g., '1') for resource allocation type 1, or set to a value different from zero (e.g., '0') and one ('1') for dynamic switch resource allocation type.

DCI may comprise a TCI field. A value of the TCI field may indicate an entry (e.g., row) in the TCI table 1720 (e.g., TCI list/table as described herein in FIG. 17). The one or more entries in the TCI table may comprise the entry. The entry may comprise and/or indicate at least two TCI codepoints or TCI indexes for a set of cells (e.g., at least two cells). The entry may comprise and/or indicate, for each cell of the at least two cells in the set of cells, a respective TCI codepoint of the at least two TCI codepoints or a respective TCI index of the at least two TCI indexes.

A value of the TCI field (e.g., TCI field = '001' as described herein in FIG. 18A), for example, may indicate entry 2 in the TCI table as described herein in FIG. 17. Entry 2 may indicate and/or comprise TCI codepoint 010 for Cell 1, TCI codepoint 111 for Cell 2, and TCI codepoint 101 for Cell 3.

At least two TCI codepoints in an entry may comprise a TCI codepoint of a cell. One or more TCI codepoints of the cell may comprise the TCI codepoint (e.g., TCI codepoint 111 as described herein in FIG. 17). The TCI codepoint may be TCI codepoint 111, for example, if the cell is Cell 2 and the value of the TCI field of the DCI indicates entry 2 in the TCI table. The TCI codepoint may be TCI codepoint 100, for example, if the cell is Cell 2 and the value of the TCI field of the DCI indicates entry N in the TCI table. The TCI codepoint may be TCI codepoint 001, for example, if the cell is Cell 1 and the value of the TCI field of the DCI indicates entry 1 in the TCI table.

DCI may indicate a TCI codepoint for a PDSCH reception via a cell. one or more configuration parameters may not comprise a list of downlink-or-joint TCI states parameter (e.g., *dl-OrJointTCI-State List)* of the cell. The TCI codepoint (e.g., TCI codepoint 111 as described herein in FIG. 17) of the cell may indicate at least two TCI states (e.g., TCI state 26 and TCI state 61). A subset of TCI states 1745 may comprise at least two TCI states. The at least two TCI states may comprise a first TCI state and a second TCI state. The at least two TCI states may be, for example, at least two joint TCI states. The at least two TCI states may be, for example, at least two downlink TCI states. The at least two TCI states may be, for example, at least two uplink TCI states.

A first TCI state may comprise and/or indicate a first reference signal (e.g., CSI-RS, SSB/PBCH block, DM-RS, SRS, etc.). The first TCI state may comprise and/or indicate a first quasi co-location type (e.g., QCL TypeA, QCL TypeB, QCL TypeC, QCL TypeD).

A second TCI state may comprise and/or indicate a second reference signal (e.g., CSI-RS, SSB/PBCH block, DM-RS, SRS, etc.). The second TCI state may comprise and/or indicate a second quasi co-location type (e.g., QCL TypeA, QCL TypeB, QCL TypeC, QCL TypeD).

A wireless device may receive DCI (e.g., DCI as described herein in FIG. 18B), for example, after, or in response to, a control command (e.g., Control command as described herein in FIG. 18B) indicating at least two TCI states for the cell, if the one or more configuration parameters comprise a list of downlink-or-joint TCI states parameter (e.g., *dl-OrJointTCI-StateList)* of the cell. The wireless device may receive the DCI (e.g., DCI as described herein in FIG. 18B), for example, after, or in response to, application of the at least two TCI states indicated by the control command (e.g., Control command as described herein in FIG. 18B), for example, if the one or more configuration parameters comprise the list of downlink-or-joint TCI states parameter (e.g., *dl-OrJointTCI-StateList)* of the cell. The DCI may be different from the control command.

A wireless device may receive, via a cell, a PDSCH reception, for example, based on and/or using a TCI state of (e.g., among) the at least two TCI states. The wireless device may use and/or apply the TCI state for and/or to the PDSCH reception via the cell.

Receiving a PDSCH reception, for example, based on a TCI state may comprise receiving the PDSCH reception using the TCI state. Receiving the PDSCH reception, for example, based on the TCI state may comprise applying the TCI state to (e.g., for) the PDSCH reception. The TCI state may be (e.g., used with) a default TCI state.

A wireless device may receive, via a cell, a PDSCH reception, for example, based on a TCI state of at least two TCI states, and, after, or in response to, the at least two TCI states being indicated to the wireless device. A wireless device may receive, via the cell, the PDSCH reception, for example, based on the TCI state of the at least two TCI states, for example, in response to the wireless device being indicated with and/or having the at least two TCI states for the cell. A wireless device may receive, via a cell, a PDSCH reception, for example, based on a TCI state of at least two TCI states, and in response to the control command (e.g., Control command as described herein in FIG. 18B) indicating, for the cell, the at least two TCI states.

A wireless device may receive, via a cell, a PDSCH reception, for example, based on a TCI state of at least two TCI states, and in response to a control command (e.g., Control command as described herein in FIG. 18B) indicating, for the cell, the at least two TCI states, and if the one or more configuration parameters comprise a list of downlink-or-joint TCI states parameter (e.g., *dl-OrJointTCI-StateList)* of the cell. A wireless device may receive, via a cell, a PDSCH reception scheduled by DCI (e.g., DCI format 1_3), for example, based on a TCI state of at least two TCI states, and in response to a control command (e.g., Control command as described herein in FIG. 18B) indicating, for the cell, the at least two TCI states, and if the one or more configuration parameters comprise a list of downlink-or-joint TCI states parameter (e.g., *dl-OrJointTCI-StateList)* of the cell.

A wireless device may receive, via a cell, a PDSCH reception, for example, based on a TCI state of at least two TCI states, and in response to the wireless device being indicated with the at least two TCI states in a TCI codepoint of a TCI field in DCI. A wireless device may receive, via a cell, a PDSCH reception, for example, based on a TCI state of at least two TCI states, and in response to the TCI field in DCI indicating the TCI codepoint that may indicate and/or be mapped to the at least two TCI states. A wireless device may receive, via a cell, a PDSCH reception, for example, based on a TCI state of at least two TCI states, and in response to DCI indicating, for the TCI field, the TCI codepoint that may indicate and/or be mapped to the at least two TCI states.

A wireless device may receive, via a cell, a PDSCH reception, for example, based on a TCI state of at least two TCI states, and in response to a TCI field in DCI indicating a TCI codepoint that may indicate and/or be mapped to the at least two TCI states, and if the one or more configuration parameters do not comprise a list of downlink-or-joint TCI states parameter (e.g., *dl-OrJointTCI-StateList)* of the cell.

A wireless device may receive, via a cell, a PDSCH reception scheduled by DCI, for example, based on a TCI state of at least two TCI states, and in response to a TCI field in the DCI indicating a TCI codepoint that may indicate and/or be mapped to the at least two TCI states, and if the one or more configuration parameters do not comprise a list of downlink-or-joint TCI states parameter (e.g., *dl-OrJointTCI-StαteList)* of the cell.

A wireless device may receive, via a cell, a PDSCH reception scheduled by DCI, for example, based on a TCI state of at least two TCI states, and in response to the DCI indicating, for a TCI field, a TCI codepoint that may indicate and/or be mapped to the at least two TCI states, and if the one or more configuration parameters do not comprise a list of downlink-or-joint TCI states parameter (e.g., *dl-OrJointTCI-StateList)* of the cell.

At least one DM-RS port (e.g., DM-RS antenna port) of a PDSCH reception may be quasi co-located with a reference signal indicated by a TCI state. The at least one DM-RS port of the PDSCH reception may be quasi co-located with the reference signal with respect to a quasi co-location type indicated by the TCI state.

At least one DM-RS port (e.g., DM-RS antenna port) of the PDSCH reception may be quasi co-located with a first reference signal indicated by a first TCI state, for example, if a TCI state is the first TCI state (e.g., TCI state 26). The at least one DM-RS port of the PDSCH reception may be quasi co-located with the first reference signal with respect to the first quasi co-location type indicated by the first TCI state.

At least one DM-RS port (e.g., DM-RS antenna port) of a PDSCH reception may be quasi co-located with a second reference signal indicated by a second TCI state, for example, if the TCI state is the second TCI state (e.g., TCI state 61). The at least one DM-RS port of the PDSCH reception may be quasi co-located with the second reference signal with respect to the second quasi co-location type indicated by the second TCI state.

A wireless device may receive a PDSCH reception with and/or using a spatial domain reception (e.g., receiving) filter. The wireless device may receive the PDSCH reception with and/or using the spatial domain reception (e.g., receiving) filter that may be determined, for example, based on a reference signal indicated by the TCI state. The wireless device may receive the PDSCH reception with and/or using the spatial domain reception (e.g., receiving) filter that may be the substantially the same as a spatial domain reception (e.g., receiving) filter that may be used to receive the reference signal indicated by the TCI state. The wireless device may determine the spatial domain reception (e.g., receiving) filter used to receive the PDSCH reception, for example, based on the reference signal indicated by the TCI state.

A wireless device may send (e.g., transmit), via a cell, a PUSCH transmission, for example, based on and/or using a TCI state of at least two TCI states. The wireless device may use and/or apply the TCI state for the PUSCH transmission via the cell.

Sending (e.g., transmitting) a PUSCH transmission, for example, based on a TCI state may comprise sending (e.g., transmitting) the PUSCH transmission using the TCI state. Sending (e.g., transmitting) the PUSCH transmission, for example, based on the TCI state may comprise applying the TCI state to (e.g., for) the PUSCH transmission. A TCI state may be (e.g., be used with) a default TCI state.

A wireless device may send (e.g., transmit), via a cell, a PUSCH transmission, for example, based on a TCI state of at least two TCI states, and in response to the wireless device being indicated with and/or having the at least two TCI states. A wireless device may send (e.g., transmit), via a cell, a PUSCH transmission, for example, based on a TCI state of at least two TCI states, and in response to the wireless device being indicated with and/or having the at least two TCI states for the cell. A wireless device may send (e.g., transmit), via a cell, a PUSCH transmission, for example, based on a TCI state of at least two TCI states, and in response to a control command (e.g., Control command as described herein in FIG. 18B) indicating, for the cell, the at least two TCI states. A wireless device may send (e.g., transmit), via a cell, a PUSCH transmission, for example, based on a TCI state of at least two TCI states, and in response to a control command (e.g., Control command as described herein in FIG. 18B) indicating, for the cell, the at least two TCI states, and if the one or more configuration parameters comprise a list of downlink-or-joint TCI states parameter (e.g., *dl-OrJointTCI-StateList)* of the cell. A wireless device may send (e.g., transmit), via a cell, a PUSCH transmission scheduled by DCI (e.g., DCI format 0_3), for example, based on a TCI state of at least two TCI states, and in response to a control command (e.g., Control command as described herein in FIG. 18B) indicating, for the cell, the at least two TCI states, and if the one or more configuration parameters comprise a list of downlink-or-joint TCI states parameter (e.g., *dl-OrJointTCI-StateList)* of the cell.

A wireless device may send (e.g., transmit) a PUSCH transmission with and/or using a spatial domain transmission (e.g., transmit) filter. The wireless device may send (e.g., transmit) the PUSCH transmission with and/or using the spatial domain transmission (e.g., transmit) filter that may be determined, for example, based on a reference signal indicated by a TCI state. The wireless device may send (e.g., transmit) the PUSCH transmission with and/or using the spatial domain transmission (e.g., transmit) filter that may be substantially the same as a spatial domain reception (e.g., receiving) filter used to receive the reference signal indicated by the TCI state. The wireless device may determine the spatial domain transmission (e.g., transmit) filter used to send (e.g., transmit) the PUSCH transmission, for example, based on the reference signal indicated by the TCI state. The wireless device may determine the spatial domain transmission (e.g., transmit) filter used to send (e.g., transmit) the PUSCH transmission, for example, based on the spatial domain reception (e.g., receiving) filter used to receive the reference signal indicated by the TCI state.

A wireless device may send (e.g., transmit) a PUSCH transmission with and/or using a transmission power that may be determined, for example, based on a TCI state. The wireless device may determine (e.g., calculate) a transmission power, for example, based on one or more power control parameters (e.g., pathloss reference signal, pathloss compensation factor, target received power, closed-loop index) associated with (e.g., mapped to, included in, and/or indicated by) the TCI state. The one or more configuration parameters may indicate (e.g., map) the one or more power control parameters for and/or to the TCI state.

A wireless device may send (e.g., transmit) a PUSCH transmission with and/or using a first spatial domain transmission (e.g., transmit) filter determined, for example, based on the first reference signal indicated by the first TCI state, and if the TCI state is the first TCI state (e.g., TCI state 26). The wireless device may send (e.g., transmit) the PUSCH transmission with and/or using a first transmission power determined, for example, based on one or more first power control parameters (e.g., pathloss reference signal, pathloss compensation factor, target received power, closed-loop index) associated with (e.g., mapped to, included in, and/or indicated by) the first TCI state.

A wireless device may send (e.g., transmit) a PUSCH transmission with and/or using a second spatial domain transmission (e.g., transmit) filter determined, for example, based on the second reference signal indicated by the second TCI state, and if the TCI state is the second TCI state (e.g., TCI state 61). The wireless device may send (e.g., transmit) the PUSCH transmission with and/or using a second transmission power determined, for example, based on one or more second power control parameters (e.g., pathloss reference signal, pathloss compensation factor, target received power, closed-loop index) associated with (e.g., mapped to, included in, and/or indicated by) the second TCI state.

One or more configuration parameters may indicate, for at least two TCI states, at least two TCI state indexes, identifiers, and/or identities (e.g., *TCI-StateId).* A plurality of TCI state indexes, identifiers, and/or identities may comprise the at least two TCI state indexes, identifiers, and/or identities. The one or more configuration parameters may indicate, for each TCI state of the at least two TCI states, a respective TCI state index, identifier, and/or identity of the at least two TCI state indexes, identifiers, and/or identities. The one or more configuration parameters may indicate a first TCI state index, identifier, and/or identity of the at least two TCI state indexes, identifiers, and/or identities, for example, for a first TCI state of the at least two TCI states. The one or more configuration parameters may indicate, for a second TCI state of the at least two TCI states, a second TCI state index, identifier, and/or identity of the at least two TCI state indexes, identifiers, and/or identities.

A TCI state may be indicated and/or identified with a TCI state index, identifier, and/or identity (e.g., *TCI-StateId)* that may be a lowest (e.g., smallest, least, etc.) among at least two TCI state indexes, identifiers, and/or identities of the at least two TCI states. The at least two TCI state indexes, identifiers, and/or identities of at least two TCI states may comprise a TCI state index, identifier, and/or identity of the TCI state. The TCI state index, identifier, and/or identity of the TCI state may be lowest (e.g., smallest, least, etc.) among the at least two TCI state indexes, identifiers, and/or identities of the at least two TCI states. The TCI state index of the TCI state may be lowest (e.g., smallest, least, etc.) among the first TCI state index of the first TCI state and the second TCI state index of the second TCI state.

A wireless device may receive, via a cell, a PDSCH reception, for example, based on the TCI state of at least two TCI states, and in response to a TCI state index, identifier, and/or identity of the TCI state being lowest (e.g., smallest, least, etc.) among the at least two TCI state indexes, identifiers, and/or identities of the at least two TCI states. A wireless device may send (e.g., transmit), via a cell, a PUSCH transmission, for example, based on a TCI state of at least two TCI states, and in response to a TCI state index, identifier, and/or identity of the TCI state being lowest (e.g., smallest, least, etc.) among at least two TCI state indexes, identifiers, and/or identities of the at least two TCI states.

A TCI state may be a first TCI state, for example, based on a first TCI state index, identifier, and/or identity of the first TCI state being lower (e.g., smaller, less, etc.) than a second TCI state index, identifier, and/or identity of a second TCI state. The wireless device may receive, via the cell, the PDSCH reception, for example, based on the first TCI state, and in response to the first TCI state index, identifier, and/or identity of the first TCI state being lower (e.g., smaller, less, etc.) than the second TCI state index, identifier, and/or identity of the second TCI state. The wireless device may send (e.g., transmit), via the cell, the PUSCH transmission, for example, based on the first TCI state, and in response to the first TCI state index, identifier, and/or identity of the first TCI state being lower (e.g., smaller, less, etc.) than the second TCI state index, identifier, and/or identity of the second TCI state.

A TCI state may be a second TCI state, for example, based on a second TCI state index, identifier, and/or identity of the second TCI state being lower (e.g., smaller, less, etc.) than a first TCI state index, identifier, and/or identity of a first TCI state. The wireless device may receive, via the cell, the PDSCH reception, for example, based on the second TCI state, and in response to the second TCI state index, identifier, and/or identity of the second TCI state being lower (e.g., smaller, less, etc.) than the first TCI state index, identifier, and/or identity of the first TCI state. The wireless device may send (e.g., transmit), via the cell, the PUSCH transmission, for example, based on the second TCI state, and in response to the second TCI state index, identifier, and/or identity of the second TCI state being lower (e.g., smaller, less, etc.) than the first TCI state index, identifier, and/or identity of the first TCI state.

A TCI state may be a first TCI state. A wireless device may receive, via a cell, a PDSCH reception, for example, based on the first TCI state of at least two TCI states. The wireless device may send (e.g., transmit), via the cell, the PUSCH transmission, for example, based on the first TCI state of the at least two TCI states.

A first TCI state index, identifier, and/or identity indicating and/or identifying a first TCI state of at least two TCI states in a TCI codepoint may be (e.g., occur, be located, etc.) in a first octet of the activation command 1740 indicating activation of the subset of TCI states 1745. The second TCI state index, identifier, and/or identity indicating and/or identifying the second TCI state of the at least two TCI states in the TCI codepoint may be (e.g., occur, be located, etc.) in a second octet of the activation command 1740 indicating activation of the subset of TCI states 1745.

A first octet may be lower (e.g., smaller, less, etc.) than a second octet. The first octet may be Octet 5, and the second octet may be Octet 6. The first octet may be Octet 1, and the second octet may be Octet 2. The first octet may be Octet 9, and the second octet may be Octet 10. A base station may order a first TCI state index and a second TCI state index based on an ordinal position in an activation command 1740. Octet n of an activation command 1740 comprises the first TCI state index indicating and/or identifying the first TCI state, and Octet m of the activation command 1740 comprises the second TCI state index indicating and/or identifying the second TCI state, where $n \leq m$.

A first TCI state may be indicated and/or identified by TCI state $ID_{0,1}$ in Octet 2, and a second TCI state may be indicated and/or identified by TCI state $ID_{0,2}$ in Octet 3, for example, if the TCI codepoint comprising and/or indicating the at least two TCI states is TCI codepoint 000 (e.g., as described herein in FIG. 19A). TCI state $ID_{0,1}$ may be the first TCI state index indicating and/or identifying the first TCI state. TCI state $ID_{0,2}$ may be the second TCI state index indicating and/or identifying the second TCI state.

A first TCI state may be indicated and/or identified by TCI state $ID_{N,1}$ in Octet M-1, and a second TCI state may be indicated and/or identified by TCI state $ID_{N,2}$ in Octet M, for example, if the TCI codepoint comprising and/or indicating the at least two TCI states is TCI codepoint N (e.g., as described herein in FIG. 19A). TCI state $ID_{N,1}$ may be the first TCI state index indicating and/or identifying the first TCI state. TCI state $ID_{N,2}$ may be the second TCI state index indicating and/or identifying the second TCI state.

A first TCI state may be indicated and/or identified by TCI state ID 1 in Octet 4, and a second TCI state may be indicated and/or identified by TC state ID 2 1970 in Octet 5, for example, if the TCI codepoint comprising and/or indicating the at least two TCI states is TCI codepoint 000 (e.g., as described herein in FIG. 19B). TCI state ID 1 may be the first TCI state index indicating and/or identifying the first TCI state. TC state ID 2 1970 may be the second TCI state index indicating and/or identifying the second TCI state.

A first TCI state may be indicated and/or identified by TCI state ID N-1 in Octet N+2, and a second TCI state may be indicated and/or identified by TCI state ID N in Octet N+3, for example, if the TCI codepoint comprising and/or indicating the at least two TCI states is TCI codepoint N (e.g., as described herein in FIG. 19B). TCI state ID N-1 may be the first TCI state index indicating and/or identifying the first TCI state. TCI state ID N may be the second TCI state index indicating and/or identifying the second TCI state.

A TCI state may be a first TCI state, for example, based on a first octet comprising and/or indicating a first TCI state index of the first TCI state being lower (e.g., smaller, less, etc.) than a second octet comprising and/or indicating a second TCI state index of the second TCI state. A TCI state may be a first TCI state, for example, based on a first TCI state index of a first TCI state having a higher ordinal position (e.g., lower octet in the activation command) than the second TCI state index of the second TCI state. A TCI state may be a first TCI state, for example, based on a first TCI state index of a first TCI state having a lower ordinal position (e.g., lower octet in the activation command) than a second TCI state index of a second TCI state.

A wireless device may receive, via a cell, a PDSCH reception, for example, based on a first TCI state of at least two TCI states, and in response to a first octet comprising and/or indicating a first TCI state index of the first TCI state being lower (e.g., smaller, less, etc.) than a second octet comprising and/or indicating a second TCI state index of a second TCI state. A wireless device may receive, via a cell, a PDSCH reception, for example, based on a first TCI state of at least two TCI states, and in response to the first TCI state index of the first TCI state having a higher ordinal position (e.g., lower octet in the activation command) than the second TCI state index of the second TCI state. A wireless device may receive, via a cell, a PDSCH reception, for example, based on a first TCI state of at least two TCI states, and in response to a first TCI state index of the first TCI state having a lower ordinal position (e.g., lower octet in the activation command) than a second TCI state index of a second TCI state.

A wireless device may send (e.g., transmit), via a cell, a PUSCH transmission, for example, based on a first TCI state of at least two TCI states, and in response to a first octet comprising and/or indicating a first TCI state index of the first TCI state being lower (e.g., smaller, less, etc.) than a second octet comprising and/or indicating a second TCI state index of a second TCI state. A wireless device may send (e.g., transmit), via a cell, a PUSCH transmission, for example, based on a first TCI state of the at least two TCI states, and in response to a first TCI state index of the first TCI state having a higher ordinal position (e.g., lower octet in the activation command) than a second TCI state index of a second TCI state. A wireless device may send (e.g., transmit), via a cell, a PUSCH transmission, for example, based on a first TCI state of at least two TCI states, and in response to a first TCI state index of the first TCI state having a lower ordinal position (e.g., lower octet in the activation command) than a second TCI state index of a second TCI state.

A TCI state may be a first TCI state. A wireless device may receive, via a cell, a PDSCH reception, for example, based on a first TCI state of at least two TCI states. The wireless device may send (e.g., transmit), via the cell, the PUSCH transmission, for example, based on the first TCI state of the at least two TCI states.

An activation command 1740 may indicate activation of a subset of TCI states 1745 that may indicate, map, and/or activate a list (e.g., set, vector, etc.) of at least two TCI states to (e.g., in, for, etc.) a TCI codepoint of one or more TCI codepoints. The activation command 1740 may indicate a mapping, an association, and/or an activation of the list (e.g., set, vector, etc.) of the at least two TCI states to (e.g., for) the TCI codepoint. The at least two TCI states may comprise a first TCI state and a second TCI state.

A first TCI state may occur first in a list (e.g., set, vector, etc.) of at least two TCI states. The first TCI state may be a first (e.g., starting, earliest, initial, etc.) TCI state in a list (e.g., set, vector, etc.) of the at least two TCI states. A second TCI state may occur second in the list (e.g., set, vector, etc.) of the at least two TCI states. The second TCI state may be a last (e.g., latest, ending, final, etc.) TCI state in the list (e.g., set, vector, etc.) of the at least two TCI states. A first TCI state may be TCI state 5 and a second TCI state may be TCI state 8, for example, if the list (e.g., set, vector, etc.) of the at least two TCI states = [TCI state 5, TCI state 8] . A first TCI state may be TCI state 26 and the second TCI state may be TCI state 61, for example, if the list (e.g., set, vector, etc.) of the at least two TCI states = [TCI state 26, TCI state 61] .

A first TCI state may occur first in a TCI codepoint indicating \ at least two TCI states. The first TCI state may be a first (e.g., starting, earliest, initial, etc.) TCI state in the TCI codepoint indicating the at least two TCI states. A second TCI state may occur second in the TCI codepoint indicating the at least two TCI states. The second TCI state may be a last (e.g., latest, ending, final, etc.) TCI state in the TCI codepoint indicating the at least two TCI states. The first TCI state may be TCI state 5 and the second TCI state may be TCI state 8, for example, if the TCI codepoint = [TCI state 5, TCI state 8] . The first TCI state may be TCI state 26 and the second TCI state may be TCI state 61, for example, if the TCI codepoint = [TCI state 26, TCI state 61] .

A TCI state may be a first TCI state, for example, based on a first TCI state occurring first in a list (e.g., set, vector, etc.) of at least two TCI states. The TCI state may be the first TCI state, for example, based on the first TCI state occurring first in the TCI codepoint.

A wireless device may receive, via a cell, a PDSCH reception, for example, based on a first TCI state of at least two TCI states, and in response to the first TCI state occurring first in the list (e.g., set, vector, etc.) of the at least two TCI states. The wireless device may receive, via the cell, the PDSCH reception, for example, based on the first TCI state of the at least two TCI states, and in response to the first TCI state occurring first in the TCI codepoint indicating the at least two TCI states.

A wireless device may send (e.g., transmit), via a cell, a PUSCH transmission, for example, based on a first TCI state of at least two TCI states, and in response to the first TCI state occurring first in the list (e.g., set, vector, etc.) of the at least two TCI states. The wireless device may send (e.g., transmit), via the cell, the PUSCH transmission, for example, based on the first TCI state of the at least two TCI states, and in response to the first TCI state occurring first in the TCI codepoint indicating the at least two TCI states.

One or more configuration parameters may comprise a parameter (e.g., *applyIndicatedTCIState, applyIndicatedTCI-StateDCI-1-3, applyIndicatedTCI-StateDCI-0-3,* etc.) with a value indicating a TCI state. A wireless device may receive, via a cell, a PDSCH reception, for example, based on the TCI state of at least two TCI states, and in response to the one or more configuration parameters comprising the parameter with the value indicating the TCI state. The wireless device may receive, via the cell, the PDSCH reception, for example, based on the TCI state of the at least two TCI states, and in response to the value of the parameter indicating the TCI state.

A wireless device may send (e.g., transmit), via a cell, a PUSCH transmission, for example, based on a TCI state of at least two TCI states, and in response to one or more configuration parameters comprising a parameter with a value indicating the TCI state. The wireless device may send (e.g., transmit), via the cell, the PUSCH transmission, for example, based on the TCI state of the at least two TCI states, and in response to the value of the parameter indicating the TCI state.

A parameter (e.g., field) may indicate whether to apply a first TCI state or a second TCI state to (e.g., for) PDSCH reception(s) scheduled by a DCI format (e.g., DCI format 1_3). The DCI format may be different from DCI format 1_0. The parameter (e.g., field) may indicate whether to apply the first TCI state or the second TCI state to (e.g., for) PUSCH transmission(s) scheduled by a DCI format (e.g., DCI format 0_3).

A parameter (e.g., field) may indicate whether to apply a first TCI state or a second TCI state to (e.g., for) PUSCH transmission(s) scheduled by DCI format 0_3 being different from the parameter (e.g., field) indicating whether to apply the first TCI state or the second TCI state to (e.g., for) PDSCH reception(s) scheduled by the DCI format 1_3. The parameter (e.g., field) may indicate whether to apply the first TCI state or the second TCI state to (e.g., for) PUSCH transmission(s) scheduled by the DCI format 0_3 being the same as the parameter (e.g., field) indicating whether to apply the first TCI state or the second TCI state to (e.g., for) PDSCH reception(s) scheduled by the DCI format 1_3.

A value of a parameter may be equal to a first value (e.g., 0, 'first'). A TCI state may be a first TCI state, for example, based on the value of the parameter being equal to a first value. A wireless device may receive, via a cell, a PDSCH reception, for example, based on the first TCI state of at least two TCI states, and in response to the value of the parameter being equal to the first value. The wireless device may send (e.g., transmit), via the cell, the PUSCH transmission, for example, based on the first TCI state of the at least two TCI states, and in response to the value of the parameter being equal to the first value.

A value of a parameter may be equal to a second value (e.g., 1, 'second'). A TCI state may be a second TCI state, for example, based on the value of the parameter being equal to a second value. The wireless device may receive, via the cell, the PDSCH reception, for example, based on the second TCI state of at least two TCI states, and in response to the value of the parameter being equal to the second value. The wireless device may send (e.g., transmit), via the cell, the PUSCH transmission, for example, based on the second TCI state of the at least two TCI states, and in response to the value of the parameter being equal to the second value.

One or more configuration parameters may comprise a parameter (e.g., *applyIndicatedTCIState, applyIndicatedTCI-StateDCI-I-3, applyIndicatedTCI-StateDCI-0-3,* etc.). The parameter may be present in the one or more configuration parameters.

A TCI state may be a first TCI state, for example, based on one or more configuration parameters comprising a parameter. The TCI state may be the first TCI state, for example, based on the parameter being present in the one or more configuration parameters.

A wireless device may receive, via a cell, a PDSCH reception, for example, based on a first TCI state of at least two TCI states, and in response to one or more configuration parameters comprising a parameter. The wireless device may receive, via the cell, the PDSCH reception, for example, based on the first TCI state of the at least two TCI states, and in response to the parameter being present in the one or more configuration parameters.

A wireless device may send (e.g., transmit), via a cell, a PUSCH transmission, for example, based on a first TCI state of at least two TCI states, and in response to one or more configuration parameters comprising a parameter. The wireless device may send (e.g., transmit), via the cell, the PUSCH transmission, for example, based on the first TCI state of the at least two TCI states, and in response to the parameter being present in the one or more configuration parameters.

A TCI state may be a second TCI state, for example, based on one or more configuration parameters comprising a parameter. The TCI state may be the second TCI state, for example, based on the parameter being present in the one or more configuration parameters.

A wireless device may receive, via a cell, a PDSCH reception, for example, based on a second TCI state of at least two TCI states, and in response to one or more configuration parameters comprising a parameter. The wireless device may receive, via the cell, the PDSCH reception, for example, based on the second TCI state of the at least two TCI states, and in response to the parameter being present in the one or more configuration parameters.

A wireless device may send (e.g., transmit), via a cell, a PUSCH transmission, for example, based on a second TCI state of at least two TCI states, and in response to one or more configuration parameters comprising a parameter. The wireless device may send (e.g., transmit), via the cell, the PUSCH transmission, for example, based on the second TCI state of the at least two TCI states, and in response to the parameter being present in the one or more configuration parameters.

One or more configuration parameters may not comprise a parameter (e.g., *applyIndicatedTCIState, applyIndicatedTCI-StateDCI-1-3, applyIndicatedTCI-StateDCI-0-3,* etc.). The parameter may be absent (e.g., not present) in the one or more configuration parameters.

A TCI state may be a first TCI state, for example, based on one or more configuration parameters not comprising a parameter. The TCI state may be the first TCI state, for example, based on the parameter being absent in the one or more configuration parameters.

A wireless device may receive, via a cell, a PDSCH reception, for example, based on a first TCI state of at least two TCI states, and in response to one or more configuration parameters not comprising a parameter. The wireless device may receive, via the cell, the PDSCH reception, for example, based on the first TCI state of the at least two TCI states, and in response to the parameter being absent in the one or more configuration parameters.

A wireless device may send (e.g., transmit), via a cell, a PUSCH transmission, for example, based on a first TCI state of at least two TCI states, and in response to one or more configuration parameters not comprising a parameter. The wireless device may send (e.g., transmit), via the cell, the PUSCH transmission, for example, based on the first TCI state of the at least two TCI states, and in response to the parameter being absent in the one or more configuration parameters.

A TCI state may be a second TCI state, for example, based on one or more configuration parameters not comprising a parameter. The TCI state may be the second TCI state, for example, based on the parameter being absent in the one or more configuration parameters.

A wireless device may receive, via a cell, a PDSCH reception, for example, based on a second TCI state of at least two TCI states, and in response to the one or more configuration parameters not comprising a parameter. The wireless device may receive, via the cell, the PDSCH reception, for example, based on the second TCI state of the at least two TCI states, and in response to the parameter being absent in the one or more configuration parameters.

A wireless device may send (e.g., transmit), via a cell, a PUSCH transmission, for example, based on a second TCI state of at least two TCI states, and in response to the one or more configuration parameters not comprising a parameter. The wireless device may send (e.g., transmit), via the cell, the PUSCH transmission, for example, based on the second TCI state of the at least two TCI states, and in response to the parameter being absent in the one or more configuration parameters.

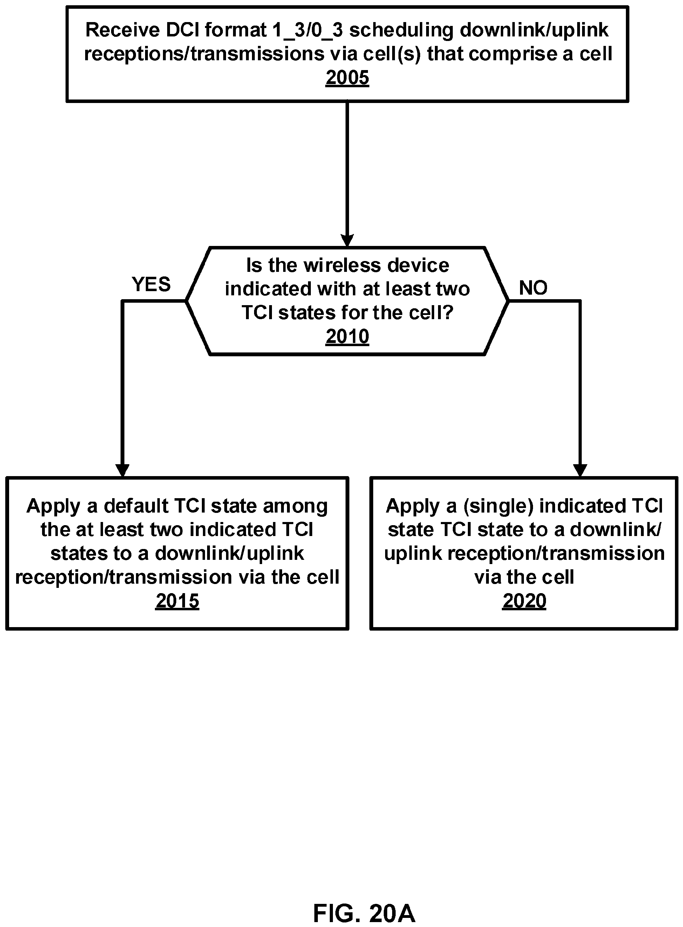

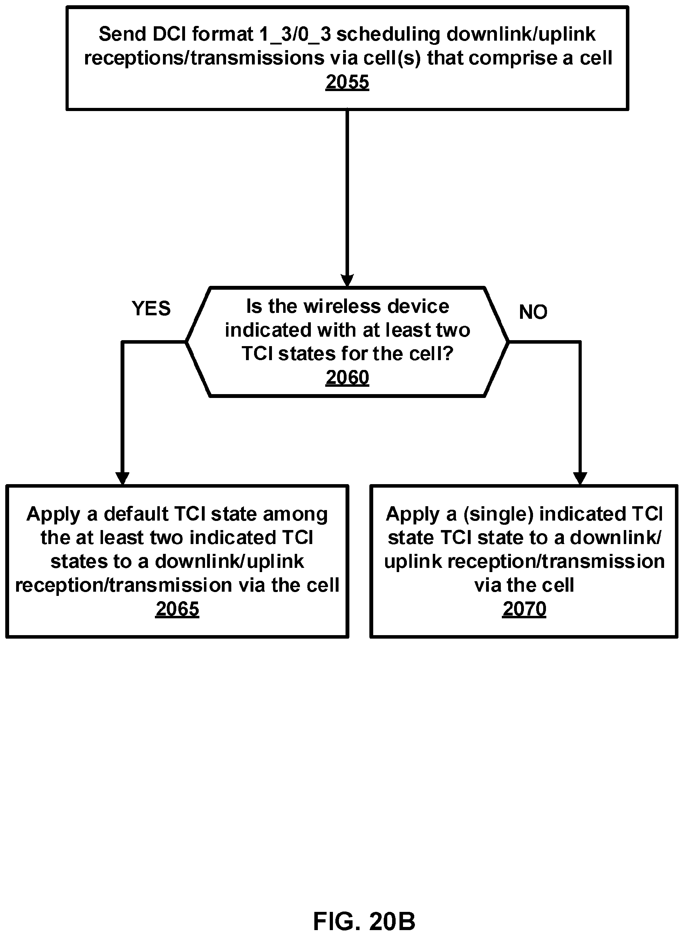

FIGS. 20A and 20B show examples of flow charts of cell scheduling.

A wireless device may receive one or more messages comprising one or more configuration parameters. A base station may send (e.g., transmit), to the wireless device, the one or more messages. The one or more configuration parameters may indicate a plurality of TCI states for a cell.

The wireless device may receive a medium-access control (MAC) control element (CE) indicating mapping of a subset of TCI states 1745 of the plurality of TCI states to one or more TCI codepoints. The base station may send (e.g., transmit) the MAC-CE.

In step 2005, The wireless device may receive DCI (e.g., DCI format 1_3) scheduling one or more PDSCH receptions via one or more cells that comprise the cell. In step 2055, the base station may send (e.g., transmit) the DCI. The DCI may schedule each PDSCH reception of the one or more PDSCH receptions via and/or for a respective cell of the one or more cells. The DCI may schedule a PDSCH reception of the one or more PDSCH receptions via and/or for the cell.

The wireless device may receive DCI (e.g., DCI format 0_3) scheduling one or more PUSCH transmissions via one or more cells that comprise the cell. The base station may send (e.g., transmit) the DCI. The DCI may schedule each PUSCH transmission of the one or more PUSCH transmissions via and/or for a respective cell of the one or more cells. The DCI may schedule a PUSCH transmission of the one or more PUSCH transmissions via and/or for the cell.

A TCI codepoint of the one or more TCI codepoints may indicate at least two TCI states of the subset of TCI states 1745. In step 2015, the wireless device may receive, via the cell, the PDSCH reception using a TCI state among the at least two TCI states, for example, based on the wireless device being indicated with the at least two TCI states in step 210. In step 2065, The base station may send (e.g., transmit), via the cell, the PDSCH reception using the TCI state among the at least two TCI states for example, based on the wireless device being indicated with the at least two TCI states in step 2060.

In step 2015, the wireless device may receive, via the cell, the PDSCH reception, for example, based on a TCI state among the at least two TCI states and in response to the wireless device being indicated with the at least two TCI states, in step 2010. In step 2065, the base station may send (e.g., transmit), via the cell, the PDSCH reception, for example, based on the TCI state among the at least two TCI states and in response to the wireless device being indicated with the at least two TCI states, in step 2060.

The wireless device may determine, for the PDSCH reception, the TCI state among the at least two TCI states, for example, based on one or more criteria as described herein in FIG. 18A and FIG. 18B (e.g., the lowest TCI state index, the first TCI state, the parameter indicating the TCI state, etc.). The base station may determine, for the PDSCH reception by the wireless device, the TCI state among the at least two TCI states, for example, based on one or more criteria as described herein in FIG. 18A and FIG. 18B (e.g., the lowest TCI state index, the first TCI state, the parameter indicating the TCI state, etc.).

The base station may determine, for transmission of the PDSCH reception by the wireless device, the TCI state among the at least two TCI states, for example, based on one or more criteria as described herein in FIG. 18A and FIG. 18B (e.g., the lowest TCI state index, the first TCI state, the parameter indicating the TCI state, etc.). The base station may send (e.g., transmit), to the wireless device, the PDSCH reception with a spatial domain transmission (e.g., transmit) filter determined, for example, based on a reference signal indicated by the TCI state.

The wireless device may send (e.g., transmit), via the cell, the PUSCH transmission using a TCI state among the at least two TCI states, for example, based on the wireless device being indicated with the at least two TCI states. The base station may receive, via the cell, the PUSCH transmission using the TCI state among the at least two TCI states, for example, based on the wireless device being indicated with the at least two TCI states.

The wireless device may send (e.g., transmit), via the cell, the PUSCH transmission, for example, based on a TCI state among the at least two TCI states and in response to the wireless device being indicated with the at least two TCI states. The base station may receive, via the cell, the PUSCH transmission, for example, based on the TCI state among the at least two TCI states and in response to the wireless device being indicated with the at least two TCI states.

The wireless device may determine, for the PUSCH transmission, the TCI state among the at least two TCI states, for example, based on one or more criteria as described herein in FIG. 18A and FIG. 18B (e.g., the lowest TCI state index, the first TCI state, the parameter indicating the TCI state, etc.). The base station may determine, for the PUSCH transmission by the wireless device, the TCI state among the at least two TCI states, for example, based on one or more criteria as described herein in FIG. 18A and FIG. 18B (e.g., the lowest TCI state index, the first TCI state, the parameter indicating the TCI state, etc.).

The base station may determine, for reception of the PUSCH transmission by the wireless device, the TCI state among the at least two TCI states, for example, based on one or more criteria as described herein in FIG. 18A and FIG. 18B (e.g., the lowest TCI state index, the first TCI state, the parameter indicating the TCI state, etc.). The base station may receive, from the wireless device, the PUSCH transmission with a spatial domain reception (e.g., receiving) filter determined, for example, based on a reference signal indicated by the TCI state.

The one or more configuration parameters may not comprise a list of downlink-or-joint TCI states parameter (e.g., *dl-OrJointTCI-StateList*) of the cell. The DCI may comprise a TCI field with a value indicating the TCI codepoint for the PDSCH reception via the cell. The DCI may indicate, for the TCI field in the DCI, the TCI codepoint indicating the at least two TCI states.

The wireless device may receive the PDSCH reception, for example, based on and/or using the TCI state of the at least two TCI states, and in response to the wireless device being indicated with the at least two TCI states in the TCI codepoint of the TCI field in the DCI. The base station may send (e.g., transmit), to the wireless device, the PDSCH reception, for example, based on and/or using the TCI state of the at least two TCI states, and in response to the wireless device being indicated, by the base station, with the at least two TCI states in the TCI codepoint of the TCI field in the DCI.

The one or more configuration parameters may comprise a list of downlink-or-joint TCI states parameter (e.g., *dl-OrJointTCI-StateList*) of the cell. The wireless device may receive a control command (e.g., MAC-CE, DCI) indicating the TCI codepoint that indicates the at least two TCI states. The base station may send (e.g., transmit) the control command.

The control command may be a MAC-CE, for example, if a number of the one or more TCI codepoints is one. The one or more TCI codepoints may be the TCI codepoint.

The control command may be DCI format 1_1/1_2 different from the DCI. The control command may be DCI format 1_1/1_2, for example, if a number of the one or more TCI codepoints is greater/more than one. The wireless device may receive the DCI format 1_1/1_2 before receiving the DCI. The DCI format 1_1/1_2 may comprise a TCI field with a value indicating the TCI codepoint for the cell (or for downlink receptions via the cell). The DCI format 1_1/1_2 may indicate, for the TCI field in the DCI, the TCI codepoint.

The wireless device may receive the PDSCH reception, for example, based on and/or using the TCI state of the at least two TCI states, and in response to the wireless device being indicated, by the control command, with the at least two TCI states for the cell. The wireless device may receive the PDSCH reception, for example, based on and/or using the TCI state of the at least two TCI states, and in response to the wireless device having the at least two TCI states, for the cell, indicated by the control command.

The base station may send (e.g., transmit), to the wireless device, the PDSCH reception, for example, based on and/or using the TCI state of the at least two TCI states, and in response to the wireless device being indicated, by the control command, with the at least two TCI states for the cell. The base station may send (e.g., transmit), to the wireless device, the PDSCH reception, for example, based on and/or using the TCI state of the at least two TCI states, and in response to the wireless device having the at least two TCI states, for the cell, indicated by the control command.

The wireless device may send (e.g., transmit) the PUSCH transmission, for example, based on and/or using the TCI state of the at least two TCI states, and in response to the wireless device being indicated, by the control command, with the at least two TCI states for the cell. The wireless device may send (e.g., transmit) the PUSCH transmission, for example, based on and/or using the TCI state of the at least two TCI states, and in response to the wireless device having the at least two TCI states, for the cell, indicated by the control command.

The base station may receive, from the wireless device, the PUSCH transmission, for example, based on and/or using the TCI state of the at least two TCI states, and in response to the wireless device being indicated, by the control command, with the at least two TCI states for the cell. The base station may receive, from the wireless device, the PUSCH transmission, for example, based on and/or using the TCI state of the at least two TCI states, and in response to the wireless device having the at least two TCI states, for the cell, indicated by the control command.

A TCI codepoint of the one or more TCI codepoints may indicate a TCI state of the subset of TCI states 1745. The TCI state may be the single TCI state in the TCI codepoint. The TCI codepoint may not indicate a second TCI state different from the TCI state.

In step 2020, the wireless device may receive, via the cell, the PDSCH reception using the TCI state, for example, based on the wireless device being indicated with the TCI state (e.g., single TCI state) in step 2010. In step 2070, the base station may send (e.g., transmit), via the cell, the PDSCH reception using the TCI state, for example, based on the wireless device being indicated with the TCI state (e.g., single TCI state) in step 2060.

The one or more configuration parameters may not comprise a list of downlink-or-joint TCI states parameter (e.g., *dl-OrJointTCI-StateList*) of the cell. The DCI may comprise a TCI field with a value indicating the TCI codepoint for the PDSCH reception via the cell. The DCI may indicate, for the TCI field in the DCI, the TCI codepoint indicating the TCI state.

The wireless device may receive the PDSCH reception, for example, based on and/or using the TCI state, and in response to the wireless device being indicated with the TCI state in the TCI codepoint of the TCI field in the DCI. The base station may send (e.g., transmit), to the wireless device, the PDSCH reception, for example, based on and/or using the TCI state, and in response to the wireless device being indicated, by the base station, with the TCI state in the TCI codepoint of the TCI field in the DCI.

The one or more configuration parameters may comprise a list of downlink-or-joint TCI states parameter (e.g., *dl-OrJointTCI-StateList*) of the cell. The wireless device may receive a control command (e.g., MAC-CE, DCI) indicating the TCI codepoint that indicates the TCI state (e.g., single TCI state). The base station may send (e.g., transmit) the control command.

The wireless device may receive the PDSCH reception, for example, based on and/or using the TCI state, and in response to the wireless device being indicated, by the control command, with the TCI state for the cell. The wireless device may receive the PDSCH reception, for example, based on and/or using the TCI state, and in response to the wireless device having the TCI state, for the cell, indicated by the control command.

The base station may send (e.g., transmit), to the wireless device, the PDSCH reception, for example, based on and/or using the TCI state, and in response to the wireless device being indicated, by the control command, with the TCI state for the cell. The base station may send (e.g., transmit), to the wireless device, the PDSCH reception, for example, based on and/or using the TCI state, and in response to the wireless device having the TCI state, for the cell, indicated by the control command.

The wireless device may send (e.g., transmit) the PUSCH transmission, for example, based on and/or using the TCI state, and in response to the wireless device being indicated, by the control command, with the TCI state for the cell. The wireless device may send (e.g., transmit) the PUSCH transmission, for example, based on and/or using the TCI state, and in response to the wireless device having the TCI state, for the cell, indicated by the control command.

The base station may receive, from the wireless device, the PUSCH transmission, for example, based on and/or using the TCI state, and in response to the wireless device being indicated, by the control command, with the TCI state for the cell. The base station receive, from the wireless device, the PUSCH transmission, for example, based on and/or using the TCI state, and in response to the wireless device having the TCI state, for the cell, indicated by the control command.

The wireless device may apply the first TCI state of the two TCI states to the PDSCH reception scheduled and/or activated by the DCI format 1_3, for example, if a wireless device is not configured with a higher layer parameter *dl-OrJointTCI-StateList* for a scheduled cell is indicated with two TCI states by (e.g., in) a TCI codepoint of *'Transmission Configuration Indication'* field in DCI format 1_3 that schedules and/or activates a PDSCH reception for, via, and/or on the scheduled cell.

The wireless device may apply the first joint (e.g., joint downlink) TCI state of the two indicated joint (e.g., joint downlink) TCI states to the PDSCH reception scheduled and/or activated by the DCI format 1_3, for example, if a wireless device configured with a higher layer parameter *dl-OrJointTCI-StateList* has two indicated joint (e.g., joint downlink) TCI states for a scheduled cell, and the wireless device receives DCI format 1_3 scheduling a PDSCH reception for, via, and/or on the scheduled cell. The wireless device may apply the first joint (e.g., joint downlink) TCI state of the two indicated joint (e.g., joint downlink) TCI states to the PDSCH reception scheduled and/or activated by the DCI format 1_3, for example, if a wireless device configured with a higher layer parameter *dl-OrJointTCI-StateList* for a scheduled cell has two indicated joint (e.g., joint downlink) TCI states for the scheduled cell, and the wireless device receives DCI format 1_3 scheduling a PDSCH reception for, via, and/or on the scheduled cell.

The wireless device may apply the first TCI state of the two TCI states to the PDSCH reception scheduled and/or activated by the DCI format 1_3, for example, if a wireless device receives RRC message(s) not comprising and/or configuring a higher layer parameter *dl-OrJointTCI-StateList* for a scheduled cell and receives DCI format 1_3 indicating two TCI states, by (e.g., in) a TCI codepoint of *'Transmission Configuration Indication'* field in the DCI format 1_3, for a PDSCH reception for, via, and/or on the scheduled cell.

The wireless device may apply the first joint (e.g., joint downlink) TCI state of the two indicated joint (e.g., joint downlink) TCI states to the PDSCH reception scheduled and/or activated by the DCI format 1_3, for example, if a wireless device receives RRC message(s) comprising and/or configuring a higher layer parameter *dl-OrJointTCI-StateList* for a scheduled cell, receives a control command (e.g., MAC-CE, DCI) indicating two joint (e.g., joint downlink) TCI states for the scheduled cell, and the wireless device receives DCI format 1_3 scheduling a PDSCH reception for, via, and/or on the scheduled cell.

The base station may apply the first TCI state of the two TCI states to transmission of the PDSCH reception to the wireless device, for example, if a base station sends (e.g., transmits), to a wireless device, RRC message(s) not comprising and/or configuring a higher layer parameter *dl-OrJointTCI-StateList* for a scheduled cell and sends (e.g., transmits), to the wireless device, DCI format 1_3 indicating two TCI states, by (e.g., in) a TCI codepoint of *'Transmission Configuration Indication'* field in the DCI format 1_3, for a PDSCH reception for, via, and/or on the scheduled cell.

The base station may apply the first joint (e.g., joint downlink) TCI state of the two indicated joint (e.g., joint downlink) TCI states to transmission of the PDSCH reception to the wireless device, for example, if a base station sends (e.g., transmits), to a wireless device, RRC message(s) comprising and/or configuring a higher layer parameter *dl-OrJointTCI-StateList* for a scheduled cell, sends (e.g., transmits), to the wireless device, a control command (e.g., MAC-CE, DCI) indicating two joint (e.g., joint downlink) TCI states for the scheduled cell, and sends (e.g., transmits) DCI format 1_3 scheduling a PDSCH reception for, via, and/or on the scheduled cell.

The wireless device may apply the first joint (e.g., joint uplink) TCI state of the two indicated joint (e.g., joint uplink) TCI states to the PUSCH transmission scheduled and/or activated by the DCI format 0_3, for example, if a wireless device configured with a higher layer parameter *dl-OrJointTCI-StateList* or a higher layer parameter *ul-TCI-StateList* is having two indicated joint (e.g., joint uplink) TCI states for a scheduled cell, and the wireless device receives DCI format 0_3 scheduling a PUSCH transmission for, via, and/or on the scheduled cell.

The wireless device may apply the first joint (e.g., joint uplink) TCI state of the two indicated joint (e.g., joint uplink) TCI states to the PUSCH transmission scheduled and/or activated by the DCI format 0_3, for example, if a wireless device configured with a higher layer parameter *dl-OrJointTCI-StateList* or a higher layer parameter *ul-TCI-StateList* for a scheduled cell is having two indicated joint (e.g., joint uplink) TCI states for the scheduled cell, and the wireless device receives DCI format 0_3 scheduling a PUSCH transmission for, via, and/or on the scheduled cell.

The wireless device may apply the first joint (e.g., joint uplink) TCI state of the two indicated joint (e.g., joint uplink) TCI states to the PUSCH transmission scheduled and/or activated by the DCI format 0_3, for example, if a wireless device receives RRC message(s) comprising and/or configuring a higher layer parameter *dl-OrJointTCI-StateList* or a higher layer parameter *ul-TCI-StateList* for a scheduled cell, receives a control command (e.g., MAC-CE, DCI) indicating two joint (e.g., joint uplink) TCI states for the scheduled cell, and the wireless device receives DCI format 0_3 scheduling a PUSCH transmission for, via, and/or on the scheduled cell.

The base station may apply the first joint (e.g., joint uplink) TCI state of the two indicated joint (e.g., joint uplink) TCI states to reception of the PUSCH transmission by the wireless device, for example, if a base station sends (e.g., transmits), to a wireless device, RRC message(s) comprising and/or configuring a higher layer parameter *dl-OrJointTCI-StateList* or a higher layer parameter *ul-TCI-StateList* for a scheduled cell, sends (e.g., transmits), to the wireless device, a control command (e.g., MAC-CE, DCI) indicating two joint (e.g., joint uplink) TCI states for the scheduled cell, and sends (e.g., transmits) DCI format 0_3 scheduling a PUSCH transmission for, via, and/or on the scheduled cell.

The base station may not indicate two TCI states for any TCI codepoint in the TCI table. The base station may not transmit an activation command 1740 that may indicate at least two TCI states (e.g., two joint TCI states, two downlink TCI states, two uplink TCI states, etc.) for a TCI codepoint, of a cell, that may occur in the TCI table. The TCI table may comprise and/or indicate at least one TCI codepoint for a cell. The base station may not transmit an activation command 1740 indicating two TCI states for any TCI codepoint of the at least one TCI codepoint of the cell. The base station may transmit an activation command 1740 indicating one TCI state (e.g., one joint TCI state, one downlink TCI state, one uplink TCI state, etc.) for each TCI codepoint of the at least one TCI codepoint of the cell.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device, one or more configuration parameters indicating transmission configuration indicator (TCI) codepoints for a plurality of cells.

Clause 2. The method of clause 1, further comprising receiving downlink control information (DCI) that is configured to schedule one or more physical downlink shared channel (PDSCH) receptions via one or more cells of the plurality of cells, and comprises a TCI field indicating a TCI codepoint, of the TCI codepoints, for each cell of the plurality of cells.

Clause 3. The method of any one of clauses 1-2, further comprising based on the TCI codepoint, for a cell of the one or more cells, indicating two TCI states, receiving, via the cell, a downlink signal using a default TCI state of the two TCI states.

Clause 4. The method of any one of clauses 1-3, wherein the one or more configuration parameters further indicate a plurality of TCI states for the cell of the one or more cells.

Clause 5. The method of any one of clauses 1-4, further comprising receiving a medium-access control (MAC)-control element (CE) indicating mapping of a subset of TCI states, of a plurality of TCI states of the cell of the one or more cells, to one or more TCI codepoints, wherein at least one TCI codepoint of the one or more TCI codepoints indicates two TCI states of the subset of TCI states.

Clause 6. The method of any one of clauses 1-5, wherein the DCI is configured to schedule, via the cell of the one or more cells, a PDSCH reception of the one or more PDSCH receptions.

Clause 7. The method of any one of clauses 1-6, wherein the TCI field indicates the TCI codepoint for the PDSCH reception via the cell of the one or more cells.

Clause 8. The method of any one of clauses 1-7, wherein the receiving the downlink signal using the default TCI state is based on the wireless device being indicated with the two TCI states in the TCI codepoint of the TCI field in the DCI.

Clause 9. The method of any one of clauses 1-8, wherein the one or more configuration parameters comprise a list of a downlink-or-joint TCI states parameter for the cell of the one or more cells.

Clause 10. The method of any one of clauses 1-9, wherein each PDSCH reception of the one or more PDSCH receptions is scheduled for one of the one or more cells.

Clause 11. The method of any one of clauses 1-10, wherein the receiving the downlink signal using the default TCI state is based on the wireless device being indicated with the two TCI states for the cell of the one or more cells.

Clause 12. The method of any one of clauses 1-11, wherein the receiving the downlink signal using the default TCI state comprises applying the default TCI state to the downlink signal.

Clause 13. The method of any one of clauses 1-12, wherein the DCI comprises DCI format 1_3.

Clause 14. The method of any one of clauses 1-13, wherein the default TCI state is a first TCI state, among the two TCI states, that occurs first in a set of the two TCI states.

Clause 15. A wireless device comprising one or more processors and memory storing instructions that, when executed by the one or more processors, cause the wireless device to perform the method of any one of clauses 1-14.

Clause 16. A system comprising: a wireless device configured to perform the method of any one of clauses 1-14, and a base station configured to send the one or more configuration parameters.

Clause 17. A computer-readable medium storing instructions that, when executed, cause performance of the method any one of clauses 1-14.

Clause 18. A method comprising receiving, by a wireless device, one or more configuration parameters indicating a plurality of transmission configuration indicator (TCI) states for a cell, and, for each cell, an association between a codepoint and one or more TCI states for a plurality of cells comprising the cell.

Clause 19. The method of clause 18, further comprising receiving a medium-access control (MAC)-control element (CE) indicating a mapping of a subset of TCI states of the plurality of TCI states to one or more TCI codepoints, wherein a TCI codepoint of the one or more TCI codepoints indicates two TCI states of the subset of TCI states.

Clause 20. The method of any one of clauses 18-19, further comprising receiving downlink control information (DCI) configured to schedule one or more physical downlink shared channel (PDSCH) receptions via one or more cells that comprise the cell.

Clause 21. The method of any one of clauses 18-20, further comprising, based on the wireless device being indicated with the two TCI states, receiving, via the cell, a downlink signal using a default TCI state of the two TCI states.

Clause 22. The method of any one of clauses 18-21, wherein the DCI comprises a TCI field indicating an entry in a TCI table, wherein the entry comprises the TCI codepoint of the cell.

Clause 23. The method of any one of clauses 18-22, wherein each PDSCH is scheduled for a cell.

Clause 24. The method of any one of clauses 18-23, wherein the DCI comprises DCI format 1_3.

Clause 25. A wireless device comprising one or more processors and memory storing instructions that, when executed by the one or more processors, cause the wireless device to perform the method of any one of clauses 18-24.

Clause 26. A system comprising: a wireless device configured to perform the method of any one of clauses 18-24, and a base station configured to send the one or more configuration parameters

Clause 27. A computer-readable medium storing instructions that, when executed, cause performance of the method any one of clauses 18-24.

Clause 28. A method comprising receiving, by a wireless device, one or more configuration parameters indicating a plurality of transmission configuration indicator (TCI) states for a cell.

Clause 29. The method of clause 28, further comprising receiving a medium-access control (MAC)-control element (CE) indicating mapping of a subset of TCI states of the plurality of TCI states of the cell to one or more TCI codepoints, wherein a TCI codepoint of the one or more TCI codepoints indicates two TCI states of the subset of TCI states.

Clause 30. The method of any one of clauses 28-29, further comprising receiving downlink control information (DCI) that is configured to schedule one or more physical downlink shared channel (PDSCH) receptions via one or more cells of a plurality of cells, wherein the one or more cells comprise the cell and comprises a TCI field indicating an entry in a TCI table, wherein the entry comprises the TCI codepoint of the cell.

Clause 31. The method of any one of clauses 28-30, further comprising, based on the TCI codepoint indicating the two TCI states, receiving, via the cell, a downlink signal of the one or more PDSCH receptions using a default TCI state of the two TCI states.

Clause 32. The method of any one of clauses 28-31, wherein each PDSCH is scheduled for a cell.

Clause 33. The method of any one of clauses 28-32, wherein the one or more configuration parameters further indicate a TCI table for a plurality of cells comprising the cell.

Clause 34. The method of any one of clauses 28-33, wherein the DCI comprises a scheduled cell set indicator field when a quantity of one or more sets of cells is greater than one, and a value of the scheduled cell set indicator field indicates a set of cells.

Clause 35. A wireless device comprising one or more processors and memory storing instructions that, when executed by the one or more processors, cause the wireless device to perform the method of any one of clauses 28-34.

Clause 36. A system comprising: a wireless device configured to perform the method of any one of clauses 28-34, and a base station configured to send the one or more configuration parameters.

Clause 37. A computer-readable medium storing instructions that, when executed, cause performance of the method any one of clauses 28-34.

Clause 38. A method comprising receiving, by a wireless device, one or more configuration parameters indicating a plurality of transmission configuration indicator (TCI) states for a cell.

Clause 39. The method of clause 38, further comprising receiving a medium-access control (MAC) control element (CE) indicating mapping of a subset of TCI states of the plurality of TCI states to one or more TCI codepoints, wherein a TCI codepoint of the one or more TCI codepoints indicates two TCI states of the subset of TCI states.

Clause 40. The method of any one of clauses 38-39, further comprising receiving a downlink control information (DCI) format 1_3 scheduling one or more physical downlink shared channel (PDSCH) receptions via one or more cells that comprise the cell.

Clause 41. The method of any one of clauses 38-40, further comprising, based on the wireless device being indicated with the two TCI states, receiving, via the cell, a PDSCH reception of the one or more PDSCH receptions using a default TCI state among the two TCI states.

Clause 42. The method of any one of clauses 38-41, wherein the one or more configuration parameters do not comprise a list of downlink-or-joint TCI states parameter (e.g, *dl-OrJointTCI-StateList*) for/of the cell.

Clause 43. The method of any one of clauses 38-42, further comprising receiving a DCI, different from the DCI format 1_3 and before receiving the DCI format 1_3, that comprises a TCI field with a value indicating the TCI codepoint (or that indicates, for the TCI field, the TCI codepoint) for the cell (or for downlink receptions via the cell).

Clause 44. The method of any one of clauses 38-43, wherein at least one DM-RS port of the PDSCH reception is quasi co-located with a reference signal indicated by the default TCI state.

Clause 45. The method of claim any one of clauses 38-44, wherein the one or more configuration parameters comprise an apply-indicated-TCI state parameter (e.g., *applyIndicatedTCIState, applyIndicatedTCI-StateDCI-1-3*) indicating the default TCI state, wherein the default TCI state is a first TCI state of the two TCI states based on the apply-indicated-TCI state parameter being set to a first value (e.g., 0, 'first') and a second TCI state of the two TCI states based on the apply-indicated-TCI state parameter being set to a second value (e.g., 0, 'second').

Clause 46. The method of any one of clauses 38-45, wherein the one or more configuration parameters comprise a list-of-set-of-cells parameter (e.g., *MC-DCI-SetofCellsToAddModList*) for multi-cell PDSCH/PUSCH scheduling from a serving cell, wherein the list-of-set-of-cells parameter indicates one or more sets of cells (e.g., *MC-DCI-SetOfCells)* comprising a set of cells (or a scheduled cell set) or a list of configurations of one or more sets of cells, wherein a maximum quantity of the one or more sets of cells is reported by the wireless device to a base station.

Clause 47. The method of clause 46, wherein the DCI format 1_3 does not comprise a scheduled cell set indicator field when a quantity of the one or more sets of cells is equal to one, and the set of cells is the one or more set of cells indicated by the list-of-set-of-cells parameter.

Clause 48. The method of clause 46, wherein the DCI format 1_3 does not comprise a scheduled cells indicator field based on the one or more configuration parameters not comprising a list of scheduled cell combinations parameter (e.g., *ScheduledCellCombo-ListDCI-1-3)* for the set of cells (or the scheduled cell set).

Clause 49. The method of clause 46, wherein the one or more configuration parameters comprise a list of scheduled cell combinations parameter (e.g., *ScheduledCellCombo-ListDCI-1-3*) indicating a table for combinations of co-scheduled cells (or the set of cells or cells in the set of cells) for downlink scheduling via DCI format 1_3.

Clause 50. The method of clause 49, wherein the DCI format 1_3 comprises a scheduled cells indicator field indicating an entry/row in the table that indicates the one or more cells in/of the set of cells (or the scheduled cell set), and wherein a quantity of entries/rows in the table indicated by the list of scheduled cell combinations parameter is more than one.

Clause 51. The method of clause 49, wherein a quantity of entries/rows in the table indicated by the list of scheduled cell combinations parameter is one, and wherein the DCI format 1_3 does not comprise a scheduled cells indicator field, and a single entry/row in the table (or the list of scheduled cell combinations parameter) indicates the one or more cells in/of the set of cells (or the scheduled cell set).

Clause 52. The method of clauses 50 or 51, wherein the DCI format 1_3 comprises one or more frequency domain resource assignment (FDRA) fields for the one or more cells, wherein each FDRA field of the one or more FDRA fields is for a respective cell of the one or more cells, and a quantity of the one or more FDRA fields is equal to a quantity of the one or more cells indicated by scheduled cells indicator field or the list of scheduled cell combinations parameter.

Clause 53. The method of any one of clauses 38-52, wherein based on the one or more configuration parameters not comprising a list of scheduled cell combinations parameter (e.g., *ScheduledCellCombo-ListDCI-1-3),* the DCI format 1_3 comprises one or more frequency domain resource assignment (FDRA) fields for the set of cells, wherein each FDRA field of the one or more FDRA fields is for a respective cell of the set of cells, and a quantity of the one or more FDRA fields is equal to a quantity of cells in the set of cells.

Clause 54. The method of clause 53, wherein the one or more FDRA fields of the set of cells indicate the one or more cells are scheduled by the DCI format 1_3.

Clause 55. The method of clause 53, wherein each FDRA field of the one or more FDRA fields indicates whether a respective cell of the set of cells is scheduled by the DCI format 1_3 or not.

Clause 56. The method of clause 55, wherein a cell of the set of cells is not scheduled by the DCI format 1_3 based on an FDRA field, of the one or more FDRA fields, of the cell being set to '0' for resource allocation type 0, '1' for resource allocation type 1, or '0' or '1' for dynamic switch resource allocation type.

Clause 57. The method of clause 55, wherein a cell of the one or more cells is scheduled by the DCI format 1_3 based on an FDRA field, of the one or more FDRA fields, of the cell being set to a value different from '0' for resource allocation type 0, '1' for resource allocation type 1, or '0' and '1' for dynamic switch resource allocation type.

Clause 58. The method of any one of clauses 38-57, wherein the one or more configuration parameters comprise a TCI list parameter (e.g., *tci-ListDCI-1-3*) indicating a TCI table for downlink scheduling via DCI format 1_3.

Clause 59. The method of claim 58, wherein the value of the TCI field indicates an entry/row in the TCI table, wherein the entry/row indicates/comprises the TCI codepoint of the cell.

Clause 60. A wireless device comprising one or more processors and memory storing instructions that, when executed by the one or more processors, cause the wireless device to perform the method of any one of clauses 38-59.

Clause 61. A system comprising: a wireless device configured to perform the method of any one of clauses 38-59, and a base station configured to send the one or more configuration parameters.

Clause 62. A computer-readable medium storing instructions that, when executed, cause performance of the method any one of clauses 38-59.

Clause 63. A method comprising receiving, by a wireless device, one or more configuration parameters indicating a plurality of transmission configuration indicator (TCI) states for a cell.

Clause 64. The method of clause 63, further comprising receiving a medium-access control (MAC) control element (CE) indicating mapping of a subset of TCI states of the plurality of TCI states to one or more TCI codepoints, wherein a TCI codepoint of the one or more TCI codepoints indicates two TCI states of the subset of TCI states.

Clause 65. The method of any one of clauses 63-64, further comprising receiving a downlink control information (DCI) format 0_3 scheduling one or more physical uplink shared channel (PUSCH) transmissions via one or more cells that comprise the cell.

Clause 66. The method of any one of clauses 63-65, further comprising, based on the wireless device being indicated with the two TCI states, transmitting, via the cell, a PUSCH transmission of the one or more PUSCH transmissions using a default TCI state among the two TCI states.

Clause 67. A wireless device comprising one or more processors and memory storing instructions that, when executed by the one or more processors, cause the wireless device to perform the method of any one of clauses 63-66.

Clause 68. A system comprising: a wireless device configured to perform the method of any one of clauses 63-66, and a base station configured to send the one or more configuration parameters.

Clause 69. A computer-readable medium storing instructions that, when executed, cause performance of the method any one of clauses 63-66.

A wireless device may perform a method comprising multiple operations. The wireless device may receive one or more configuration parameters indicating transmission configuration indicator (TCI) codepoints for a plurality of cells. The wireless device may receive downlink control information (DCI). The DCI may be configured to schedule one or more physical downlink shared channel (PDSCH) receptions via one or more cells of the plurality of cells. The DCI may further comprise a TCI field that may indicate a TCI codepoint, of the TCI codepoints, for each cell of the plurality of cells. The wireless device may receive, via the cell, a downlink signal using a default TCI state of two TCI states, based on the TCI codepoint, for a cell of the one or more cells, indicating the two TCI states. The one or more configuration parameters may further indicate a plurality of TCI states for the cell of the one or more cells. The wireless device may receive a medium-access control (MAC)-control element (CE) that may indicate a mapping of a subset of TCI states, of a plurality of TCI states of the cell of the one or more cells, to one or more TCI codepoints. At least one TCI codepoint of the one or more TCI codepoints may indicate two TCI states of the subset of TCI states. The DCI may be configured to schedule, via the cell of the one or more cells, a PDSCH reception of the one or more PDSCH receptions. The TCI field may indicate the TCI codepoint for the PDSCH reception via the cell of the one or more cells. Receiving the downlink signal using the default TCI state may be based on the wireless device being indicated with the two TCI states in the TCI codepoint of the TCI field in the DCI. The one or more configuration parameters may comprise a list of a downlink-or-joint TCI states parameter for the cell of the one or more cells. Each PDSCH reception of the one or more PDSCH receptions is scheduled for one of the one or more cells. Receiving the downlink signal using the default TCI state may be based on the wireless device being indicated with the two TCI states for the cell of the one or more cells. Receiving the downlink signal using the default TCI state may comprise applying the default TCI state to the downlink signal. The default TCI state may be a first TCI state, among the two TCI states, that may occur first in a set of the two TCI states. The DCI may comprise DCI format 1_3. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station. A computer-readable medium may store instructions that, when executed, cause performance of the described method, additional operations, and/or include the additional elements.

A wireless device may perform a method comprising multiple operations. The wireless device may receive one or more configuration parameters that may indicate a plurality of transmission configuration indicator (TCI) states for a cell, and for each cell, an association between a codepoint and one or more TCI states for a plurality of cells comprising the cell. The wireless device may receive a medium-access control (MAC)-control element (CE) that may indicate a mapping of a subset of TCI states of the plurality of TCI states to one or more TCI codepoints. A TCI codepoint of the one or more TCI codepoints may indicate two TCI states of the subset of TCI states. The wireless device may receive downlink control information (DCI) configured to schedule one or more physical downlink shared channel (PDSCH) receptions via one or more cells that comprise the cell. The wireless device may receive, via the cell, a downlink signal using a default TCI state of the two TCI states, based on the wireless device being indicated with the two TCI states. The DCI may comprise a TCI field that may indicate an entry in a TCI table. The entry may comprise the TCI codepoint of the cell. Each PDSCH may be scheduled for a cell. The DCI may comprise DCI format 1_3. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station. A computer-readable medium may store instructions that, when executed, cause performance of the described method, additional operations, and/or include the additional elements.

A wireless device may perform a method comprising multiple operations. The wireless device may receive one or more configuration parameters that may indicate a plurality of transmission configuration indicator (TCI) states for a cell. The wireless device may receive a medium-access control (MAC)-control element (CE) that may indicate mapping of a subset of TCI states of the plurality of TCI states of the cell to one or more TCI codepoints. A TCI codepoint of the one or more TCI codepoints may indicate two TCI states of the subset of TCI states. The wireless device may receive downlink control information (DCI) that may be configured to schedule one or more physical downlink shared channel (PDSCH) receptions via one or more cells of a plurality of cells. The one or more cells may comprise the cell. The DCI may comprise a TCI field that may indicate an entry in a TCI table. The entry may comprise the TCI codepoint of the cell. The wireless device may receive, via the cell, a downlink signal of the one or more PDSCH receptions using a default TCI state of the two TCI states, based on the TCI codepoint indicating the two TCI states. Each PDSCH may be scheduled for a cell. The one or more configuration parameters may further indicate a TCI table for a plurality of cells comprising the cell. The DCI may comprise a scheduled cell set indicator field, for example, if a quantity of one or more sets of cells is greater than one, and a value of the scheduled cell set indicator field indicates a set of cells. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station. A computer-readable medium may store instructions that, when executed, cause performance of the described method, additional operations, and/or include the additional elements.

A wireless device may perform a method comprising multiple operations. The wireless device may receive one or more messages that may comprise one or more configuration parameters that may indicate a plurality of transmission configuration indicator (TCI) states for a cell. The wireless device may receive a medium-access control (MAC) control element (CE) that may indicate a mapping of a subset of TCI states of the plurality of TCI states to one or more TCI codepoints. A TCI codepoint of the one or more TCI codepoints may indicate two TCI states of the subset of TCI states. The wireless device may receive a downlink control information (DCI) format 1_3 that may schedule one or more physical downlink shared channel (PDSCH) receptions via one or more cells that may comprise the cell. The wireless device may receive, via the cell, a PDSCH reception of the one or more PDSCH receptions using a default TCI state among two TCI states, based on the wireless device being indicated with the two TCI states. The one or more configuration parameters may not comprise a list of downlink-or-joint TCI states parameter (e.g, *dl-OrJointTCI-StateList*) for/of the cell. The wireless device may receive DCI, different from the DCI format 1_3 and before receiving the DCI format 1_3, that may comprise a TCI field with a value that may indicate the TCI codepoint for the cell or for downlink receptions via the cell. At least one DM-RS port of the PDSCH reception may be quasi co-located with a reference signal that may be indicated by the default TCI state. The one or more configuration parameters may comprise an apply-indicated-TCI state parameter (e.g., *applyIndicatedTCIState, applyIndicatedTCI-StateDCI-1-3)* that may indicate the default TCI state. The default TCI state may be a first TCI state of the two TCI states based on the apply-indicated-TCI state parameter being set to a first value (e.g., 0, 'first'), or the default TCI state may be a second TCI state of the two TCI states based on the apply-indicated-TCI state parameter being set to a second value (e.g., 0, 'second'). The one or more configuration parameters may comprise a list-of-set-of-cells parameter (e.g., *MC-DCI-SetojCellsToAddModList)* for multi-cell PDSCH/PUSCH scheduling from a serving cell. The list-of-set-of-cells parameter may indicate one or more sets of cells (e.g., *MC-DCI-SetOfCells)* comprising a set of cells (or a scheduled cell set). The list-of-set-of-cells parameter may indicate a list of configurations of one or more sets of cells. A maximum quantity of the one or more sets of cells may be reported by the wireless device to a base station. The DCI format 1_3 may not comprise a scheduled cell set indicator field, for example, if a quantity of the one or more sets of cells is equal to one, and the set of cells may be the one or more set of cells that may be indicated by the list-of-set-of-cells parameter. The DCI format 1_3 may not comprise a scheduled cells indicator field based on the one or more configuration parameters not comprising a list of scheduled cell combinations parameter (e.g., *ScheduledCellCombo-ListDCI-1-3)* for the set of cells (or the scheduled cell set). The one or more configuration parameters may comprise a list of scheduled cell combinations parameter (e.g., *ScheduledCellCombo-ListDCI-1-3)* that may indicate a table for combinations of co-scheduled cells (or the set of cells or cells in the set of cells) for downlink scheduling via DCI format 1_3. The DCI format 1_3 may comprise a scheduled cells indicator field that may indicate an entry/row in the table that may indicate the one or more cells in/of the set of cells (or the scheduled cell set). A quantity of entries/rows in the table may be indicated, for example, by the list of scheduled cell combinations parameter being more than one. A quantity of entries/rows in the table may be indicated, for example, by the list of scheduled cell combinations parameter being one. The DCI format 1_3 may not comprise a scheduled cells indicator field, and a single entry/row in the table (or the list of scheduled cell combinations parameter) may indicate the one or more cells in/of the set of cells (or the scheduled cell set). The DCI format 1_3 may comprise one or more frequency domain resource assignment (FDRA) fields for the one or more cells. Each FDRA field of the one or more FDRA fields may be for a respective cell of the one or more cells, and a quantity of the one or more FDRA fields may be equal to a quantity of the one or more cells that may be indicated by the scheduled cells indicator field or the list of scheduled cell combinations parameter. The DCI format 1_3 may comprise one or more frequency domain resource assignment (FDRA) fields for the set of cells, based on the one or more configuration parameters not comprising a list of scheduled cell combinations parameter (e.g., *ScheduledCellCombo-ListDCI-1-3).* Each FDRA field of the one or more FDRA fields may be for a respective cell of the set of cells, and a quantity of the one or more FDRA fields may be equal to a quantity of cells in the set of cells. The one or more FDRA fields of the set of cells may indicate the one or more cells that may be scheduled by the DCI format 1_3. Each FDRA field of the one or more FDRA fields may indicate if a respective cell of the set of cells may be scheduled by the DCI format 1_3 or not. A cell of the set of cells may not be scheduled by the DCI format 1_3 based on an FDRA field, of the one or more FDRA fields, of the cell being set to '0' for resource allocation type 0. A cell of the set of cells may not be scheduled by the DCI format 1_3 based on an FDRA field, of the one or more FDRA fields, of the cell being set to '1' for resource allocation type 1. A cell of the set of cells may not be scheduled by the DCI format 1_3 based on an FDRA field, of the one or more FDRA fields, of the cell being set to '0' or '1' for dynamic switch resource allocation type. A cell of the one or more cells may be scheduled by the DCI format 1_3 based on an FDRA field, of the one or more FDRA fields, of the cell being set to a value different from '0' for resource allocation type 0. A cell of the one or more cells may be scheduled by the DCI format 1_3 based on an FDRA field, of the one or more FDRA fields, of the cell being set to a value different from '1' for resource allocation type 1. A cell of the one or more cells may be scheduled by the DCI format 1_3 based on an FDRA field, of the one or more FDRA fields, of the cell being set to a value different from '0' and '1' for dynamic switch resource allocation type. The one or more configuration parameters may comprise a TCI list parameter (e.g., *tci-ListDCI-1-3)* indicating a (joint) TCI table for downlink scheduling via DCI format 1_3. The value of the TCI field indicates an entry/row in the (joint) TCI table, wherein the entry/row indicates/comprises the TCI codepoint of the cell. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station. A computer-readable medium may store instructions that, when executed, cause performance of the described method, additional operations, and/or include the additional elements.

A wireless device may perform a method comprising multiple operations. The wireless device may receive one or more messages that may comprise one or more configuration parameters that may indicate a plurality of transmission configuration indicator (TCI) states for a cell. The wireless device may receive a medium-access control (MAC) control element (CE) that may indicate a mapping of a subset of TCI states of the plurality of TCI states to one or more TCI codepoints. A TCI codepoint of the one or more TCI codepoints may indicate two TCI states of the subset of TCI states. The wireless device may receive a downlink control information (DCI) format 0_3 that may schedule one or more physical uplink shared channel (PUSCH) transmissions via one or more cells that may comprise the cell. The wireless device may send (e.g., transmit), via the cell, a PUSCH transmission of the one or more PUSCH transmissions using a default TCI state among the two TCI states based on the wireless device being indicated with the two TCI states. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a wireless device, one or more configuration parameters indicating transmission configuration indication (TCI) codepoints for a plurality of cells;
   receiving downlink control information (DCI) that:

   is configured to schedule one or more physical downlink shared channel (PDSCH) receptions via one or more cells of the plurality of cells; and
   comprises a TCI field indicating a TCI codepoint, of the TCI codepoints, for each cell of the plurality of cells; and

   based on the TCI codepoint, for a cell of the one or more cells, indicating two TCI states, receiving, via the cell, a downlink signal using a default TCI state of the two TCI states.

2. The method of claim 1, wherein the one or more configuration parameters further indicate a plurality of TCI states for the cell.

3. The method of any one of claims 1-2, further comprising:
   receiving a medium-access control (MAC)-control element (CE) indicating mapping of a subset of TCI states, of a plurality of TCI states of the cell, to one or more TCI codepoints, wherein at least one TCI codepoint of the one or more TCI codepoints indicates two TCI states of the subset of TCI states.

4. The method of any one of claims 1-3, wherein the DCI is configured to schedule, via the cell of the one or more cells, a PDSCH reception of the one or more PDSCH receptions.

5. The method of any one of claims 1-4, wherein the TCI field indicates the TCI codepoint for the PDSCH reception via the cell.

6. The method of any one of claims 1-5, wherein the receiving the downlink signal using the default TCI state is based on the wireless device being indicated with the two TCI states in the TCI codepoint of the TCI field in the DCI.

7. The method of any one of claims 1--6, wherein the one or more configuration parameters comprise a list of a downlink-or-joint TCI states parameter for the cell.

8. The method of any one of claims 1--7, wherein each PDSCH reception of the one or more PDSCH receptions is scheduled for one of the one or more cells.

9. The method of any one of claims 1-8, wherein the receiving the downlink signal using the default TCI state is based on the wireless device being indicated with the two TCI states for the cell.

10. The method of any one of claims 1-9, wherein the receiving the downlink signal using the default TCI state comprises applying the default TCI state to the downlink signal.

11. The method of any one of claims 1-10, wherein the DCI comprises DCI format 1_3.

12. The method of any one of claims 1-11, wherein the default TCI state is a first TCI state, among the two TCI states, that occurs first in a set of the two TCI states.

13. A wireless device comprising:

one or more processors; and
memory storing instructions that, when executed, cause the wireless device to perform the method of any one of claims 1-12.

14. A system comprising:

a wireless device configured to perform the method of any one of claims 1-12; and
a base station configured to send the one or more configuration parameters.

15. A computer-readable medium storing instructions that, when executed, cause performance of the method of any one of claims 1-12

**FIG. 1A**

**FIG. 1B**

EP 4 546 660 A1

FIG. 2A

FIG. 2B

**IP Packets**

**FIG. 3**

| | | IP Packet n | | IP Packet n+1 | | IP Packet m |
|---|---|---|---|---|---|---|

SDAP 225 — radio bearer 402: [H] SDAP SDU ; [H] SDAP SDU — radio bearer 404: [H] SDAP SDU

SDAP PDU

PDCP 224 — [H] PDCP SDU ; [H] PDCP SDU ; [H] PDCP SDU

RLC 223 — [H] RLC SDU ; [H] RLC SDU ; [H] SDU Seg. ; [H] SDU Seg.

MAC 222 — [H] MAC SDU ; [H] MAC SDU ; [H] MAC SDU ; [H] MAC SDU

PHY 221 — PHY SDU (Transport Block) ; PHY SDU

**FIG. 4A**

[R] [F] LCID SDU Length

[H] MAC CE [H] MAC CE [H] MAC SDU [H] MAC SDU

MAC PDU

**FIG. 4B**

EP 4 546 660 A1

**FIG. 5A**

Downlink

Logical Channels: PCCH  BCCH  CCCH  DCCH  DTCH

Transport Channels: PCH  BCH  DL-SCH

Physical Channels: PBCH  PDSCH  PDCCH  (DCI)

Physical Signals: PSS/SSS  CSI-RS  DM-RS  PT-RS

**FIG. 5B**

Uplink

Logical Channels: CCCH  DCCH  DTCH

Transport Channels: UL-SCH  RACH

Physical Channels: PUSCH  PUCCH  PRACH  (UCI)

Physical Signals: DM-RS  PT-RS  SRS

FIG. 6

FIG. 7

FIG. 8

**FIG. 9**

EP 4 546 660 A1

**FIG. 10A**

**FIG. 10B**

FIG. 11A

FIG. 11B

**Base Station 1210**

Tx beam

**Wireless Device 1205**

Rx beam

P1    P2    P3

**FIG. 12A**

**Base Station 1210**

Rx beam

**Wireless Device 1205**

Tx beam

U1    U2    U3

**FIG. 12B**

EP 4 546 660 A1

| Wireless Device 1301 | Base Station 1302 | Wireless Device 1301 | Base Station 1302 | Wireless Device 1301 | Base Station 1302 |

Configuration 1310

Configuration 1320

Configuration 1330

Msg 1 1311

Msg 2 1312

Msg 3 1313

Msg 4 1314

Msg 1 1321

Msg 2 1322

Msg A 1331

Preamble 1341

1342 Transport block

Msg B 1332

FIG. 13A          FIG. 13B          FIG. 13C

EP 4 546 660 A1

EP 4 546 660 A1

CORESET
1404

CORESET
1403

CORESET
1402

CORESET
1401

Bandwidth

One slot

**FIG. 14A**

| CORESET | → | CCE-to-REG mapping | → | Search Space | → | PDCCH candidate |
|---|---|---|---|---|---|---|

PDCCH candidate

PDCCH candidate

PDCCH candidate

**FIG. 14B**

Peripheral(s) 1516

Memory 1514

GPS Chipset 1517

TX Processing System 1510

Processing System 1508

RX Processing System 1512

Air Interface 1506

Base Station 1504

TX Processing System 1520

Processing System 1518

RX Processing System 1522

Peripheral(s) 1526

Memory 1524

GPS Chipset 1527

Wireless Device 1502

FIG. 15A

FIG. 15B

FIG. 16A

Scrambling → Modulation mapper → Layer mapper → Transform precoder → Precoding → Resource element mapper → signal gen. → Antenna ports

FIG. 16B

$s_l(t)$ → Split → $\mathrm{Re}\{s_l(t)\}$ × $\cos(2\pi f_0 t)$, $\mathrm{Im}\{s_l(t)\}$ × $-\sin(2\pi f_0 t)$ → + → Filtering

FIG. 16C

Scrambling → Modulation mapper → Layer mapper → Transform precoder → Precoding → Resource element mapper → OFDM signal gen. → Antenna ports

FIG. 16D

$s_l^{(p)}(t)$ → Split → $\mathrm{Re}\{s_l^{(p)}(t)\}$ × $\cos(2\pi f_0 t)$, $\mathrm{Im}\{s_l^{(p)}(t)\}$ × $-\sin(2\pi f_0 t)$ → + → Filtering

EP 4 546 660 A1

1704

Configuration
Parameters
**1705**

Activation command(s)
(cell 2)
**1740**

1702

**1710**

| Scheduled cell combo list/table | |
|---|---|
| entry 1 1715a | Cell 1, Cell 2 |
| entry 2 1715b | Cell 1, Cell 2, Cell 3 |
| ... | ... |
| entry M-1 1715c | Cell 2, Cell 3 |
| entry M 1715d | Cell 3 |

**TCI state list 1735**
{TCI state 1, ...TCI state M}

**1720**

| TCI list/table | Cell 1 | Cell 2 | Cell 3 |
|---|---|---|---|
| entry 1 1725a | 001 | 100 | 000 |
| entry 2 1725b | 010 | 111 | 101 |
| ... | ... | ... | ... |
| entry N-1 1725c | 111 | 000 | 110 |
| entry N 1725d | 110 | 100 | 011 |

**1745**

| TCI codepoint | TCI state |
|---|---|
| 000 | TCI state 4 |
| 001 | TCI state 5, TCI state 8 |
| ... | ... |
| 110 | TCI state 26 |
| 111 | TCI state 26 TCI state 61 |

**FIG. 17**

DCI
(TCI field = '001')

scheduling

Downlink signal

1704

1702

Indicate entry 2,
in TCI list/table, indicating
TCI codepoint 111 for Cell 2

Apply a default TCI state among
TCI state 26 and TCI state 61 in TCI
codepoint 111 of Cell 2

FIG. 18A

Control command

DCI

scheduling

Downlink signal

1704

1702

Indicate TCI state 26
and TCI state 61

Apply a default TCI
state among TCI state
26 and TCI state 61

FIG. 18B

| | | | | |
|---|---|---|---|---|
| R | Serving Cell ID | 1905 | BWP ID 1910 | Oct 1 |
| R | TCI state $ID_{0,1}$ | | 1915 | Oct 2 |
| R | TCI state $ID_{0,2}$ | | 1920 | Oct 3 |

...

| | | | |
|---|---|---|---|
| R | TCI state $ID_{N,1}$ | 1925 | Oct M-1 |
| R | TCI state $ID_{N,2}$ | 1930 | Oct M |

## FIG. 19A

| | | | | | | | | |
|---|---|---|---|---|---|---|---|---|
| R | Serving Cell ID | | | 1905 | | DL BWP ID 1910 | | Oct 1 |
| $F_{0,1}$ | $F_{0,2}$ | $F_{1,1}$ | $F_{1,2}$ | $F_{2,1}$ | $F_{2,2}$ | $F_{3,1}$ | $F_{3,2}$ | Oct 2 |
| $F_{4,1}$ | $F_{4,2}$ | $F_{5,1}$ | $F_{5,2}$ | $F_{6,1}$ | $F_{6,2}$ | $F_{7,1}$ | $F_{7,2}$ | Oct 3 |
| R | TCI state ID 1 | | | | | 1965 | | Oct 4 |
| R | TCI state ID 2 | | | | | 1970 | | Oct 5 |
| R | TCI state ID 3 | | | | | 1975 | | Oct 6 |

...

| | | | |
|---|---|---|---|
| R | TCI state ID N-1 | 1980 | Oct N+2 |
| R | TCI state ID N | 1985 | Oct N+3 |

## FIG. 19B

Receive DCI format 1_3/0_3 scheduling downlink/uplink receptions/transmissions via cell(s) that comprise a cell
2005

Is the wireless device indicated with at least two TCI states for the cell?
2010

YES

NO

Apply a default TCI state among the at least two indicated TCI states to a downlink/uplink reception/transmission via the cell
2015

Apply a (single) indicated TCI state TCI state to a downlink/uplink reception/transmission via the cell
2020

FIG. 20A

Send DCI format 1_3/0_3 scheduling downlink/uplink receptions/transmissions via cell(s) that comprise a cell
2055

Is the wireless device indicated with at least two TCI states for the cell?
2060

YES

NO

Apply a default TCI state among the at least two indicated TCI states to a downlink/uplink reception/transmission via the cell
2065

Apply a (single) indicated TCI state TCI state to a downlink/uplink reception/transmission via the cell
2070

FIG. 20B

## EUROPEAN SEARCH REPORT

Application Number

EP 24 20 9021

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/254856 A1 (LIU BINGCHAO [CN] ET AL) 10 August 2023 (2023-08-10) | 1-6, 8-10, 12-15 | INV. H04B7/06 H04L5/00 |
| Y | * paragraph [0003] - paragraph [0005] * * paragraph [0009] - paragraph [0010] * * paragraph [0049] * | 7,11 | H04W72/23 |
| Y | WO 2023/014673 A1 (OFINNO LLC [US]) 9 February 2023 (2023-02-09) * paragraph [0223] * | 7 | |
| Y | SUKCHEL YANG ET AL: "Remaining issues on Multi-cell scheduling with single DCI", 3GPP DRAFT; R1-2309306; TYPE DISCUSSION; NR_MC_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xiamen, CN; 20231009 - 20231013 28 September 2023 (2023-09-28), XP052527025, Retrieved from the Internet: URL:https://www.3gpp.org/ftp/TSG_RAN/WG1_R L1/TSGR1_114b/Docs/R1-2309306.zip R1-2309306_Remainings on R18 MC scheduling_Final.docx [retrieved on 2023-09-28] * Proposal 4; paragraph [0002] * | 11 | |

**TECHNICAL FIELDS SEARCHED (IPC)**

H04B
H04W
H04L

The present search report has been drawn up for all claims

| Place of search | Date of completion of the search | Examiner |
|---|---|---|
| The Hague | 27 February 2025 | Baas, Gert-Jan |

EPO FORM 1503 03.82 (P04C01)

## ANNEX TO THE EUROPEAN SEARCH REPORT
## ON EUROPEAN PATENT APPLICATION NO.

EP 24 20 9021

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | | Publication date |
|---|---|---|---|---|
| US 2023254856 A1 | 10-08-2023 | US | 2023254856 A1 | 10-08-2023 |
| | | WO | 2021226997 A1 | 18-11-2021 |
| WO 2023014673 A1 | 09-02-2023 | CN | 118176689 A | 11-06-2024 |
| | | EP | 4344465 A1 | 03-04-2024 |
| | | US | 2024121802 A1 | 11-04-2024 |
| | | US | 2025056563 A1 | 13-02-2025 |
| | | WO | 2023014673 A1 | 09-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63546087